# EUROPEAN PATENT SPECIFICATION

(11) **EP 2 468 531 B1**
(45) Date of publication and mention of the grant of the patent: **16.09.2015**
(21) Application number: 10810043.9
(22) Date of filing: 20.08.2010
(51) Int. Cl.: B60C 5/01, B29D 30/08, B29D 30/38, B60C 1/00, B60C 9/22

(54) **TIRE AND TIRE MANUFACTURING METHOD**
REIFEN UND VERFAHREN ZUR HERSTELLUNG EINES REIFENS
PNEUMATIQUE ET PROCEDE DE FABRICATION DE PNEUMATIQUE

(30) Priority: 20.08.2009 JP 2009191232; 20.08.2009 JP 2009191229; 20.08.2009 JP 2009191230; 20.08.2009 JP 2009191231
(43) Date of publication of application: 27.06.2012
(60) Divisional application: 15179404.7
(73) Proprietor: Bridgestone Corporation, Tokyo 104-8340 (JP)
(72) Inventor: KOUNO, Yoshihide, Tokyo 104-8340 (JP); KON Seiji, Tokyo 104-8340 (JP)
(74) Representative: Oxley, Robin John George
(86) International application number: PCT/JP2010/064115
(87) International publication number: WO 2011/021702

(56) References cited:
- EP-A1- 2 399 760
- EP-A2- 0 425 299
- WO-A1-2010/095654
- JP-A- 3 143 702
- JP-A- 54 162 307
- JP-A- 59 011 901
- JP-A- 59 034 904
- JP-A- 2001 260 251
- JP-A- 2005 343 380
- US-A- 4 990 203

## Description

### Technical Field

The present invention relates to a tire for rim mounting and a tire manufacturing method in which at least a portion of the tire is formed from a resin material, and in particular to a tire formed from a thermoplastic material and a tire manufacturing method of the same.

### Background Art

Pneumatic tires configured with rubber, organic fiber material, and steel members are traditionally employed on vehicles such as cars.

There is demand recently to use materials such as resin materials, thermoplastic resins and thermoplastic elastomers as tire materials due to their advantages from the perspectives of weight reduction, ease of molding, and ease of recycling.
For example, a pneumatic tire formed using a thermoplastic polymer material is described in Patent Document 1.
Patent Document 1: Japanese Patent Application Laid-Open No. 03-143701.

Reference is also made to EP-A-2399760 which discloses a tire comprising a ring shaped tire frame member formed from a frame resin material; and a reinforcement layer formed by winding and joining a cord member onto the tire frame member, and a tread being disposed on an outer peripheral surface of the reinforcement formed by the cord member.

Reference is also made to EP-A-0425299, JP 59-011901, JP 59-034904, US 4990203, JP 2001-260251, JP 2005-343380, WO 2010/095654, JP 54-162307 and JP 3-143702.

### DISCLOSURE OF INVENTION

### Technical Problem

The pneumatic tire of Patent Document 1 is formed with a reinforcement layer made by winding a reinforcement cord around the outside periphery of a tire frame member in a continuous spiral pattern, from such viewpoints of durability, ride comfort and running performance. However, when reinforcement cord is round spirally directly onto the surface of a crown section of a tire frame member formed from a thermoplastic polymer, and another tire structuring member (for example a tread) is laid over the top, gaps can be formed around the periphery of the reinforcement cord (the space between the reinforcement cord and the crown section) resulting in air remaining (air being incorporated). When incorporation of air occurs, even if the reinforcement cord is bonded to the crown section surface by a bonding agent, there is a concern that due to input force during running, the reinforcement cord moves, reducing the durability of the tire. Therefore, in Patent Document 1, incorporation of air at the periphery of the reinforcement cord is suppressed, and movement of the reinforcement cord is suppressed by forming the reinforcement layer by embedding and covering the reinforcement cord in cushion rubber provided to the crown section.

However, in embedding and covering the reinforcement cord, there is a requirement to make the thickness of the cushion rubber needlessly thick. If the thickness of the cushion rubber is increased, it is conceivable that a decrease in running performance could arise due to lateral force being inadequately exerted during running due to various factors such as an increase in weight, an increase in the scale of physical deformation width of members in the thickness direction, and a low modulus of elasticity of the cushion rubber in comparison to a thermoplastic polymer material. Further improvements are required.

The present invention is designed to address the above issues, and the object thereof is to provide a tire with increased durability that suppresses incorporation of air without a reduction in running performance, and a manufacturing method for such a tire.

### Solution to Problem

The present invention provides a tire according to claim 1, which includes: a ring shaped tire frame member formed from a frame resin material; and a reinforcement layer formed by winding and joining a covered cord member formed by covering a reinforcement cord with a cord resin material onto an outer peripheral section of the tire frame member.

The tire of claim 1 is configured with the reinforcement layer formed by winding and joining the covered cord member onto the outer peripheral section of the tire frame member formed from a frame resin material. Consequently, characteristics such as the resistance to punctures, cut resistance and the circumferential direction rigidity of the tire (the tire frame member) are raised. By raising the circumferential direction rigidity, creep of the tire frame member formed from the frame resin material (a phenomenon in which there is an increase in plastic deformation of the tire frame member with time under a constant strain) is suppressed.

Note that since the reinforcement cord of the covered cord member is covered by the cord resin material air is suppressed from being incorporated at the periphery of the reinforcement cord, thereby suppressing movement of the reinforcement cord. When a tire structuring member such as a tread is disposed at the outer peripheral side of the reinforcement layer, since the covered cord member is joined to the outer peripheral section, the covered cord member (including the reinforcement cord) is suppressed from moving due to force input during running and durability is increased.

The reinforcement cord is covered by the cord resin material so as to suppress incorporation of air at the periphery of the reinforcement cord, suppressing a reduction in running performance due to such factors as an increase in weight, increased physical displacement width of the member in the thickness direction and insufficient lateral force during running, in comparison to cases in which the reinforcement cord is embedded in a cushion rubber.

A tire of claim 2 is the tire of claim 1 wherein a bonding agent is employed to join the reinforcement cord to the cord resin material.

In the tire of claim 2, adhesion between the reinforcement cord and the cord resin material is raised since the reinforcement cord and the cord resin material are joined together with a bonding agent, thereby further suppressing air from being incorporated at the periphery of the reinforcement cord. Movement of the reinforcement cord is further suppressed by joining the reinforcement cord and the cord resin material together, suppressing deterioration (such as cracking occurring) in the cord resin material.

A tire of claim 3 is the tire of claim 1 or claim 2 wherein: the frame resin material and the cord resin material both have thermoplastic properties; and joining is performed by welding together the outer peripheral section and the covered cord member.

In the tire of claim 3, the joint strength between the outer peripheral section and the covered cord member is raised due to the outer peripheral section and the covered cord member being joined together by welding.

A tire of claim 4 is the tire of claim 3 wherein the frame resin material and the cord resin material are of similar types of material to each other.

In the tire of claim 4 there is good intermixing between the frame resin material and the cord resin material during welding the outer peripheral section and the covered cord member together because the frame resin material and the cord resin material are similar types of material to each other. The joint strength between the outer peripheral section and the covered cord member is accordingly raised.

A tire of claim 5 is the tire of claim 1 or claim 2 wherein the outer peripheral section and the covered cord member are joined together with a bonding agent.

In the tire of claim 5, the outer peripheral section and the covered cord member can be joined together using bonding agent even when materials that are difficult to weld are employed for the frame resin material of the outer peripheral section and the cord resin material of the reinforcement cord member.

A tire of claim 6 is the tire of any one of claim 1 to claim 5 wherein the covered cord member is formed with a wider width on the side joined to the outer peripheral section (16) than on the opposite side.

According to a tire of claim 6, joining surface area (joint strength) is secured between the outer peripheral section and the reinforcement cord member due to the covered cord member widening in width towards the opposite side to the side joined to the outer peripheral section.

A tire of claim 7 is the tire of any one of claim 1 to claim 6 wherein the covered cord member has a flat face on the side joined to the outer peripheral section.

According to a tire of claim 7 gaps are less liable to occur between the outer peripheral section and the covered cord member due to the flat face being formed to the covered cord member on the side joined to the outer peripheral section than when the covered cord member has a circular cross-sectional profile, and joining surface area is efficiently secured.

A tire of claim 8 is the tire of any one of claim 1 to claim 7 wherein the covered cord member has a flat face on the opposite side to the side joined to the outer peripheral section.

According to a tire of claim 8 gaps are less liable to occur between the flat face on the opposite side of the covered cord member to the side joined to the outer peripheral section and the inner peripheral face of the tire structuring member when a tire structuring member such as a tread is disposed (joined) to the outer peripheral side of the reinforcement layer due to the covered cord member having a flat face formed on the opposite side to the side joined to the outer peripheral section. Joining surface area is accordingly secured and the joining force between the covering layer and the tire structuring member is raised.

A tire of claim 9 is the tire of any one of claim 1 to claim 8 further including a covering layer that is formed with a covering resin material, that is joined to the outer peripheral section so as to cover the reinforcement layer, and that has an outer peripheral face of flattened profile.

According to a tire of claim 9, gaps occurring between adjacent strands of the covered cord member are covered by the covering layer formed with a flat profile on the outer peripheral face. Gaps are accordingly less likely to occur between the two components and incorporation of air is suppressed when a tire structuring member such as a tread is disposed (joined) to the outer peripheral face of the covering layer, compared to cases in which the tire structuring member is joined to the reinforcement layer in a state in which there are gaps occurring between adjacent strands of covered cord member. Joining surface area (joint strength) is accordingly secured between the tire structuring member and the covering layer, and delamination between the tire structuring member and the covering layer due to input force during running is suppressed, and durability is increased.

A tire of claim 10 is the tire of claim 9 wherein: the covering resin material has thermoplastic properties; and the cord resin material and the covering resin material are similar types of material to each other.

According to a tire of claim 10 there is good intermixing between the cord resin material and the covering resin material at the covered portion, for example when forming the covering layer by covering the reinforcement layer with covering resin material in a molten or softened state since the cord resin material and the covering resin material are similar types of material to each other. The joint strength between the covered cord member and the covering layer is accordingly raised.

A tire of claim 11 is the tire of claim 9 or claim 10 wherein both end portions of the covering layer in the width direction are positioned further to the outside in the width direction than both width direction end portions of the reinforcement layer as viewed in a cross-section taken along the tire frame member width direction.

According to a tire of claim 11a wide joining surface area is secured between the outer peripheral section and the covering layer due to both end portions of the covering layer in the width direction being positioned further to the outside in the width direction than both width direction end portions of the reinforcement layer as viewed in a cross-section taken along the tire frame member width direction, namely due to the covering layer being formed over a wider region than the region where the reinforcement layer has been formed. The joint strength between the outer peripheral section and the covering layer is thereby increased.

The tire of claim 12 is the tire of any one of claim 1 to claim 11 further including a bead section formed to the tire frame member, wherein a resin chafer for making rim contact is formed to the bead section.

The resin chafer referred to here is a chafer formed from a resin material, and is formed with a similar profile to a normal rubber chafer of an ordinary rubber tire. Contact to the rim includes cases in which contact is made to a portion of the rim.

According to a tire of claim 12 the resin chafer makes contact with the rim when rim assembly is performed for the tire (the tire is assembled to a rim). There is accordingly good rim-fitability, and, since gas (air) filled in the tire does not readily pass out from between the bead section and the rim, there is high internal pressure retaining ability even though the tire frame member is formed from a resin material (frame resin material).

The resin chafer is preferably a circular ring shape continuous along the tire circumferential direction, however internal pressure retaining ability raising effect is exhibited even when not continuous.

A tire of claim 13 is the tire of claim 12 wherein the resin chafer extends as far as a side section.

Reference in the present specification to side sections means from the bead section up to the tread edge. The tread edge here indicates the tire width direction outermost ground contact portion when the tire is mounted to a standard rim, as defined in the JATMA YEAR BOOK (2008 edition, Japan Automobile Tire Manufacturers Association standards), inflated to an internal pressure of 100% of the pressure (maximum pressure) corresponding to maximum load (load shown in bold type in the internal pressure-load chart) in the JATMA YEAR BOOK for the applicable size/ply rating, and applied with the maximum load. Where the location of use or manufacturing location uses TRA standards or ETRTO standards then these respective standards are applied.
According to a tire of claim 13 damages to the side sections such as from curbs is easily prevented. The resin chafer may be configured to extend to near to the tread or to the inside of the tread.

A tire of claim 14 is a tire of the claim 12 or claim 14 wherein the resin chafer extends as far as the tire inside of the bead section.

According to a tire of claim 14 the edge of the resin chafer can be more sufficiently prevented from peeling away during rim assembly compared to when the resin chafer is only provided at the tire outside of the bead sections.

A tire of claim 15 is the tire of any one of claim 12 to claim 14 wherein the resin chafer is formed from a chafer resin material having thermoplastic properties.

According to a tire of claim 15 tire manufacturing is better facilitated due to the chafer resin material having thermoplastic properties, in comparison to when the chafer resin material has thermoset properties.

A tire of claim 16 is a tire of any one of claim 1 to claim 11 further including a bead section formed to the tire frame member, wherein a rubber chafer for making rim contact is formed to the bead section.

According to a tire of claim 16 the rubber chafer makes contact with the rim during rim assembly of the tire (assembling the tire and the rim together). There is accordingly good rim-fitability, and since gas (air) filled in the tire does not readily pass out from between the bead section and the rim, there is high internal pressure retaining ability even though the tire frame member is formed from a resin material (frame resin material).
The rubber chafer is preferably a circular ring shape continuous along the tire circumferential direction, however internal pressure retaining ability raising effect is exhibited even when not continuous. Contact to the rim obviously includes cases in which contact is made to a portion of the rim.

A tire of claim 17 is the tire of claim 16 wherein the rubber chafer extends as far as a side section.

According to a tire of claim 17 damages to the side sections such as from curbs is easily prevented. The rubber chafer may be configured to extend to near to the tread or to the inside of the tread.

A tire of claim 18 is the tire of claim 16 or claim 17 wherein the rubber chafer extends as far as the tire inside of the bead section.

According to a tire of claim 18 the edge of the rubber chafer can be more sufficiently prevented from peeling away during rim assembly compared to when the rubber chafer is only provided at the tire outside of the bead sections.

The present invention further provides a tire manufacturing method according to claim 19 which includes: a covered cord member forming process of forming a covered cord member by covering a reinforcement cord with a cord resin material; and a covered cord member winding process of winding the covered cord member onto an outer peripheral section of a ring shaped tire frame member formed from a frame resin material and joining the covered cord member to the outer peripheral section.

According to a tire manufacturing method of claim 19, a covered cord member is formed by covering the reinforcement cord with a cord resin material, and the covered cord member is wound onto and joined to the outer peripheral section of the tire frame member. Due to the reinforcement cord being covered with the cord resin material, incorporation of air at the periphery of the reinforcement cord is suppressed, and movement of the reinforcement cord is suppressed.

A tire manufacturing method of claim 20 is the tire manufacturing method of claim 19 wherein in the covered cord member forming process a bonding layer is formed on the outer peripheral face of the reinforcement cord and the cord resin material that has been melted or softened is covered onto and joined to the reinforcement cord through the bonding layer.

According to a tire manufacturing method of claim 20, due to the reinforcement cord being covered and joined to the cord resin material that has been melted or softened through the bonding layer, the reinforcement cord and the cord resin material adhere tightly and the incorporation of air at the periphery of the reinforcement cord is suppressed. Also, by joining the reinforcement cord and the cord resin material, movement of the reinforcement cord is further suppressed, and deterioration of the cord resin material (such as the formation of cracks) is suppressed.

A tire manufacturing method of claim 21 is the tire manufacturing method of claim 20 wherein in the covered cord member forming process the reinforcement cord is cleaned prior to forming the bonding layer.

According to a tire manufacturing method of claim 21, the bonding layer can be formed evenly to the outer peripheral face of the reinforcement cord due to cleaning the reinforcement cord prior to forming the bonding layer. The adhesiveness between the reinforcement cord and the cord resin material is consequently further enhanced and the incorporation of air to the periphery of the reinforcement cord is suppressed. By forming the bonding layer evenly to the outer peripheral face of the reinforcement cord, joining surface area between the reinforcement cord and the cord resin material is also increased, further suppressing movement of the reinforcement cord, and deterioration of the cord resin material (such as the formation of cracks) is suppressed.

A tire manufacturing method of claim 22 is the tire manufacturing method of any one of claim 19 to claim 21 wherein: the frame resin material and the cord resin material both have thermoplastic properties; and in the covered cord member winding process at least one of the cord resin material of the covered cord member and/or the frame resin material of the outer peripheral section at the portion where the covered cord member is to be joined is/are rendered into a molten or softened state, and then the outer peripheral section and the covered cord member are joined together by welding.

According to a tire manufacturing method of claim 22, the strength of the join between the outer peripheral section and the covered cord member is increased due to at least one of the cord resin material of the covered cord member and/or the frame resin material of the outer peripheral section at the portion where the covered cord member is to be joined being rendered into a molten or softened state and then joining the outer peripheral section and the covered cord member together by welding. Note that if both the cord resin material of the covered cord member and the frame resin material of the outer peripheral section at the portion where the covered cord member is to be joined are rendered into a molten or softened state, the frame resin material and the cord resin material will mix together better compared to cases in which only one of them is rendered into a molten or softened state, and the strength of the join between the outer peripheral section and the covered cord member will be increased yet further.

A tire manufacturing method of claim 23 is the tire manufacturing method of any one of claim 19 to claim 21 wherein in the covered cord member winding process the outer peripheral section and the covered cord member are joined together with a bonding agent.

According to a tire manufacturing method of claim 23, by joining the outer peripheral section and the covered cord member together with a bonding agent, it becomes possible to join together the outer peripheral section and the covered cord member even when the frame resin material of the outer peripheral section and the cord resin material of the covered cord member are materials that are difficult to weld.

A tire manufacturing method of claim 24 is the tire manufacturing method of any one of claim 19 to claim 23 wherein in the covered cord member forming process the covered cord member is formed with a wider width on the side to be joined to the outer peripheral section (16) than on the opposite side.

According to a tire manufacturing method of claim 24, by forming the covered cord member with a width that widens towards the opposite side to the side to be joined to the outer peripheral section, an adequate joining surface area (joint strength) between the outer peripheral section and the reinforcement cord member can be ensured when the covered cord member is wound onto and joined to the outer peripheral section.

A tire manufacturing method of claim 25 is the tire manufacturing method of any one of claim 19 to claim 24 wherein in the covered cord member forming process the covered cord member is formed with a flat face on the side to be joined to the outer peripheral section.

According to a tire manufacturing method of claim 25, by forming the covered cord member with a flat face on the side to be joined to the outer peripheral section, gaps are not liable to form between the outer peripheral section and the covered cord member when the covered cord member is wound onto and joined to the outer peripheral section, and the joining surface area can be effectively ensured. It also becomes possible to wind the covered cord member onto the outer peripheral section without snaking.

A tire manufacturing method of claim 26 is the tire manufacturing method of any one of claim 19 to claim 25 wherein in the covered cord member forming process the covered cord member is formed with a flat face on the opposite side to the side to be joined to the outer peripheral section.

According to a tire manufacturing method of claim 26, by forming the covered cord member with a flat face on the opposite side to the side to be joined to the outer peripheral section, gaps are not liable to form between the flat face on the opposite side of the covered cord member to the side joined to the outer peripheral section and the tire structuring member when the covered cord member has been wound onto and joined to the outer peripheral section and a tire structuring member such as a tread is then joined to the outer peripheral side thereof. An adequate joining surface area is accordingly ensured.

A tire manufacturing method of claim 27 is the tire manufacturing method of any one of claim 19 to claim 26 wherein: the frame resin material and the cord resin material both have thermoplastic properties; and the tire manufacturing method further includes a covered cord member covering process in which the covered cord member embedded in the outer peripheral section is covered by a covering resin material having thermoplastic properties that has been melted or softened.

According to a tire manufacturing method of claim 27, by covering the covered cord member embedded in the outer peripheral section with covering resin material that has been melted or softened, any gaps between neighboring strands of the covered cord member are infilled by the molten or softened covering resin material. The molten or softened covering resin material also spreads outwards to the left and right, and the surface approaches a flat profile. Then, gaps are not liable to form between the two components when a tire structuring member such as a tread is disposed on the surface of the solidified covering resin material, and incorporation of air is effectively suppressed.

A tire manufacturing method of claim 28 is the tire manufacturing method of claim 27 wherein in the covered cord member covering process the covered cord member is covered by the covering resin material that has been melted or softened such that the surface of the covering resin material is further to the radial direction outside than the tire frame member radial direction outside end portion of the covered cord member joined to the outer peripheral section.

According to a tire manufacturing method of claim 28, by covering the covered cord member with the covering resin material that has been melted or softened such that the surface of the covering resin material is further to the radial direction outside than the tire frame member radial direction outside end portion of the covered cord member joined to the outer peripheral section, an even flatter profile is achieved for the surface of the covering resin material.

A tire manufacturing method of claim 29 is the tire manufacturing method of claim 27 or claim 28 wherein in the covered cord member covering process the surface of the covering resin material in a molten or softened state is flattened while pressing towards the covered cord member side.

According to a tire manufacturing method of claim 29, by flattening the surface of the covering resin material that covers the joined covered cord member in a molten or softened state while pressing towards the covered cord member side, the covering resin material is suppressed from lifting away from the outer peripheral section. Furthermore, air is pressed out from between the covering resin material and the outer peripheral section and/or the covered cord member during pressing. The surface of the covering resin material consequently achieves a yet flatter profile.

A tire manufacturing method of claim 30 is the tire manufacturing method of any one of claim 27 to claim 29 wherein in the covered cord member covering process the covering resin material that has been melted or softened is covered over a region wider on both tire frame member width direction sides than the winding region of the covered cord member.

According to a tire manufacturing method of claim 30, by covering the covering resin material that has been melted or softened over a region wider on both tire frame member width direction sides than the winding region of the covered cord member, when surface treatment is carried out in a subsequent process by machining the surface of the cooled and solidified covering resin material, machining of the covered cord member disposed at the edges of the winding region is suppressed.

A tire manufacturing method of claim 31 is the tire manufacturing method of any one of claim 27 to claim 30 wherein in the covered cord member covering process the covered cord member is covered by the covering resin material that has been melted or softened while the cord resin material of the covered cord member joined to the outer peripheral section and the frame resin material at the periphery of the covered cord member are being melted or softened.

According to a tire manufacturing method of claim 31, by covering the covered cord member with the covering resin material that has been melted or softened while the cord resin material of the covered cord member and the frame resin material at the periphery of the covered cord member are being melted or softened, the frame resin material of the covered portions (joining portions), the cord resin material and the covering resin material intermix with each other, and the joint strength between the outer periphery section and the covering layer is increased.

A tire manufacturing method of claim 32 is the tire manufacturing method of any one of claim 27 to claim 31 further including a surface treatment process in which the surface of the covering resin material that has cooled and solidified is machined.

According to a tire manufacturing method of claim 32, the surface of the covering resin material that has cooled and solidified is machined. For example, if a tire structuring member such as a tread is bonded to the surface of the covering resin material using a bonding agent, the surface of the covering resin material could be machined to a flat surface in the circumferential direction and the width direction, with fine recesses and projections formed to the surface. By coating a bonding agent on top, the bonding agent would penetrate into the fine recesses and projections, producing an anchor effect between the covering resin material and the tire structuring member such as a tread, and thereby increasing the joint strength between the tread and the covering resin material.

A tire manufacturing method of claim 33 is the tire manufacturing method of any one of claim 19 to claim 32 wherein: the tire frame member is configured from the frame resin material as a frame structuring member at least configuring a bead section; and a resin chafer is formed by injection molding a chafer resin material having thermoplastic properties on the side of the bead section of the frame structuring member to make rim contact.

In a tire manufactured according to the tire manufacturing method of claim 33, the resin chafer makes contact with the rim when the tire is assembled to the rim (the tire and rim assembly). Accordingly, gas is not liable to escape between the bead section and the rim when the inside of the tire is inflated with gas (air), so the internal pressure retaining ability is high even though the frame structuring member is formed from a resin material (the frame resin material).

A tire manufacturing method of claim 34 is the tire manufacturing method of claim 33 wherein when injecting the chafer resin material a bonding agent is coated on the bead section and then the chafer resin material is applied.

According to a tire manufacturing method of claim 34, the adhesive strength between the frame structuring member and the chafer is increased. Furthermore, the position of the chafer resin material can be prevented from misaligning when the resin chafer is being formed. Note that the adhesive strength is increased yet further if the surface of the frame structuring member at the position where the resin chafer is to be formed is buffed using for example sandpaper or a router before the bonding agent is applied. The abraded surface may also be cleaned after buffing, for example with alcohol.

A tire manufacturing method of claim 35 is the tire manufacturing method of any one of claim 19 to claim 32 wherein the tire frame member is configured from the frame resin material as a frame structuring member at least configuring a bead section; and a resin chafer is formed by disposing a chafer resin material having thermoplastic properties on the side of the bead section of the frame structuring member to make rim contact and pressing with a press.

In a tire manufactured according to the tire manufacturing method of the claim 35, the resin chafer makes contact with the rim when the tire is assembled to the rim (the tire and rim assembly). Accordingly, it becomes difficult for gas to escape between the bead section and the rim when the inside of the tire is inflated with gas (air), so the internal pressure retaining ability is high even when the frame structuring member is formed from a resin material (the frame resin material).

A tire manufacturing method of claim 36 is the tire manufacturing method of claim 45 wherein when disposing the chafer resin material a bonding agent is coated on the bead section then the chafer resin material is applied.

According to the tire manufacturing method of claim 36, the adhesive strength between the frame structuring member and the resin chafer is increased. Furthermore, the position of the chafer resin material can be prevented from misaligning when the chafer resin material is being pressed. Note that the adhesive strength is increased yet further if the surface of the frame structuring member for disposing the chafer resin material is buffed using for example sandpaper or a router before the bonding agent is applied. The abraded surface may also be cleaned after buffing, for example with alcohol.

A tire manufacturing method of claim 37 is the tire manufacturing method of any one of claim 33 to claim 36 wherein: a jig is provided inside a cavity of a mold for molding the frame structuring member; a bead core is fixed in contact with the jig from the tire inside direction; and the frame structuring member is formed by pouring the frame resin material that has been melted into the cavity.

According to the tire manufacturing method of claim 37, the frame resin material that has been melted is poured into the cavity with the bead core fixed in a state of contact with the jig from the tire inside direction. That is to say, it becomes possible to pour the frame resin material that has been melted with a jig that prevents displacement of the bead core in a non-contact state with the bead core from the tire outside, or with an auxiliary jig that prevents displacement of the bead core in a state of contact with the bead core from the tire outside at a very small region. Consequently, locations where the frame resin material does not flow in and the bead core is exposed due to the jig being in contact are either not formed at all at the tire outside of the formed frame structuring member, or if they are formed, are formed only at a very small region. The frame resin material is therefore present spanning across every location that will contact the rim, or if there are locations where it is not present then these locations are only at a very small region. It is therefore easy to secure ample air retention ability when assembled to a rim.
Note that the mold may be a mold made of metal, or a mold made of a material other than metal.

Also, although locations are formed at the tire inside of the frame member where the bead core is exposed where the frame resin material cannot flow due to the jig being in contact, there is no impact on the air retention ability when assembled to a rim, even if these locations are large. Jig dimensions and shape can accordingly be achieved capable of securing sufficient ability to prevent rupturing of the frame resin material at the periphery of the bead core during knocking out, and also capable of sufficiently suppressing displacement of the bead core during tire molding.

Note that high pressure pouring may be employed for injection molding when pouring the melted frame resin material. Also, the tire frame member configured from the frame structuring member may be formed with a tube profile with a configuration that allows the inside of the tire frame member to be filled with air.

A tire manufacturing method of claim 38 is the tire manufacturing method of claim 37 wherein when the chafer resin material is injected, or when the chafer resin material is pressed with a press, the chafer resin material infills a cast portion formed in the frame structuring member by removing the jig.

According to the tire manufacturing method of claim 38, a contribution is made to preventing rusting in cases in which the bead core is made from metal, as well as to preventing deterioration of the frame structuring member (the tire frame member) and to preventing damage nucleation from occurring in the frame structuring member (the tire frame member).

A tire manufacturing method of claim 39 is the tire manufacturing method of any one of claim 19 to claim 32 wherein: the tire frame member is configured from the frame resin material as a frame structuring member at least configuring a bead section; and a rubber chafer is formed by disposing green rubber on the side of the bead section of the frame structuring member to make rim contact and vulcanize molding the green rubber while pressing with a press.

In a tire manufactured according to the tire manufacturing method of claim 39, the rubber chafer contacts the rim when the rim assembly is carried out (the assembly of the rim and the tire). Gas is accordingly not liable to escape from between the bead section and the rim even when the tire inside is filled with gas (air), and internal pressure retaining ability is high even though the frame structuring member is formed from a resin material (the frame resin material).

A tire manufacturing method of claim 40 is the tire manufacturing method of claim 39 wherein when disposing the green rubber the bead section is coated with a bonding agent and then the green rubber is applied.

According to the tire manufacturing method of claim 40, the adhesive strength between the frame structuring member and the rubber chafer is increased. It is also possible to prevent displacement of the green rubber when the green rubber is pressed. Note that the adhesive strength is increased yet further if the surface of the frame structuring member for disposing the green rubber is buffed using for example sandpaper or a router before applying the bonding agent. The abraded surface may also be cleaned after buffing, for example with alcohol.

A tire manufacturing method of claim 41 is the tire manufacturing method of any one of claim 19 to claim 32 wherein: the tire frame member is configured from the frame resin material as a frame structuring member at least configuring a bead section; and a rubber chafer is formed by injecting green rubber on the side of the bead section of the frame structuring member to make rim contact and vulcanize molding.

In a tire manufactured according to the tire manufacturing method of claim 41, the rubber chafer contacts the rim when the rim assembly is carried out (the assembly of the rim and the tire). Gas is accordingly not liable to escape from between the bead section and the rim even when the tire inside is filled with gas (air), and internal pressure retaining ability is high even though the frame structuring member is formed from a resin material (the frame resin material).

A tire manufacturing method of claim 42 is the tire manufacturing method of claim 41 wherein when injecting the green rubber the bead section is coated with a bonding agent and then the green rubber is applied.

According to the tire manufacturing method of claim 42, the adhesive strength between the frame structuring member and the rubber chafer is increased. It is also possible to prevent displacement of the green rubber when the green rubber is injected. Note that the adhesive strength is increased yet further if the surface of the frame structuring member for injecting the green rubber is buffed using for example sandpaper or a router before applying the bonding agent. The abraded surface may also be cleaned after buffing, for example with alcohol.

A tire manufacturing method of claim 43 is the tire manufacturing method of any one of claim 39 to claim 42 wherein: a jig is provided inside a cavity of a mold for molding the frame structuring member; a bead core is fixed in contact with the jig from the tire inside direction; and the frame structuring member is formed by pouring the frame resin material that has been melted into the cavity.

According to the tire manufacturing method of claim 43, the frame resin material that has been melted is poured into the cavity with the bead core in a state of contact with the jig from the tire inside direction. That is to say, it becomes possible to pour the frame resin material that has been melted with a jig that prevents displacement of the bead core in a non-contact state with the bead core from the tire outside, or with an auxiliary jig that prevents displacement of the bead core in a state of contact with the bead core from the tire outside at a very small region. Consequently, locations where the frame resin material does not flow in and the bead core is exposed due to the jig being in contact are either not formed at all at the tire outside of the formed frame structuring member, or if they are formed are formed only over a very small region. The frame resin material is therefore present spanning across every location that will contact the rim, or if there are locations where it is not present, they are only over a very small region. It is therefore easy to secure ample air retention ability when assembled to a rim.

Note that the mold may be a mold made of metal, or a mold made of a material other than metal.

Also, although locations are formed at the tire inside of the frame structuring member where the bead core is exposed where the frame resin material does not flow in due to the jig being in contact, air retention ability can be ensured when assembled to a rim even if these locations are large. Jig dimensions and shape are accordingly achieved capable of securing sufficient ability to prevent rupturing of the frame resin material at the periphery of the bead core during knocking out, and also capable of sufficiently suppressing displacement of the bead core during tire molding.

Note that high pressure pouring may be employed for injection molding when pouring the melted frame resin material. Also, the tire frame member configured from the frame structuring member may be formed with a tube profile with a configuration that allows the inside of the tire frame member to be filled with air.

A tire manufacturing method of claim 44 is the tire manufacturing method of claim 43 wherein when the green rubber is pressed by the press or when the green rubber is injected onto the side of the bead section that makes rim contact, the green rubber infills a cast portion formed in the frame structuring member by removing the jig.

According to the tire manufacturing method of claim 44, a contribution is made to preventing rusting of the bead core in cases in which the bead core is made of metal as well as to preventing deterioration of the frame structuring member (the tire frame member) and preventing damage nucleation from occurring in the frame structuring member (the tire frame member).

### Advantageous Effects of Invention

A tire of the present invention configured as in the above explanation suppresses the incorporation of air and increases durability without decreasing running performance. Furthermore, the tire manufacturing method of the present invention allows the manufacture of a tire that suppresses the incorporation of air and increases durability without a decrease in running performance.

### BRIEF DESCRIPTION OF DRAWINGS

Fig. 1A is a cross-section taken along a tire width direction of a tire of a first exemplary embodiment.
Fig. 1B is an enlarged cross-section taken along a tire width direction of a bead section showing a rim mounted state of a tire of the first exemplary embodiment.
Fig. 2 is a cross-section taken along a tire width direction illustrating the periphery of a covered cord member wound and joined to a crown section of a tire of the first exemplary embodiment.
Fig. 3 is a perspective view of a building machine.
Fig. 4A is perspective view of a building machine showing a state in which cylinder rods of a tire supporting section are protruding by a minimum amount.
Fig. 4B is perspective view of a building machine showing a state in which cylinder rods of a tire supporting section are protruding by a maximum amount.
Fig. 5 is a perspective view of an extruder, used to explain an operation in which welding thermoplastic material is applied to joint portions of case section bodies using the extruder.
Fig. 6 is a schematic explanatory diagram of an operation for forming a bonding layer on a reinforcement cord using a cord bonding layer apparatus.
Fig. 7 is a schematic explanatory diagram of an operation for covering and joining a cord resin material onto a reinforcement cord using a cord covering apparatus.
Fig. 8 is an explanatory diagram for explaining an operation for winding and joining a covered cord member onto a crown section of a tire case using a cord heating device and rollers.
Fig. 9 is an explanatory diagram for explaining an operation for covering a covered cord member that has been wound and joined to a crown section of a tire case with a covering resin material.
Fig. 10 is a width direction cross-section of a tire case illustrating a state in which a covered cord member that has been wound and joined to a crown section of a tire case is being covered with a covering resin material.
Fig. 11 is a cross-section taken along a tire width direction illustrating the periphery of a covered cord member that has been wound and embedded in a crown section of a tire case.
Fig. 12 is a cross-section of relevant portions of a crown section for explaining an operation in which a crown section of a tire is rendered into a molten or softened state for embedding a covered cord member.
Fig. 13 is a cross-section taken along a tire width direction illustrating the periphery of a covered cord member wound and joined to a crown section of a tire..
Fig. 14 is an explanatory diagram for explaining an operation in which a covered cord member that has been wound and joined to a crown section of a tire case is covered with a welding sheet.
Fig. 15 is a cross-section illustrating a cross-section taken along a tire rotation axis direction of a tubular tire.
Fig. 16A is cross-section taken along a tire width direction of a tire of a second exemplary embodiment.
Fig. 16B is an enlarged cross-section taken along a tire width direction of a bead section showing a mounted state of a tire of the second exemplary embodiment to a rim.
Fig. 17 is a cross-section taken along a tire width direction illustrating the periphery of a reinforcement cord having a portion embedded in a crown section of a tire of the second exemplary embodiment.
Fig. 18 is a perspective view of a building machine.
Fig. 19A is perspective view of a building machine showing a state in which cylinder rods of a tire supporting section are protruding by a minimum amount.
Fig. 19B is perspective view of a building machine showing a state in which cylinder rods of a tire supporting section are protruding by a maximum amount.
Fig. 20 is a perspective view of an extruder, used to explain an operation in which welding thermoplastic material is applied to joint portions of case section bodies using the extruder.
Fig. 21 is an explanatory diagram of an operation for embedding a reinforcement cord into a crown section of a tire case using a cord heating device and rollers.
Fig. 22 is an explanatory diagram of an operation for covering a reinforcement cord having a portion embedded in a crown section of a tire with a covering resin material.
Fig. 23 is a width direction cross-section of a tire case illustrating a state in which a reinforcement cord having a portion embedded in a crown section of a tire is being covered with a covering resin material.
Fig. 24 is a cross-section taken along a tire width direction illustrating the periphery of a reinforcement cord fully embedded in a crown section of a tire.
Fig. 25 is a width direction cross-section of a tire case illustrating a state (not according to the invention) in which a reinforcement cord fully embedded in a crown section of a tire is being covered with a covering resin material.
Fig. 26 is an explanatory diagram for explaining an operation for covering a reinforcement cord embedded in a crown section of a tire with a welding sheet.
Fig. 27 is a cross-section illustrating a cross-section taken along the tire rotation axis of a tubular tire.
Fig. 28A is a cross-section taken along a tire width direction of a tire of a third exemplary embodiment.
Fig. 28B is an enlarged cross-section taken along a tire width direction of a bead section illustrating a state in which a tire of the third exemplary embodiment has been mounted to a rim.
Fig. 29A is a face-on cross-section of a mold employed in the third exemplary embodiment, taken at a position where a jig that contacts a bead core is provided.
Fig. 29B is a partial enlarged cross-section of a mold employed in the third exemplary embodiment, taken at a position where a jig that contacts a bead core is not provided.
Fig. 30A is a partial perspective view cross-section of tire case formed in the third exemplary embodiment.
Fig. 30B is a partial perspective view cross-section of tire case formed in the third exemplary embodiment, in which a bead core is not illustrated.
Fig. 31A is a partial perspective view cross-section of tire case formed in the third exemplary embodiment.
Fig. 31B is a partial perspective view cross-section of tire case formed in the third exemplary embodiment, in which a bead core is not illustrated.
Fig. 32A is a side view from the tire inside of a tire case formed in the third exemplary embodiment.
Fig. 32B is an enlargement of part of Fig. 32A.
Fig. 33 is a cross-section of a mold for injection molding a chafer resin material in the third exemplary embodiment.
Fig. 34 is a partial perspective cross-section of a tire manufactured in the third exemplary embodiment.
Fig. 35 is a partial perspective cross-section illustrating a modified example of a tire manufactured in the third exemplary embodiment.
Fig. 36 is side view cross-section illustrating a modified example of a bead section configuring portion of a tire case for joining to a resin chafer in the third exemplary embodiment.
Fig. 37 is side view cross-section illustrating a modified example of a bead section configuring portion of a tire case for joining to a resin chafer in the third exemplary embodiment.
Fig. 38 is side view cross-section illustrating a modified example of a bead section configuring portion of a tire case for joining to a resin chafer in the third exemplary embodiment.
Fig. 39A is a partial perspective view cross-section of tire case formed in modified example of the third exemplary embodiment in which a bead core is not illustrated.
Fig. 39B is a partial enlarged face-on cross-section illustrating resin pouring with an auxiliary jig making contact with a bead core from the tire outside.
Fig. 40A is side view from the tire outside illustrating a modified example of a tire case of the third exemplary embodiment.
Fig. 40B is an enlargement of part of Fig. 40A.
Fig. 41 is a cross-section illustrating placing a chafer resin material on a case section body for pressing with a press in a fourth exemplary embodiment.
Fig. 42 is a side view of a tire case vulcanize molded in the fourth exemplary embodiment.
Fig. 43A is an explanatory diagram illustrating the inside face of a case section body prior to injecting chafer resin material in the fourth exemplary embodiment.
Fig. 43B is an explanatory diagram illustrating the inside face of a case section body after forming a resin chafer in the fourth exemplary embodiment.
Fig. 44A is a cross-section taken along a tire width direction of a tire of a fifth exemplary embodiment.
Fig. 44B is an enlarged cross-section taken along a tire width direction of a bead section illustrating a state in which a tire of the fifth exemplary embodiment has been mounted to a rim.
Fig. 45A is a cross-section of a mold employed in the fifth exemplary embodiment, taken at a position where a jig that makes contact with a bead core is provided.
Fig. 45B is a partial enlarged cross-section taken at a position where a jig that makes contact with a bead core is not provided.
Fig. 46A is a partial perspective cross-section of a tire case formed in the fifth exemplary embodiment.
Fig. 46B is a partial perspective cross-section of a tire case formed in the fifth exemplary embodiment, in which a bead core is not illustrated.
Fig. 47A is a partial perspective cross-section of a tire case formed in the fifth exemplary embodiment.
Fig. 47B is a partial perspective cross-section of a tire case formed in the fifth exemplary embodiment, in which a bead core is not illustrated.
Fig. 48A is a side view from the tire inside of a tire case formed in the fifth exemplary embodiment.
Fig. 48B is an enlargement of a portion of Fig. 48A.
Fig. 49 is a cross-section illustrating green rubber placed on a case section body for pressing with a press in the fifth exemplary embodiment.
Fig. 50 is a side view of a tire case vulcanize molded in the fifth exemplary embodiment.
Fig. 51A is a partial perspective cross-section of a tire case in a modified example of the fifth exemplary embodiment in which a bead core is not illustrated.
Fig. 51B is a partial enlarged face-on cross-section illustrating an auxiliary jig for resin pouring that makes contact with a bead core from the tire outside in a modified example of the fifth exemplary embodiment.
Fig. 52A is a side view from the tire outside of a modified example of a tire case in the fifth exemplary embodiment.
Fig. 52B is an enlargement of a portion of Fig. 52A.
Fig. 53 is a cross-section of a mold for injection molding chafer green rubber in a sixth exemplary embodiment.
Fig. 54 is a partial perspective cross-section of a tire manufactured in the sixth exemplary embodiment.
Fig. 55A is an explanatory diagram illustrating the inside face of a case section body prior to injecting green rubber in the sixth exemplary embodiment.
Fig. 55B is an explanatory diagram illustrating the inside face of a case section body after forming a rubber chafer in the sixth exemplary embodiment.
Fig. 56 is a partial cross-section illustrating a modified example of a tire manufactured in the sixth exemplary embodiment.

### BEST MODE FOR CARRYING OUT THE INVENTION

### First Exemplary Embodiment

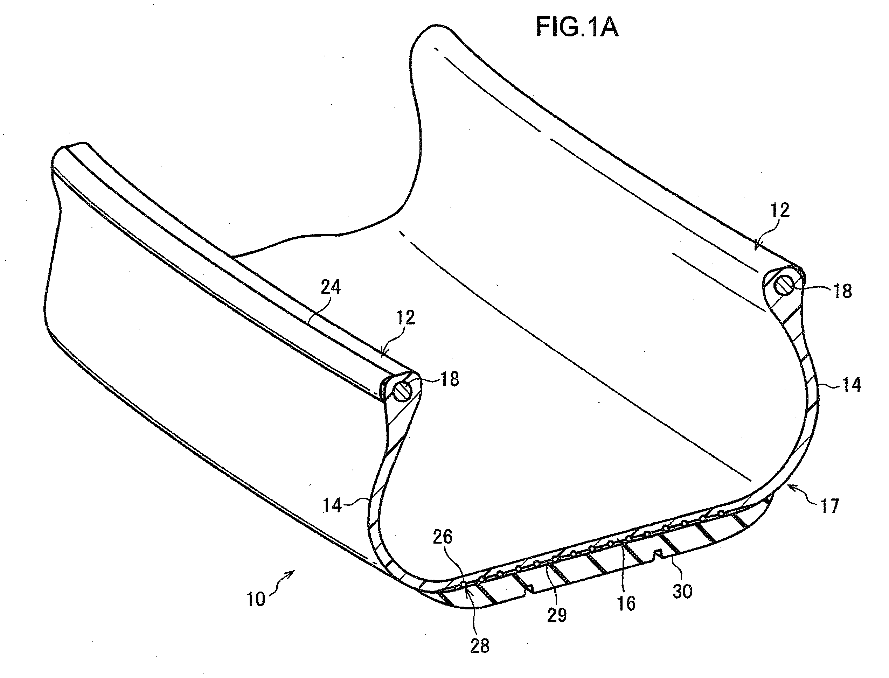

Explanation follows regarding a tire and tire manufacturing method of a first exemplary embodiment of the present invention, with reference to the drawings. As shown in Fig. 1A, a tire 10 exhibits a cross-sectional profile substantially the same as that of a conventional ordinary rubber pneumatic tire.

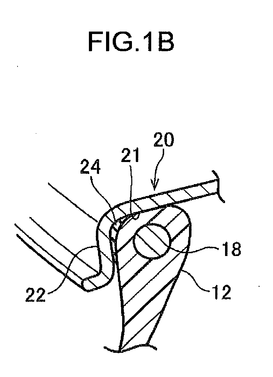

As shown in Fig. 1A, the tire 10 is equipped with a ring shaped tire case 17 (serving as an example of a tire frame member) configured by: a pair of bead sections 12 (see Fig. 1B) that make contact with a bead seat 21 and a rim flange 22 of a rim 20; side sections 14 that extend from the bead sections 12 towards the tire radial direction outside; and a crown section 16 (outer peripheral section) that connects together the tire radial direction outside edge of one of the side sections 14 and the tire radial direction outside edge of the other of the side sections 14.

The tire case 17 of the present exemplary embodiment is formed from a single resin material, however the present invention is not limited thereto. Configuration may be made similarly to in a conventional ordinary rubber pneumatic tire, with different resin materials with particular characteristics employed for each of the sections of the tire case 17 (such as the bead sections 12, the side sections 14 and the crown section 16).
Reinforcement materials (such as fibers, cords, non-woven fabric or woven fabric made of a high polymer material or a metal) may be embedded in the tire case 17 (such as in the bead sections 12, the side sections 14 and/or the crown section 16) such that the tire case 17 is reinforced by the reinforcement material.

Examples of materials that can be employed as the resin material include thermoset resins, thermoplastic resins and thermoplastic elastomers (TPE) having a resilience similar to that of rubber. Note that the resin materials do not contain vulcanized rubber.

Examples of thermoplastic resins include, for example, urethane resins, olefin resins, vinyl chloride resins and polyamide resins.

Examples of thermoset resins include, for example, phenol resins, urea resins, melamine resins, epoxy resins, and polyester resins.

Examples of thermoplastic elastomers include, for example, amide thermoplastic elastomers (TPA), ester thermoplastic elastomers (TPC), olefin thermoplastic elastomers (TPO), styrene thermoplastic elastomers (TPS), urethane thermoplastic elastomers (TPU), thermoplastic cross-linked rubber (TPV) or other thermoplastic elastomers (TPZ), as defined in JIS K6418. Reference to the same type of resin material indicates an embodiment in which, for example, both are ester types or both are styrene types.

A thermoplastic elastomer is preferably employed as the resin material, in consideration of such factors as the resilience required during running and the formability during manufacturing.

Examples of materials that can be employed as these resin materials include materials with a deflection temperature under load (during loading at 0.45MPa) of 78 °C or greater as defined by IS075-2 or ASTM D648, tensile yield strength of 10MPa or greater as defined by JIS K7113, tensile yield elongation of 10% or greater as similarly defined by JIS K7113, tensile break point elongation (JIS K7113) of 50% or greater as similarly defined by JIS K7113, Vicate softening temperature (method A) of 130 °C or greater as defined by JIS K7206.

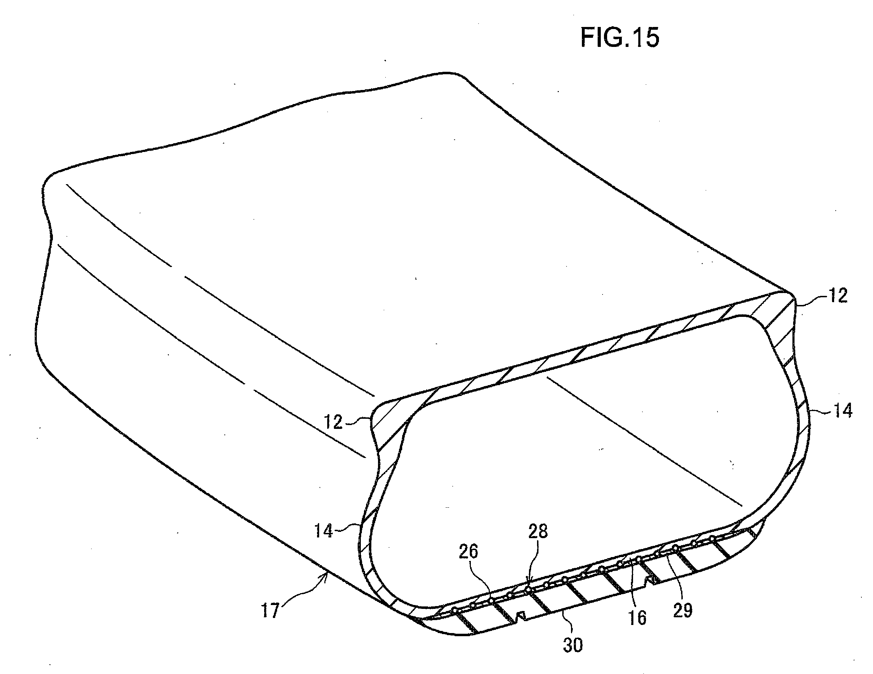

A circular ring shaped bead core 18 formed from a steel cord is embedded in each of the bead sections 12 of the present exemplary embodiment, similarly to in a conventional ordinary pneumatic tire. However, the present invention is not limited thereto, and the bead core 18 may be formed from a material other than steel cord, such as an organic fiber cord, an organic fiber cord covered in resin, or a hard resin. The bead core 18 may also be omitted as long as sufficient rigidity of the bead sections 12 is achieved and no problems arise in fitting to the rim 20 (see Fig. 15).

As shown in Fig. 1B, in the present exemplary embodiment the contact portion of the bead sections 12 to the rim 20, at least the portion that makes contact with the rim flange 22 of the rim 20, is formed from a circular ring shaped seal layer 24 (serving as an example of a sealing section) formed from a material having superior sealing ability (a high sealing performance material) to the resin material (frame resin material) employed for forming the tire case 17, such as a rubber. The seal layer 24 may also be formed at the portion that makes contact with the bead seat 21.

Preferably a similar type of rubber to that employed on the bead section outer face of a conventional ordinary rubber pneumatic tire is used for the rubber for forming the seal layer 24. The rubber seal layer 24 may be omitted as long as sealing ability can be secured to the rim 20 by the resin material alone. Configuration may be made such that another type of resin material is employed having superior sealing ability to the frame resin material employed for forming the tire case 17.

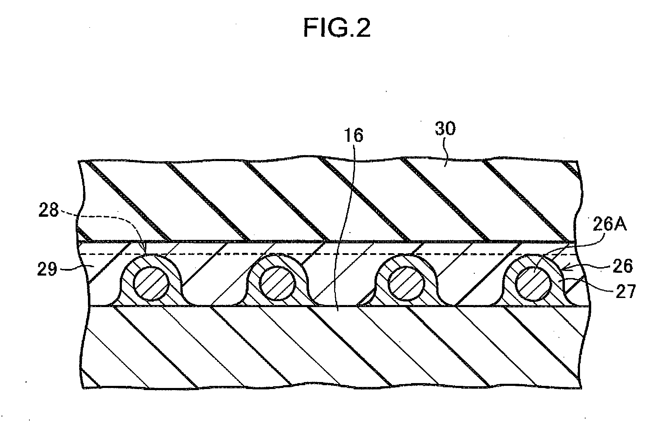

As shown in Fig. 1A and Fig. 2, a reinforcement layer 28 (shown by an intermittent line in Fig. 2) wound with a covered cord member 26 is formed at the crown section 16. The covered cord member 26 is formed by covering and joining a cord resin material 27 to a reinforcement cord 26A of higher rigidity than the frame resin material for forming the tire case 17. The reinforcement cord 26A and the cord resin material 27 are bonded together with a bonding agent (described in detail later), such that a bonding layer of bonding agent is formed over the entire outer peripheral face of the reinforcement cord 26A. The covered cord member 26 and the crown section 16 are welded and joined together at the contact portion of the covered cord member 26 with the crown section 16.

A mono-filament (single strand) such as of metal fiber or organic fiber, or a twisted multi-filament (twisted strands) of such fibers may be employed for the reinforcement cord 26A. The present exemplary embodiment employs a steel cord of twisted steel fiber as the reinforcement cord 26A. The reinforcement layer 28 is equivalent to a belt disposed on the outer peripheral face of a frame of a conventional rubber pneumatic tire.

The reinforcement layer 28 is covered by a covering layer 29. The covering layer 29 is formed from a covering resin material, and the two width direction edge portions of the covering layer 29 are disposed to the width direction outside of the two width direction edge portions of the reinforcement layer 28. Reference to width direction indicates the width direction of the tire case 17 and the tire 10, and the two width direction edge portions of the reinforcement layer 28 indicate the width direction outside edge portions of the covered cord member 26 at the width direction outermost side of the covered cord members 26 forming the reinforcement layer 28. In the present exemplary embodiment configuration is made such that the two width direction edge portions of the covering layer 29 are positioned further to the width direction outside than the two width direction edge portions of the reinforcement layer 28. However, the present invention is not limited thereto, and configuration may be made in which the two width direction edge portions of the covering layer 29 are at the same position in the width direction as the two width direction edge portions of the reinforcement layer 28. The covering layer 29 and the reinforcement layer 28 are joined by welding together the covering resin material and the cord resin material 27.

The outer peripheral face of the covering layer 29 is flat profiled, and a tread 30 configured from a material, for example from a rubber, with superior abrasion resistance characteristics to those of the frame resin material for forming the tire case 17 is joined to the outer peripheral face of the covering layer 29. The inner peripheral face of the tread 30 is profiled to follow the outer peripheral face of the covering layer 29 to achieve a state in which there are no gaps therebetween (a state in which air is not incorporated). The rubber employed in the tread 30 is preferably a similar type of rubber to the rubber employed in a conventional rubber pneumatic tire. Configuration may be made with a tread formed from another type of resin material with superior abrasion resistance characteristics to those of the frame resin material forming the tire case 17 provided in place of the tread 30. A tread pattern configured from plural grooves is formed in the tread 30 in the ground contact surface that contacts the road surface, similarly to in a conventional rubber pneumatic tire.

In the present exemplary embodiment, a thermoplastic material (for example a thermoplastic resin or a thermoplastic elastomer) is selected from resin materials to be employed as an example of the frame resin material for forming the tire case 17. In the present exemplary embodiment, for example, thermoplastic materials are also employed for the covering resin material for forming the covering layer 29 and for the cord resin material 27.

### Tire Building Machine

Explanation follows regarding a tire building machine for the tire 10 of the present exemplary embodiment.

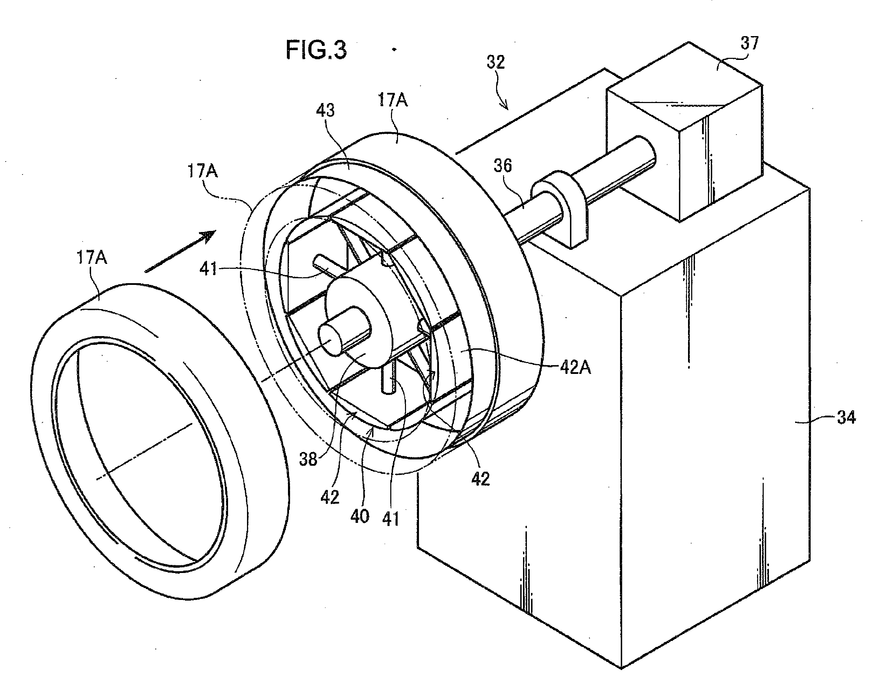

Fig. 3 illustrates a perspective view of relevant portions of a building machine 32 employed to form the tire 10. The building machine 32 includes a horizontally disposed shaft 36, a geared motor 37 for rotating the shaft 36, and a base 34 placed on the floor surface for supporting the geared motor 37.

The tire support section 40 for supporting the tire case 17 is provided on the end side of the shaft 36. The tire support section 40 is equipped with a cylinder block 38 fixed to the shaft 36, and with plural cylinder rods 41 provided at even spacings around the circumferential direction of the cylinder block 38 and extending towards the radial direction outside.

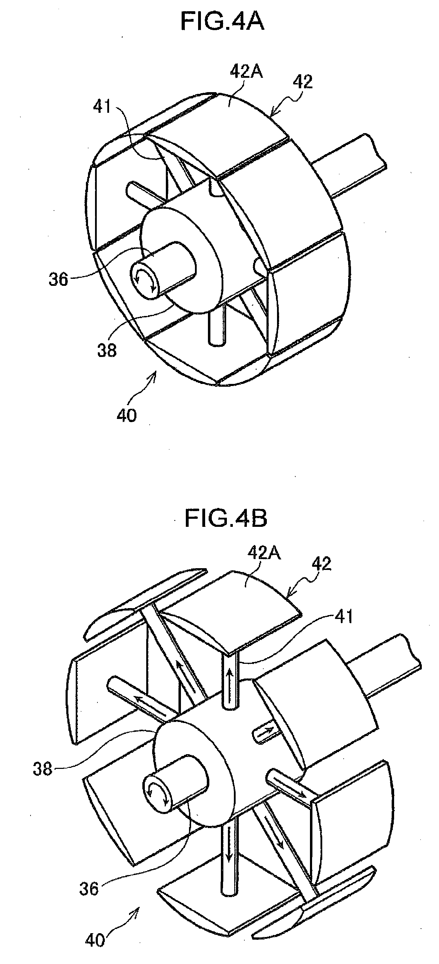

Tire support plates 42 are provided at the leading ends of the cylinder rods 41. Each of the tire support plates 42 has a circular arc shaped face 42A on the outside face provided with a radius of curvature substantially that of the tire case inner face. Fig. 3 and Fig. 4A illustrate the cylinder rods 41 in a state in which there is the minimum amount protruding, and Fig. 4B illustrates the cylinder rods 41 in a state in which there is the maximum amount protruding. The cylinder rods 41 are all coupled together so as to enable each to be moved in the same direction to give the same projection amount.

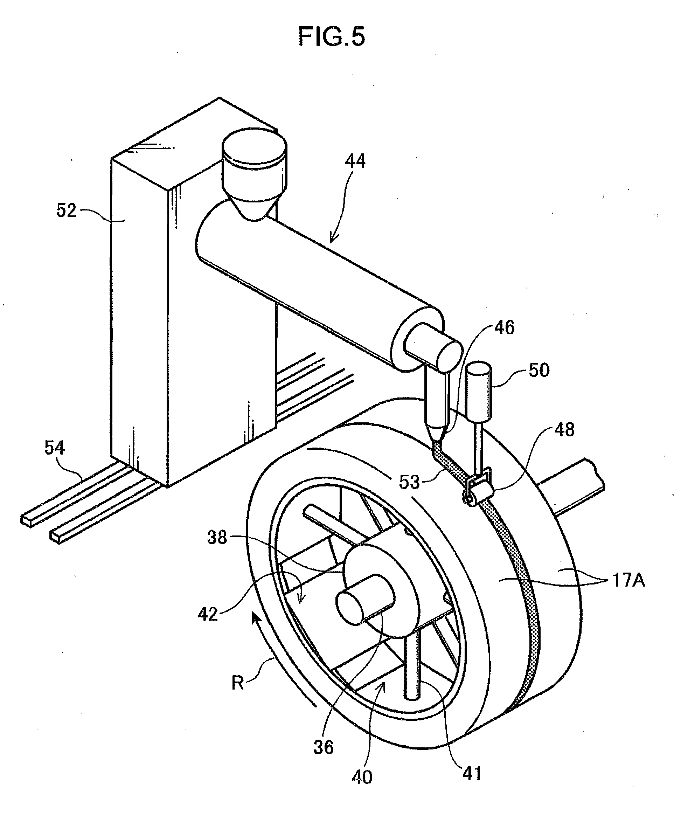

As shown in Fig. 5, an extruder 44 is disposed in the vicinity of the building machine 32 for extruding welding thermoplastic material in order to integrate together the section bodies when the tire case 17 is formed from plural sections (the tire case 17 of the present exemplary embodiment is formed by welding and integrating together case section bodies 17A split into left and right halves). The extruder 44 is equipped with a nozzle 46 for ejecting the molten welding thermoplastic material 53 downwards. The outlet section of the nozzle 46 has a substantially rectangular shape, and the welding thermoplastic material 53 is extruded in a strip shape with a substantially rectangular shaped cross-sectional profile. The welding thermoplastic material 53 is preferably the same type of material as the frame resin material for forming the tire case 17 and is particularly preferably the same material. However a different type of material may be employed as long as welding can be achieved. In the present exemplary embodiment the frame resin material for forming the tire case 17 and the welding thermoplastic material 53 are the same type of material.

In the vicinity of the nozzle 46 are disposed a flatting roller 48, for pressing against the welding thermoplastic material 53 that has been applied to the case section bodies 17A of the tire case 17, and a cylinder device 50 for moving the flatting roller 48 up or down. The cylinder device 50 is supported through a frame, not shown in the drawings, from a support pillar 52 of the extruder 44. The extruder 44 is capable of moving along guide rails 54 disposed on the floor in a direction parallel to the shaft 36 of the building machine 32.

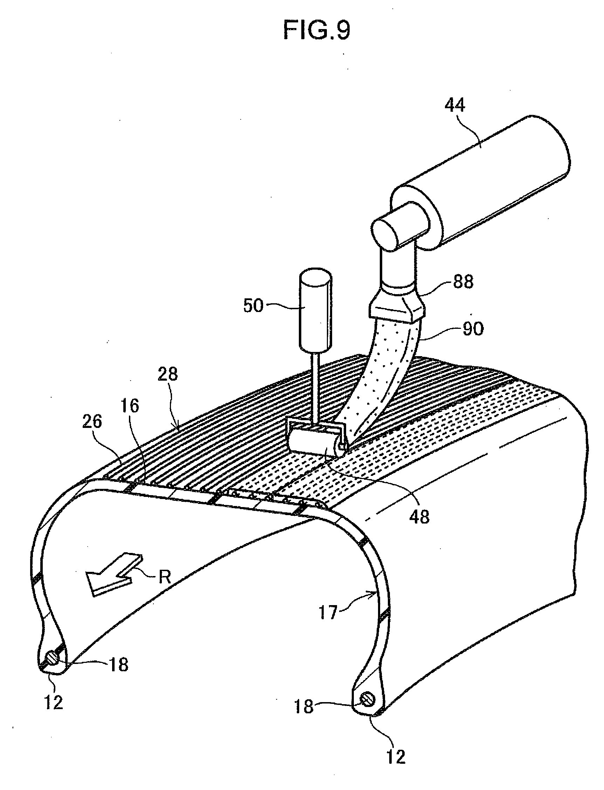

With the extruder 44 it is possible to change over the nozzle 46 to a nozzle 88. The nozzle 88 has an outlet section of a substantially rectangular profile that is wider than the nozzle 46. Accordingly a strip shape of covering resin material 90 of wider width than the welding thermoplastic material 53 can be extruded in a molten or softened state by changing over the material inside the extruder 44 to a covering resin material (see Fig. 9). The covering resin material 90 is a material for covering the covered cord member 26 wound on the crown section 16 in a covered cord member winding process, described later, and for welding to the cord resin material 27 of the covered cord member 26 and the frame resin material at the periphery of the covered cord member 26. Therefore the covering resin material 90 is preferably a similar type of material to the cord resin material 27 of the covered cord member 26, and particularly preferably the same material. However, a different type of material may be employed as long as welding can be achieved. In the following description reference to a covering resin material without an appended reference numeral indicates material in a solid state, and reference to the covering resin material 90 appended with the reference numeral is used to indicate material in a molten or softened state.

A cord feeder device 56 for feeding the covered cord member 26 to form the reinforcement layer 28 is movably mounted to the guide rails 54.

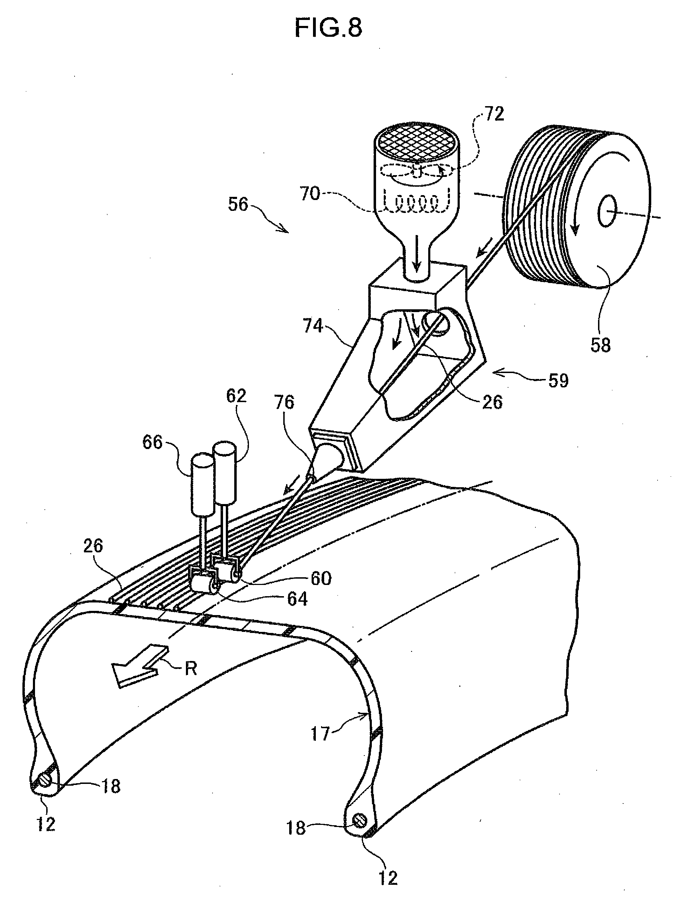

As shown in Fig. 8, the cord feeder device 56 is equipped with: a reel 58 wound with the covered cord member 26; a cord heating device 59 disposed at the cord conveying direction downstream side of the reel 58; a press roller 60 disposed further to the downstream side in the covered cord member 26 conveying direction; a first cylinder device 62 for moving the press roller 60 in the direction so as to make contact with or move away from the crown section 16 of the tire case 17; a cooling roller 64 disposed at the reinforcement cord 26A conveying direction downstream side of the press roller 60; and a second cylinder device 66 for moving the metal fabricated cooling roller 64 in the direction so as to make contact with or move away from the outer peripheral face of the crown section 16. The surfaces of the press roller 60 and the cooling roller 64 are coated with a fluoro resin (Teflon (registered trademark) in the present exemplary embodiment) to suppress molten or softened thermoplastic material from adhering.
In the present exemplary embodiment the cord supply device 56 is configured with two rollers, the press roller 60 and the cooling roller 64, however the present invention is not limited to such a configuration and configuration may be made with only one thereof (namely with a single roller). The press roller 60 and the cooling roller 64 are configured to perform rotation following the tire case 17.

The cord heating device 59 is equipped with a heater 70 and a fan 72 for generating hot air and a heating box 74 with an internal space supplied with the hot air, with the covered cord member 26 passing through the internal space of the heating box 74, and a discharge outlet 76 provided at the leading end of the heating box 74 from which the heated covered cord member 26 is discharged.
The cord supply device 56 is capable of movement along the axial direction of the tire case 17.

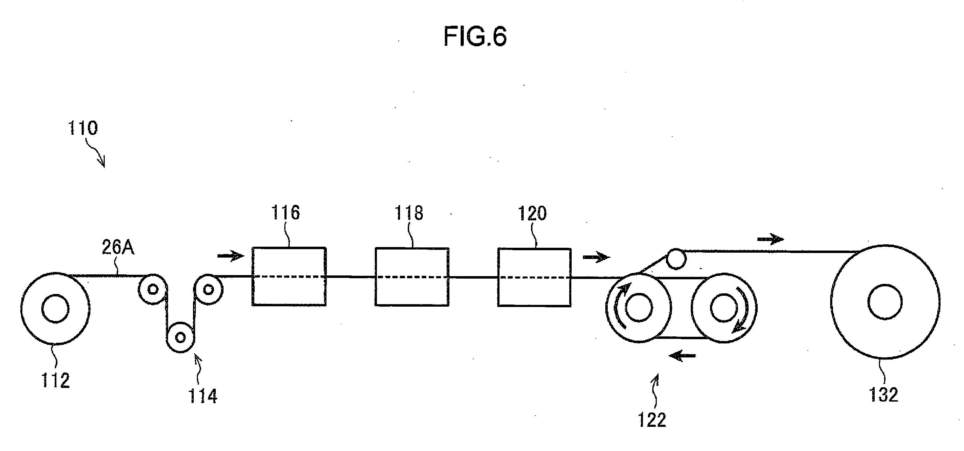

Fig. 6 shows a cord bonding layer apparatus 110 for forming a bonding layer on the outer peripheral face of the reinforcement cord 26A. The cord bonding layer apparatus 110 includes: a reel 112 on which the reinforcement cord 26A is wound; tensioning rollers 114 for adjusting the tension of the reinforcement cord 26A fed out from the reel 112 and conveying the reinforcement cord 26A to the conveying direction downstream side; a cleaning device 116 for cleaning the outer peripheral face of the reinforcement cord 26A that has been fed out from the tensioning rollers 114 with a cleaning agent (acid and alcohol for example are preferable in the present exemplary embodiment, due to the reinforcement cord 26A being configured from a steel cord); a bonding layer forming device 118 for forming the bonding layer on the cleaned outer peripheral face of the reinforcement cord 26A; a drying device 120 for drying the bonding layer on the reinforcement cord 26A , such as with hot air; and a winding device 122 for winding up the reinforcement cord 26A that has been fed out from the drying device 120.

As a method for forming the bonding layer in the bonding layer forming device 118, a method may be employed in which the cleaned reinforcement cord 26A is passed through a bonding agent tank filled with bonding agent to form the bonding layer on the outer peripheral face, a method may be employed in which bonding agent is sprayed onto the outer peripheral face of the cleaned reinforcement cord 26A, or another method may be employed. Any bonding agent that covers the reinforcement cord 26A and has adhesive properties to the cord resin material 27 may be employed as the bonding agent, and for example a triazine thiol bonding agent is preferably employed.

The cord resin material 27 is preferably a similar type of material to the frame resin material for forming the tire case 17, and particularly preferably the same material. However a different type of material can be employed as long as welding can be achieved. The cord resin material 27 is preferably the same type of material as the covering resin material forming the covering layer 29, and particularly preferably the same material. However a different type of material can be employed as long as welding (adhesion) can be achieved. Furthermore, having the same type of material for the frame resin material for forming the tire case 17, the cord resin material 27 for the covered cord member 26, and the covering resin material for forming the covering layer 29 is preferable from the perspective of joint strength.

The reinforcement cord 26A is fed out from the winding device 122 towards a drum 132 so as to be wound thereon.

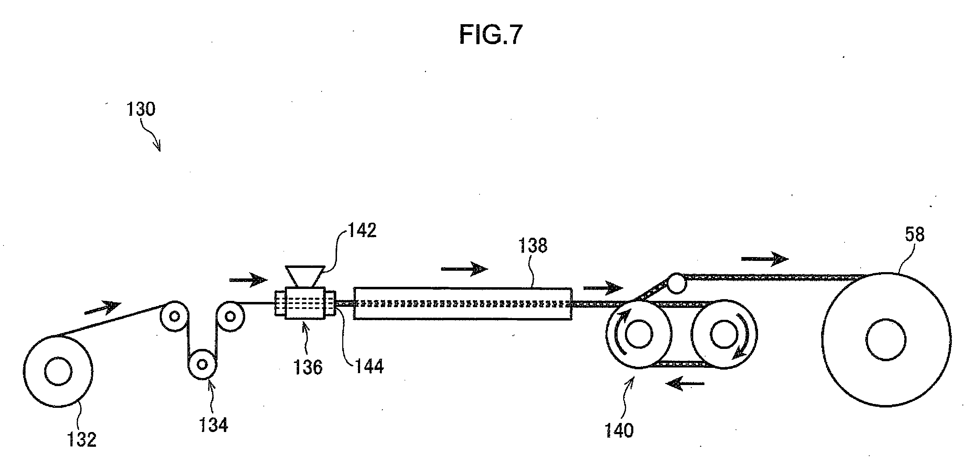

Fig. 7 illustrates a cord covering apparatus 130 for covering the cord resin material 27 over the outer peripheral face of the reinforcement cord 26A and joining it thereto. The cord covering apparatus 130 includes: the drum 132 on which the reinforcement cord 26A formed with the bonding layer is wound; tensioning rollers 134 for adjusting the tension of the reinforcement cord 26A fed out from the drum 132 and conveying the reinforcement cord 26A to the conveying direction downstream side; an extruder 136 for covering molten or softened cord resin material 27 onto the outer peripheral face of the reinforcement cord 26A fed out from the tensioning rollers 134; a water tank 138 for cooling the cord resin material 27 for the covered cord member 26 extruded from the extruder 136 in a molten state; and a winding device 140 for winding up the covered cord member 26 fed out from the water tank 138.

The extruder 136 has a resin inlet port 142 at an upper portion, and is configured to melt or soften cord resin material 27 introduced through the resin inlet port 142 so as to cover the reinforcement cord 26A passing through inside the extruder 136. A cord outlet section 144 of the extruder 136 is shaped with a substantially circular profile. In the present exemplary embodiment the covered cord member 26 is accordingly formed with a circular cross-sectional profile. Note that the cord outlet section 144 of the extruder 136 may be configured with a profile other than a substantially circular profile.

The covered cord member 26 is fed out from the winding device 140 to the reel 58 onto which it is then wound.

Explanation follows regarding a manufacturing method of the tire 10 of the present exemplary embodiment.

### Tire Case Building Process

(1) As shown in Fig. 3, first the two case section bodies 17A are disposed at the outer peripheral side of the tire support section 40 in its compressed diameter state, aligned facing each other and abutting, and with a cylindrical shaped tire inner face support ring 43 formed from thin sheet metal (for example from sheet steel of 0.5mm thickness) disposed at inside portions of the two case section bodies 17A (in order to show inside portions one of the case section bodies 17A is shown in a removed state in Fig. 3).

The external diameter of the tire inner face support ring 43 is set at substantially the same dimension as the inner diameter of the outer peripheral portion of the case section bodies 17A, such that the outer peripheral face of the tire inner face support ring 43 is in close contact with the inner peripheral face of the outer peripheral sections of the case section bodies 17A. Accordingly, projections and indentations at the joint portion (the welding thermoplastic material 53), caused by (and in a reciprocal profile to) indentations and projections occurring at the outer periphery of the tire support section 40 due to gaps arising between tire support plates 42, can be suppressed from occurring. Indentations and projections can also be suppressed from arising due to gaps between the tire support plates 42 in laying-up materials (the tire case 17, the tread 30, and other tire building materials (such as, for example, a belt reinforcement layer)). Namely, indentations and projections can be suppressed from arising in the laying-up materials at locations corresponding to gaps between the tire support plates 42 due to forces acting (such as tension and pressing forces) when laying up the laying-up materials. The tire inner face support ring 43 is easily insertable inside the case section bodies 17A by bending deformation due to being formed from thin sheet metal.

Then, as shown in Fig. 4B, the tire support section 40 is expanded in diameter such that the tire inner face support ring 43 is held by the plural tire support plates 42 from the inside.

(2) Next the extruder 44 is moved such that the nozzle 46 is disposed above the abutting portions of the case section bodies 17A, as shown in Fig. 5. Then, while rotating the tire support section 40 in the direction of arrow R, the melted welding thermoplastic material 53 is extruded out from the nozzle 46 towards the joining location, applying the melted welding thermoplastic material 53 along the joining location. The applied welding thermoplastic material 53 is then flattened uniformly by the flatting roller 48 disposed at the downstream side, welding together the outer peripheral faces of the two case section bodies 17A. The welding thermoplastic material 53 hardens on cooling naturally, such that the one case section body 17A and the other case section body 17A are welded by the welding thermoplastic material 53, integrating these members together and forming the tire case 17.

### Covered Cord Member Forming Process

(3) As shown in Fig. 6, first the bonding layer is formed to the outer peripheral face of the reinforcement cord 26A using the cord bonding layer apparatus 110. More specifically, the reinforcement cord 26A fed out from the reel 112 is fed to the cleaning device 116 while adjusting the tension with the tensioning rollers 114, and the outer peripheral face of the reinforcement cord 26A is cleaned. The bonding layer is then formed on the cleaned outer peripheral face of the reinforcement cord 26A using the bonding layer forming device 118. The bonding layer is formed without unevenness since the outer peripheral face of the reinforcement cord 26A has been cleaned. The bonding layer is then dried in the drying device 120. The reinforcement cord 26A thus formed with the bonding layer is then wound around the winding device 122. The reinforcement cord 26A is then fed out from the winding device 122 and towards the drum 132, and after winding the reinforcement cord 26A up with the drum 132, the drum 132 is set in the cord covering apparatus 130.

(4) Then, as shown in Fig. 7, the outer peripheral face of the reinforcement cord 26A that has been formed with the bonding layer using the cord covering apparatus 130 is covered by the cord resin material 27 and joined thereto. More specifically, the reinforcement cord 26A that has been fed out from the drum 132 is fed to the extruder 136 while adjusting the tension with the tensioning rollers 134. The extruder 136 is then employed to cover molten or softened cord resin material 27 onto the outer peripheral face of the reinforcement cord 26A, and the covered cord member 26 is then extruded out from the cord outlet section 144 into the water tank 138. The molten or softened reinforcement layer 28 is thereby cooled and solidified. The reinforcement cord 26A and the cord resin material 27 are joined together through the bonding layer when the molten or softened cord resin material 27 is covered on the reinforcement cord 26A. Adhesion between the reinforcement cord 26A and the cord resin material 27 is raised due to the bonding layer being formed uniformly on the outer peripheral face of the reinforcement cord 26A. The joining surface area (Joint strength) between the reinforcement cord 26A and the cord resin material 27 is increased thereby. The covered cord member 26 is then wound around the winding device 140. Then the covered cord member 26 is fed out from the winding device 140 to the reel 58, and after the covered cord member 26 has been wound on the reel 58, the reel 58 is then set in the cord supply device 56.

### Covered Cord Member Winding Process

(5) Then, as shown in Fig. 8, the extruder 44 is retracted and the cord feeder device 56 is disposed in the vicinity of the tire support section 40. The temperature of the heater 70 is then raised, and heated air at the periphery of the heater 70 is fed into the heating box 74 by moving air generated by rotating the fan 72.

The covered cord member 26 wound out from the reel 58 that was set in the above process is then fed into and heated in the heating box 74 whose internal space is heated by the hot air (for example, the temperature of the outer peripheral face of the covered cord member 26 is heated to about 100 to 200 °C). The cord resin material 27 reaches a molten or softened state at this stage due to the covered cord member 26 being heated.

The heated covered cord member 26 passes through the discharge outlet 76 and is wound in a spiral shape at a constant tension on the outer peripheral face of the crown section 16 of the tire case 17 that is being rotated in the arrow R direction. When this occurs, the molten or softened cord resin material 27 of the portions making contact with the crown section 16 spreads out to the periphery, and the frame resin material and the cord resin material 27 mix together at the contact portions and are welded together. The joint strength between the crown section 16 and the covered cord member 26 is accordingly raised.

The tension applied to the covered cord member 26 is also regulated by applying braking to the reel 58 that is rotating following the rotation of the tire case 17. The covered cord member 26 can be suppressed from snaking by winding the covered cord member 26 while applying a constant tension in this manner. In the present exemplary embodiment tension is regulated by applying braking to the reel 58, however configuration may be made such that the tension is regulated by, for example, providing a tension regulation roller on the conveying path of the covered cord member 26.

Just after the covered cord member 26 with the molten or softened cord resin material 27 makes contact with the outer peripheral face of the crown section 16, the molten or softened cord resin material 27 is spread out to the periphery by pressing with the press roller 60, such that joint surface area to the crown section 16 can be secured. Due to performing such pressing, any air that was incorporated when the covered cord member 26 makes contact with the crown section 16 is squeezed out, and air can be further suppressed from being incorporated between the covered cord member 26 and the crown section 16.

Then the molten or softened cord resin material 27 of the covered cord member 26 is forcibly cooled by the cooling roller 64 provided on the downstream side of the press roller 60. The covered cord member 26 can accordingly be placed with good precision before the covered cord member 26 moves, due to cooling both the covered cord member 26 and the periphery of the covered cord member 26.

The reinforcement layer 28 is formed at the outer peripheral side of the crown section 16 of the tire case 17 by winding the covered cord member 26 in a spiral shape on the crown section 16 in this manner.

### Covered Cord Member Covering Process

(6) Then, as shown in Fig. 9, the cord supply device 56 is retracted, and the extruder 44 is again disposed in the vicinity of the tire support section 40. The nozzle 46 of the extruder 44 is swapped over at this point to the nozzle 88, and the material for extruding from the nozzle 88 is swapped over to the covering resin material for forming the covering layer 29.

The nozzle 88 is then disposed above a width direction edge portion of a region on the crown section 16 of wider width than the region that has been wound with the covered cord member 28 (the reinforcement layer 28 placement region).

Then, molten or softened covering resin material 90 is extruded from the nozzle 88 towards a covering region on the crown section 16 while rotating the tire support section 40 in the arrow R direction, and the covering resin material 90 is applied along the circumferential direction. The covered cord member 26 is thereby progressively covered by the molten or softened covering resin material 90. When this occurs, due to the molten or softened covering resin material 90 spreading out to a certain extent over the surface of the wound covered cord member 26, gaps between adjacent strands of the covered cord member 26 are filled in with the covering resin material 90, such that the surface approaches a flat profile.

The covering amount of the molten or softened covering resin material 90 covering the wound covered cord member 26 is adjusted such that the surface (entire surface) of the covering resin material 90 extends further to the radial direction outside than the tire case 17 radial direction outside edge portions of the covered cord member 26. The surface of the covering resin material 90 thereby adopts an even flatter profile by such adjustment.

The applied covering resin material 90 is then pressed out evenly by the flatting roller 48 disposed at the downstream side, and the covering resin material 90 is welded to the cord resin material 27. The covering resin material 90 is thereby suppressed from rising up away from the wound covered cord member 26. Also air can also be sufficiently suppressed from being incorporated at the periphery of the covered cord member 26 by any air between the covered cord member 26 and the covering resin material 90 being pressed out during pressing with the flatting roller 48. The reinforcement layer 28 covered with the covering layer 29 is accordingly formed when the covering resin material 90 has solidified through natural cooling.

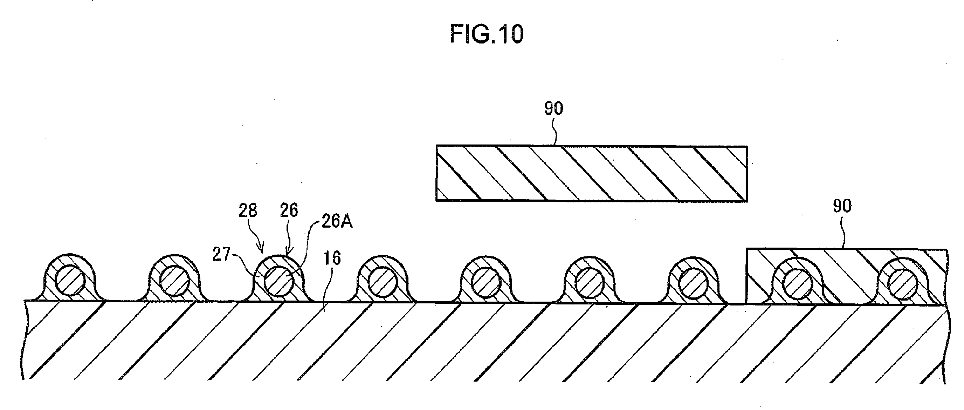

As shown in Fig. 10, when the covering resin material 90 is being applied to the covering region of the crown section 16, a slight overlap may be configured between edge portions of the covering resin material 90 along the tire case 17 width direction.

The extruder 44 that was employed for the tire case building process is employed in the present process, however the present invention is not limited thereto, and an extruder dedicated to the present process may be fabricated and employed. However, compared to fabricating a new extruder a cost saving can be achieved by employing the extruder 44 that was employed for the tire case building process and swapping over some of the components.

### Surface Treatment Process

(7) The extruder 44 is then retracted, and a buffering device, not shown in the drawings, is disposed in the vicinity of the tire support section 40. Then, while rotating the tire support section 40 in the arrow R direction, the tread joining surface (including the outer peripheral face of the covering layer 29) of the tire case 17 formed with the covering layer 29 for joining to the tread 30 (described in detail later) is machined to adjust the external profile so as to achieve uniformity along the circumferential direction and the width direction, while also performing surface treatment to form fine indentations and projections (including grooves) in the surface. The fine indentations and projections here are provided to give an anchor effect when the tread 30 is joined to the tread joining surface with a bonding agent in the subsequent process. Namely, while in the present exemplary embodiment there are the fine indentations and projections formed on the tread joining surface there is no limitation thereto. The tread joining surface may be formed in any manner that enables an anchor effect to be exhibited.

The covering layer 29 is formed with the covering amount of the covering resin material 90 adjusted such that the surface (entire surface) of the covering resin material 90 is further to the radial direction outside than the tire case 17 radial direction outside end portions of the covered cord member 26. Namely, since a thickness is secured between the covering layer 29 and the covered cord member 26, the reinforcement cord 26A is not liable to be machined away during surface treatment.

(8) The pre-vulcanized strip shaped tread 30 is then wound once around the tread joining surface of the tire case 17, and the tread 30 is bonded to the outer peripheral face of the tire case 17 using a bonding agent, for example. Since the inner peripheral face of the tread 30 also has a flat profile similar to the outer peripheral face of the covering layer 29, gaps are not liable to be formed between the tread joining surface including the outer peripheral face of the covering layer 29 and the inner peripheral face of the tread 30, and air incorporation is thereby suppressed. Due to the fine indentations and projections formed on the tread joining surface in the surface treatment process, the bonding agent enters into the fine indentations and projections and an anchor effect is exhibited, thereby raising the joint strength between the tread 30 and the tire case 17 formed with the covering layer 29.

The bonding agent is not particularly limited, and examples of bonding agents that may be employed include a triazine thiol bonding agent, a chlorinated rubber bonding agent, a phenol resin bonding agent, an isocyanate bonding agent, and a halogenated rubber bonding agent. The tread 30 can, for example, employ a pre-cured tread such as used in a conventional recycled tire. The present process is similar to the process of bonding a pre-cured tread to the outer peripheral face of a tire base in recycled tire manufacturing.

(9) Bonding, such as with a bonding agent, the seal layer 24 formed from pre-vulcanized rubber to the bead sections 12 of the tire case 17 thus completes the tire 10.

(10) Finally the diameter of the tire support section 40 is shrunk, the completed tire 10 is removed from the tire support section 40 and the tire inner face support ring 43 is removed from inside the tire by bending deformation.

### Operation

In the tire 10 of the present exemplary embodiment the reinforcement layer 28 is formed by winding the covered cord member 26 on the crown section 16 of the tire case 17 formed from the resin material (frame resin material), raising characteristics such as the resistance to punctures, cut resistance and the circumferential direction rigidity of the tire 10. By raising the circumferential direction rigidity of the tire 10 creep of the tire case 17 formed from the resin material (frame resin material) is prevented.

The reinforcement cord 26A of the covered cord member 26 is covered with the cord resin material 27 and so air can be suppressed from being introduced at the periphery of the reinforcement cord 26A, and movement of the reinforcement cord 26A can also be suppressed. The covered cord member 26 is joined to the crown section 16 by welding, and so the covered cord member 26 (including the reinforcement cord 26A) can be suppressed from moving due to force input during running, thereby raising durability.

Due to the reinforcement cord 26A being covered by the cord resin material 27, suppressing air from being incorporated at the periphery of the reinforcement cord 26A, an increase in weight, increased physical displacement width of the member in the thickness direction, and a reduction in running performance due to such factors as insufficient lateral force during running are accordingly suppressed, compared to configurations in which a reinforcement cord 26A is embedded for example in a cushion rubber.

The reinforcement cord 26A and the cord resin material 27 are joined together with the bonding agent, raising the adhesiveness between the reinforcement cord 26A and the cord resin material 27, and suppressing air from being incorporated at the periphery of the reinforcement cord 26A. Movement of the reinforcement cord 26A is further suppressed by joining together the reinforcement cord 26A and the cord resin material 27, and deterioration (such as crack generation) of the cord resin material 27 is suppressed.

The joint strength of the crown section 16 and the covered cord member 26 is raised due to the crown section 16 and the covered cord member 26 being joined together by welding.

When the frame resin material for forming the tire case 17 and the cord resin material 27 of the covered cord member 26 are the same type of material good intermixing occurs between the frame resin material and the cord resin material 27 during welding the frame resin material and the cord resin material 27 together, thereby raising the joint strength between the crown section 16 and the covered cord member 26.

Gaps occurring between adjacent strands of the covered cord member 26 are also covered by the covering layer 29 so as to provide a flattened profile on the outer peripheral face. Gaps are accordingly not liable to occur between the tread 30 and the tread joining surface of the tire case 17 including the covering layer 29 to which the tread 30 is joined, thereby suppressing air incorporation. Joint surface area (joint strength) is thereby secured between the tread 30 and the covering layer 29, suppressing delamination between the tread 30 and the covering layer 29 due to force input during running, and raising durability.

When a similar type of material is employed for the cord resin material 27 of the covered cord member 26 and the covering resin material of the covering layer 29, since the reinforcement layer 28 is covered by the molten or softened covering resin material 90 to form a covering layer, there is good intermixing between the cord resin material 27 at the covered portion and the covering resin material 90, and the joint strength between the covered cord member 26 and the covering layer 29 is raised.

The resistance to abrasion of the tire 10 is raised by the tread 30 that makes contact with the road surface being formed from a rubber material with superior abrasion resistance properties to those of the frame resin material.
Furthermore, due to the ring shaped bead cores 18 formed from a metal material being embedded in the bead sections 12, the tire case 17, namely the tire 10, is retained on the rim 20 with a similar robustness to that of a conventional rubber pneumatic tire.

The seal layer 24 formed from a rubber material with superior sealing properties to those of the frame resin material is also provided to the portions of the bead sections 12 that make contact with the rim 20, and so the sealing ability between the tire 10 and the rim 20 is raised. Air is accordingly further suppressed from leaking out from inside the tire than in cases in which sealing is between the rim 20 and the frame resin material. Rim fit-ability is also raised by providing the seal layer 24.

According to the structure of the tire 10 of the present exemplary embodiment, the tire case 17 formed from the frame resin material provides rigidity without using carcass plies widely employed in conventional rubber tires, and so a reduction in weight can be achieved compared with conventional rubber tires provided with carcass plies. With the structure of the tire 10 of the present exemplary embodiment the number of manufacturing processes during tire manufacture can also be reduced due to not using carcass plies like those of conventional rubber tires.

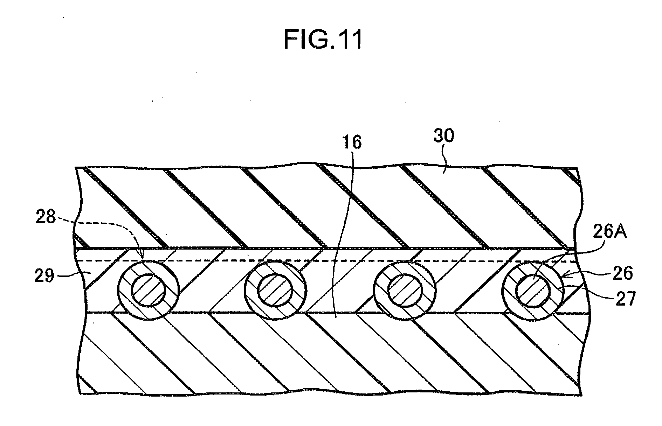

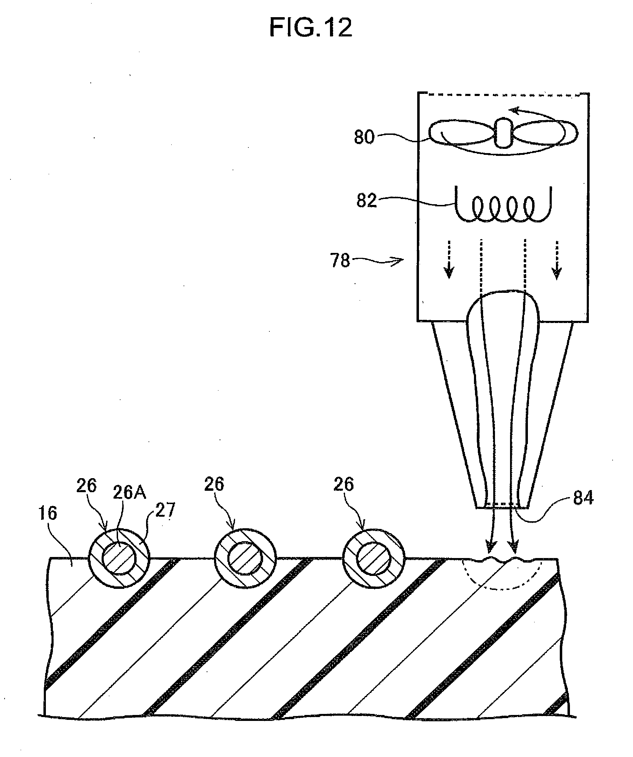

In the first exemplary embodiment configuration is such that the covered cord member 26 is heated, the cord resin material 27 is melted or softened, and the covered cord member 26 and the crown section 16 are then joined together by welding, however the present invention is not limited thereto. Configuration may be made in which the covered cord member 26 is not heated, but the portion of the crown section 16 where the covered cord member 26 is to be embedded is heated so as to melt or soften the frame resin material, and the covered cord member 26 is then embedded in the crown section 16 and joined thereto. More specifically, as shown in Fig. 12, a hot air generator 78 with a fan 82, a heater 80 and a discharge outlet 84 may be employed. The hot air generated by the hot air generator 78 is blown onto the portions of the crown section 16 where the covered cord member 26 is to be embedded. The covered cord member 26 is then embedded after the frame resin material has been melted or softened at these portions, thereby welding (joining) the covered cord member 26 and the crown section 16 together. A tire 10 is accordingly manufactured with a cross-section at the periphery of the covered cord member 26 such as that shown in Fig. 11. The covered cord member 26 may also be heated with a cord heating device 59 such as that shown in Fig. 8 so as to achieve a molten or softened state for the cord resin material 27, a hot air generator 78 such as that shown in Fig. 12 may be employed to heat the portion of the crown section 16 where the covered cord member 26 is to be embedded, and then the two components placed in contact when the frame resin material at this portion is in a molten or softened state so as to join the two components together. Better intermixing of the frame resin material and the cord resin material 27 is obtained in such cases than when only one of the two components is in a molten or softened state, and so the joint strength between the crown section 16 and the covered cord member 26 can be raised further. Various other methods may be employed other than hot air from the hot air generator 78 for heating the portion of the crown section 16 where the covered cord member 26 is to be embedded, for example heating may be performed by radiation heating, heating by infrared radiation, or heating by pressing with a hot roller.

The first exemplary embodiment is configured such that the covered cord member 26 and the crown section 16 are joined together by welding, however the present invention is not limited thereto. Configuration may be made such that a bonding agent is coated (or sprayed) on the outer peripheral face of the covered cord member 26, and the covered cord member 26 and the crown section 16 joined together with the bonding agent. When joining is by such a bonding agent, the covered cord member 26 and the crown section 16 can be joined even when the frame resin material forming the tire case 17 and the cord resin material 27 are materials that are difficult to weld. A bonding agent layer is formed between the two components when the crown section 16 and the covered cord member 26 have been bonded together employing a bonding agent in this manner.

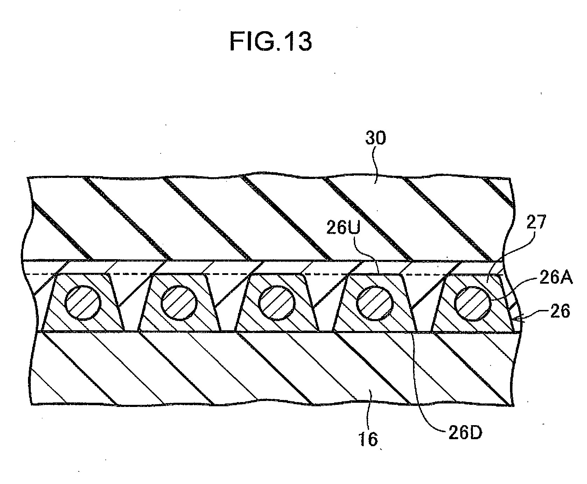

The first exemplary embodiment is configured such that the covered cord member 26 is formed with a circular cross-sectional profile in the covering cord forming process, however the present invention is not limited thereto. Configuration may be made with the covered cord member 26 having a flat face 26D in cross-section on the side to be joined to the crown section 16, having a flat face 26U on the opposite side to the side to be joined to the crown section 16, and formed with a wider width on the side to be joined to the crown section 16 than on the opposite side (with the flat face 26D having a wider width than the flat face 26U in this case). An example of such a cross-sectional profile is a substantially trapezoidal shape (see Fig. 13). When the covered cord member 26 is formed in the covering cord forming process with a trapezoidal cross-sectional profile, snaking of the covered cord member 26 during winding onto the crown section 16 is suppressed, and the covered cord member 26 can be placed with high precision. Furthermore, joint surface area is efficiently secured since gaps are not liable to occur between the crown section 16 and the covered cord member 26. Since the flat face 26D has a wider width than the flat face 26U, sufficient joint surface area (joint strength) can be secured between the crown section 16 and the covered cord member 26. Furthermore, when joining other tire structuring members such as a tread onto the flat face 26D, sufficient joint surface area can be secured since gaps are not liable to occur between the flat face 26U and the tire structuring member. When the covering layer 29 is formed on the reinforcement layer 28 formed with the covered cord member 26, the covering resin material 90 in a molten or softened state readily spreads out over the flat face 26U, and the surface readily adopts a flattened profile. Configuration may also be made with heating the flat face 26D of the covered cord member 26 of trapezoidal cross-sectional profile, and then joining the covered cord member 26 by welding to the crown section 16 with the cord resin material 27 on the flat face 26D side in a molten or softened state. The covered cord member 26 of trapezoidal cross-sectional profile may also be joined to the crown section 16 by coating (or spraying) a bonding agent on the flat face 26D and joining the flat face 26D to the crown section 16 with the bonding agent.

In the first exemplary embodiment configuration is made with the bonding layer formed on the outer peripheral face of the reinforcement cord 26A using the cord bonding layer apparatus 110, however the present invention is not limited thereto. An apparatus may be configured in which the bonding layer is formed on the outer peripheral face of the reinforcement cord 26A by cleaning the reinforcement cord 26A by degreasing in alkali, then cleaning by passing through an acid activation tank, followed by passing through a bonding agent tank containing a bonding agent, cleaning by electrolysis or immersion treatment, cleaning in hot water and then drying in dried hot air.

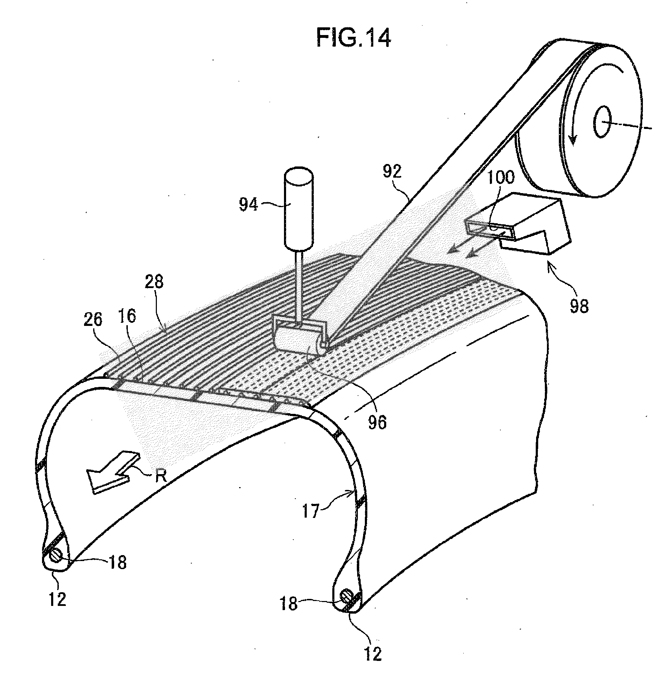

In the first exemplary embodiment configuration is made such that the molten or softened covering resin material 90 is extruded from the extruder 44 so as to cover the covering region with the covering resin material 90, however the present invention is not limited thereto. As shown in Fig. 14, configuration may be made in which a welding sheet 92 formed from a material of similar type to the covering resin material 90 is disposed on the covering region while being heated (heated such as by hot air, radiation heat, infrared radiation, or heated roller), and then pressed out with a flattening roller 96 lowered with a cylinder device 94 so as to be flattened out. Preferably the face of the welding sheet 92 that is to be bonded to the crown section 16 is heated and rendered into a molten or softened state in cases in which the welding sheet 92 is employed. The welding sheet 92 may also be placed while the portion of the crown section 16 where the welding sheet 92 is to be disposed is being heated and rendered molten or softened. Configuration may also be made such that the welding sheet 92 is heated and rendered molten or softened, and the welding sheet 92 is placed while the portion of the crown section 16 where the welding sheet 92 is to be disposed is being heated and rendered molten or softened. When such an approach is adopted there is intermixing of the molten or softened welding sheet 92 and the cord resin material 27 of the covered cord member 26, and after cooling and solidification the joint strength (weld strength) between the covering layer 29 formed by the welding sheet 92 and the crown section 16 is raised. In Fig. 14 the blowing outlet 100 of the hot air generator 98 is directed towards the bonding face of the welding sheet 92, and the welding sheet 92 is placed on the covering region of the crown section 16 while the bonding face of the welding sheet 92 is being melted or softened by the generated hot air.

In the first exemplary embodiment, configuration is made such that the covered cord member 26 is covered by the molten or softened covering resin material 90 after the reinforcement layer 28 has been formed by winding the covered cord member 26 on the crown section 16, however the present invention is not limited thereto. Configuration may be made such that embedded covered cord member 26 is covered by the molten or softened covering resin material 90 while the covered cord member 26 is being embedded in the crown section 16.

Furthermore, while a configuration is adopted in the first exemplary embodiment in which the covered cord member 26 is wound onto the crown section 16 and welding (adhesion) using heat or joining using a bonding agent is performed, the present invention is not limited thereto. Configuration may be made in which the crown section 16 is pre-formed with a spiral shaped groove and the covered cord member 26 fitted into the groove. In such a configuration there is high placement precision when winding the covered cord member 26 on the crown section 16 without the covered cord member 26 snaking. After the covered cord member 26 has been fitted into the groove, the periphery of the covered cord member 26 may be heated so as to weld together the covered cord member 26 and the crown section 16, or the covered cord member 26 and the crown section 16 may be welded together by fitting the pre-heated covered cord member 26 into the groove. Configuration may be made in which the covered cord member 26 that has been coated with a bonding agent is fitted into the groove, thereby joining together the covered cord member 26 and the crown section 16. Configuration may also be made with a thermoset material (for example a thermoset resin) employed as the frame resin material of the tire case 17. When a thermoset material is employed as the frame resin material, a method may be employed, as described above, in which a spiral groove is pre-formed in the crown section 16 (using molding or a cutting process) and the covered cord member 26 that has been coated in a bonding agent is fitted into the groove, thereby joining together the crown section 16 and the covered cord member 26 with a bonding agent.
A thermoset material may also be employed as the cord resin material 27 of the covered cord member 26. A bonding agent may be employed for joining to the crown section 16 when a thermoset material is employed as the cord resin material 27.
A thermoset material may also be employed as the covering resin material of the covering layer 29. A method may be adopted when a thermoset material is employed as the covering resin material in which a bonding agent is pre-coated on the crown section 16 and the covered cord member 26 and then covered over with the molten or softened covering resin material 90.

In the first exemplary embodiment configuration is made such that after the molten or softened covering resin material 90 has been applied to the winding region of the crown section 16 the covering resin material 90 is then left to cool naturally. However the present invention is not limited thereto and configuration may be made in which the covering resin material 90 is force cooled. Examples of force cooling methods include blowing with cold air, and directly cooling the molten or softened covering resin material 90 using a water-cooled cooling roller. The flatting roller 48 described above may also be employed as a cooling roller.

In the first exemplary embodiment configuration is made such that the tire case 17 is configured from the case section bodies 17A, however the present invention is not limited thereto and the tire case 17 may be integrally formed by using a mold, for example.

The tire 10 of the first exemplary embodiment is mounted at the bead sections 12 to the rim 20 such that an air chamber is formed between the tire 10 and the rim 20, in what is referred to as a tubeless tire, however the present invention is not limited thereto. As shown in Fig. 15, the tire 10 may also have a complete tube profile. Note that rim assembly for the complete tube profile tire illustrated in Fig. 15 is similar to that of the tubeless tire illustrated in Fig. 1.

In the first exemplary embodiment configuration is made in which the covered cord member 26 is spirally wound on the outer peripheral face of the crown section 16, however the present invention is not limited thereto. Configuration may be made with covered cord members 26 wound such that they are not continuous across the width direction.

Furthermore, in the first exemplary embodiment configuration is made in which the tread 30 is provided on the outer peripheral face of the covering layer 29, however the present invention is not limited thereto. Configuration may be made in which a separate tire structuring member is also provided on the outer peripheral face of the covering layer 29, for example the covered cord member 26 with molten or softened cord resin material 27 may be wound on the outer peripheral face of the covering layer 29, then covered with molten or softened covering resin material 90 so as to form a covering layer, such that layers of tire structuring member are stacked on the tire case 17.

The manufacturing sequence for the tire 10 is also not limited to the example of the first exemplary embodiment and may be changed as appropriate.

### Second Exemplary Embodiment

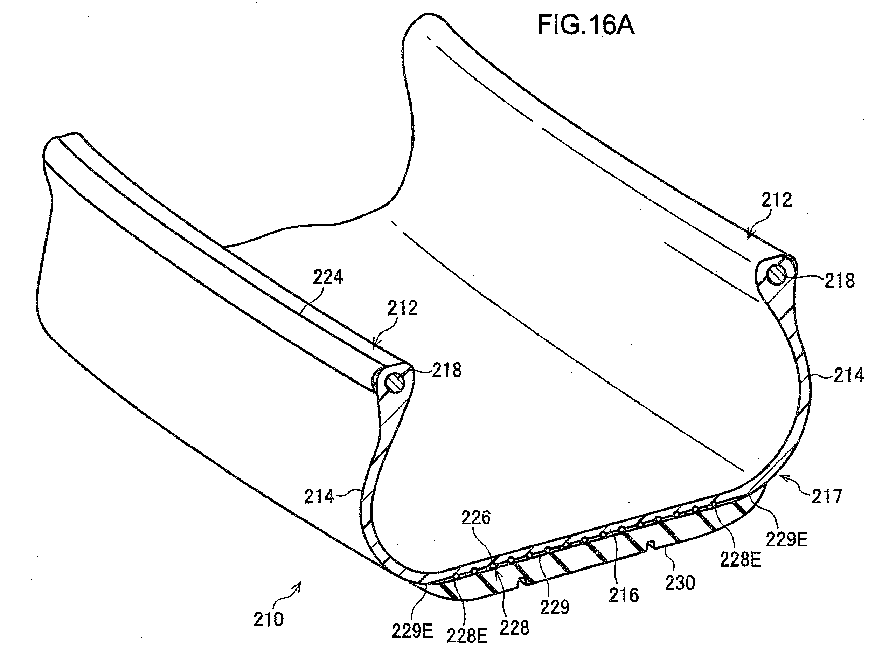

Explanation follows regarding a tire and tire manufacturing method of a second exemplary embodiment of the present invention, with reference to the drawings. As shown in Fig. 16A, a tire 210 of the present exemplary embodiment exhibits a cross-sectional profile substantially the same as that of a conventional ordinary rubber pneumatic tire.

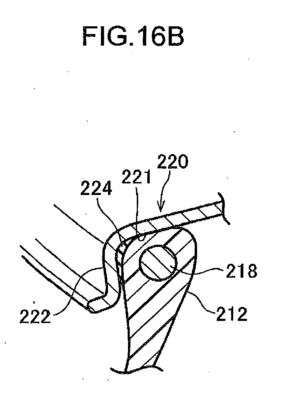

As shown in Fig. 16A, the tire 210 is equipped with a ring shaped tire case 217 (serving as an example of a tire frame member) configured by: a pair of bead sections 212 (see Fig. 16B) that make contact with a bead seat 221 and a rim flange 222 of a rim 220; side sections 214 that extend from the bead sections 212 towards the tire radial direction outside; and a crown section 216 (outer peripheral section) that connects together the tire radial direction outside edge of one of the side sections 214 and the tire radial direction outside edge of the other of the side sections 214.

The tire case 217 of the present exemplary embodiment is formed from a single resin material, however the present invention is not limited thereto. Configuration may be made similarly to in a conventional ordinary rubber pneumatic tire, with different resin materials with particular characteristics employed for each of the sections of the tire case 217 (such as the bead sections 212, the side sections 214 and the crown section 216).
Reinforcement materials (such as fibers, cords, non-woven fabric or woven fabric made of a high polymer material or a metal) may be embedded in the tire case 217 (such as in the bead sections 212, the side sections 214 and/or the crown section 216) such that the tire case 217 is reinforced by the reinforcement material.

Similar materials can be employed as a resin material to those of the first exemplary embodiment.

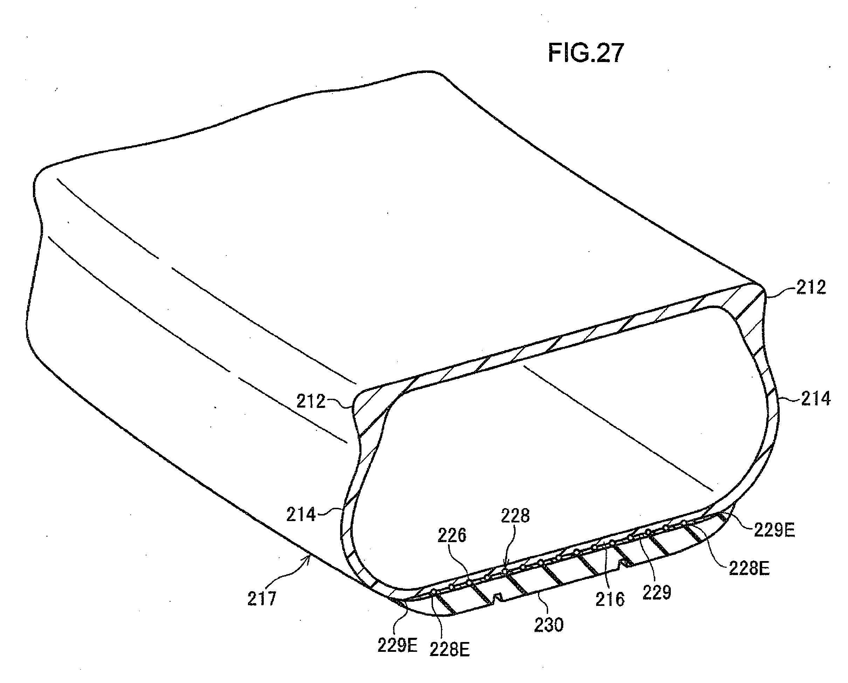

A circular ring shaped bead core 218 formed from a steel cord is embedded in each of the bead sections 212 of the present exemplary embodiment, similarly to in a conventional ordinary pneumatic tire. However, the present invention is not limited thereto, and the bead core 218 may be formed from a material other than steel cord, such as an organic fiber cord, an organic fiber cord covered in resin, or a hard resin. The bead core 218 may also be omitted as long as sufficient rigidity of the bead sections 212 is achieved and no problems arise in fitting to the rim 220 (see Fig. 27).

As shown in Fig. 16B, in the present exemplary embodiment the contact portion of the bead sections 212 to the rim 220, at least the portion that makes contact with the rim flange 222 of the rim 220, is formed from a circular ring shaped seal layer 224 (serving as an example of a sealing section) formed from a material having superior sealing ability (a high sealing performance material) to the resin material (frame resin material) employed for forming the tire case 217, such as a rubber. The seal layer 224 may also be formed at the portion that makes contact with the bead seat 221.

Preferably a similar type of rubber to that employed on the bead section outer face of a conventional ordinary rubber pneumatic tire is used for the rubber for forming the seal layer 224. The rubber seal layer 224 may be omitted as long as sealing ability can be secured to the rim 220 by the resin material alone. Configuration may be made such that another type of resin material is employed having superior sealing ability to the frame resin material employed for forming the tire case 217.

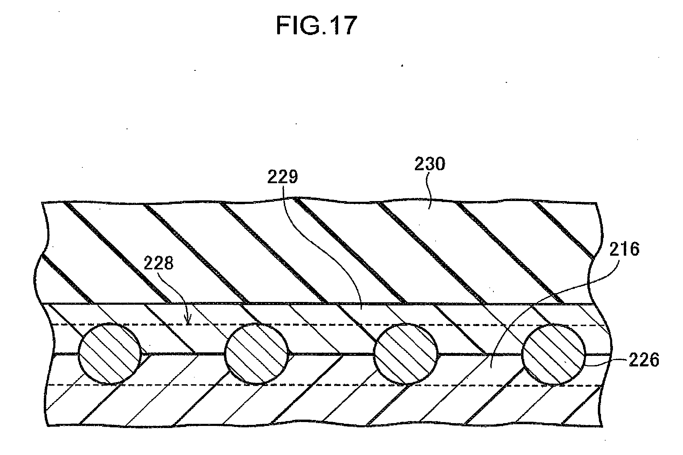

As shown in Fig. 16A and Fig. 17, a reinforcement layer 228 (shown by an intermittent line in Fig. 17) is formed by a portion (about half the diameter in the present exemplary embodiment) of a reinforcement cord 226 of higher rigidity than the resin material for forming the tire case 217 being embedded in and wound in a spiral shape on the crown section 216. The reinforcement layer 228 is covered with a covering layer 229 joined to the crown section 216. The covering layer 229 is formed from a covering resin material, and the two width direction edge portions 229E of the covering layer 229 are disposed to the width direction outside of the two width direction edge portions 228E of the reinforcement layer 228. Reference to width direction indicates the width direction of the tire case 217 and the tire 210, and reference to the two width direction edge portions 228E of the reinforcement layer 228 indicates the width direction outside edge portions of the reinforcement cord 226 at the width direction outermost side of the reinforcement cord 226 forming the reinforcement layer 228. In the present exemplary embodiment configuration is made such that the two width direction edge portions 229E of the covering layer 229 are positioned further to the width direction outside than the two width direction edge portions 228E of the reinforcement layer 228, namely the covering layer 229 covers a wider region of the crown section 216 than the region where the reinforcement layer 228 is formed. Accordingly a wide joining surface area between the crown section 216 and the covering layer 229 can be secured, and the joint strength between the crown section 216 and the covering layer 229 is raised.

As shown in Fig. 17, a portion (the lower portion in Fig. 17) of the outer peripheral face of the reinforcement cord 226 is embedded in the crown section 216 and makes close contact with the frame resin material of the crown section 216. The remaining portion (the upper portion in Fig. 17) of the outer peripheral face of the reinforcement cord 226 exposed from the crown section 216 is covered by the covering layer 229 and makes close contact with the covering resin material.

A mono-filament (single strand) such as of metal fiber or organic fiber, or a twisted multi-filament (twisted strands) of such fibers may be employed for the reinforcement cord 226. The present exemplary embodiment employs a steel cord of twisted steel fiber as the reinforcement cord 226. The reinforcement layer 228 is equivalent to a belt disposed on the outer peripheral face of a carcass of a conventional rubber pneumatic tire.

The outer peripheral face of the covering layer 229 is flat profiled, and a tread 230 configured from a material, for example from a rubber, with superior abrasion resistance characteristics to those of the frame resin material for forming the tire case 217 is provided on the outer peripheral face of the covering layer 229. The inner peripheral face of the tread 230 is profiled to follow the outer peripheral face of the covering layer 229 to achieve a state in which there are no gaps therebetween (a state in which air is not incorporated). The rubber employed in the tread 230 is preferably a similar type of rubber to the rubber employed in a conventional rubber pneumatic tire. Configuration may be made with a tread formed from another type of resin material with superior abrasion resistance characteristics to those of the frame resin material forming the tire case 217 provided in place of the tread 230. A tread pattern configured from plural grooves is formed in the tread 230 in the ground contact surface that contacts the road surface, similarly to in a conventional rubber pneumatic tire.

In the present exemplary embodiment, a thermoplastic material (for example a thermoplastic resin or a thermoplastic elastomer) is selected from resin materials to be employed as an example of the frame resin material for forming the tire case 217. In the present exemplary embodiment, for example, thermoplastic materials are also employed for the covering resin material for forming the covering layer 229.

### Tire Building Machine

Explanation follows regarding a tire building machine for the tire 210 of the present exemplary embodiment.

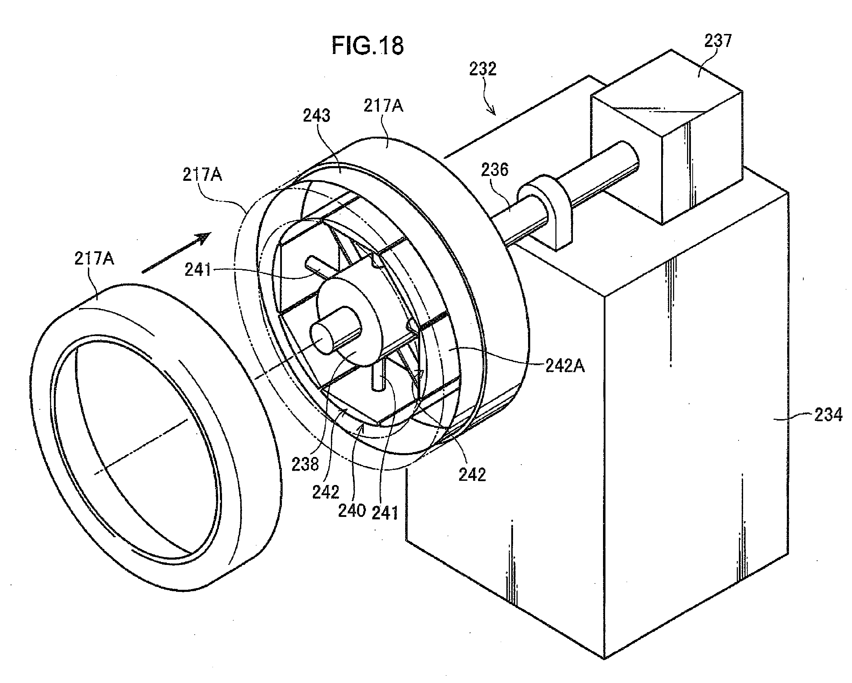

Fig. 18 illustrates a perspective view of relevant portions of a building machine 232 employed to form the tire 210. The building machine 232 includes a horizontally disposed shaft 236, a geared motor 237 for rotating the shaft 236, and a base 234 placed on the floor surface for supporting the geared motor 237.

The tire support section 240 for supporting the tire case 217 is provided on the end side of the shaft 236. The tire support section 240 is equipped with a cylinder block 238 fixed to the shaft 236, and with plural cylinder rods 241 provided at even spacings around the circumferential direction of the cylinder block 238 and extending towards the radial direction outside.

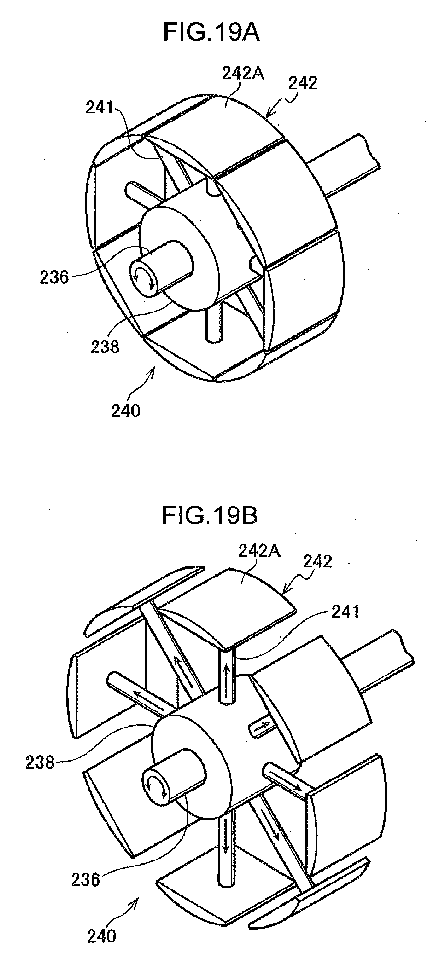

Tire support plates 242 are provided at the leading ends of the cylinder rods 241. Each of the tire support plates 242 has a circular arc shaped face 242A on the outside face provided with a radius of curvature substantially that of the tire case inner face. Fig. 18 and Fig. 19A illustrate the cylinder rods 241 in a state in which there is the minimum amount protruding, and Fig. 19B illustrates the cylinder rods 241 in a state in which there is the maximum amount protruding. The cylinder rods 241 are all coupled together so as to enable each to be moved in the same direction to give the same projection amount.

As shown in Fig. 19, an extruder 244 is disposed in the vicinity of the building machine 232 for extruding welding thermoplastic material in order to integrate together the section bodies when the tire case 217 is formed from plural sections (the tire case 217 of the present exemplary embodiment is formed by welding and integrating together case section bodies 217A split into left and right halves). The extruder 244 is equipped with a nozzle 246 for ejecting the molten welding thermoplastic material 253 downwards. The outlet section of the nozzle 246 has a substantially rectangular shape, and the welding thermoplastic material 253 is extruded in a strip shape with a substantially rectangular shaped cross-sectional profile. The welding thermoplastic material 253 is preferably the same type of material as the frame resin material for forming the tire case 217 and is particularly preferably the same material. However a different type of material may be employed as long as welding can be achieved. In the present exemplary embodiment the frame resin material for forming the tire case 217 and the welding thermoplastic material 253 are the same type of material.

In the vicinity of the nozzle 246 are disposed a flatting roller 248, for pressing against the welding thermoplastic material 253 that has been that has been applied to the case section bodies 217A of the tire case 217, and a cylinder device 250 for moving the flatting roller 248 up or down. The cylinder device 250 is supported through a frame, not shown in the drawings, from a support pillar 252 of the extruder 244. The extruder 244 is capable of moving along guide rails 254 disposed on the floor in a direction parallel to the shaft 236 of the building machine 232.

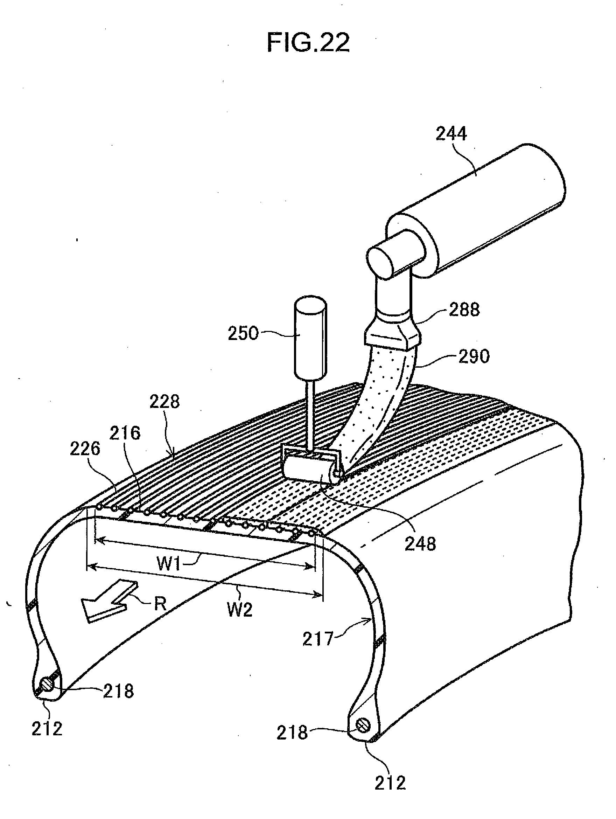

With the extruder 244 it is possible to change the nozzle 246 over to a nozzle 288. The nozzle 288 has an outlet section of a substantially rectangular profile that is wider than the nozzle 246. Accordingly a strip shape of covering resin material 290 of wider width (for example a width of about 20mm in the present exemplary embodiment) than the welding thermoplastic material 253 can be extruded in a molten or softened state by changing over the material inside the extruder 244 to a covering resin material (see Fig. 22). The covering resin material 290 is a material for covering the reinforcement cord 226 embedded in the crown section 216 in a covered cord member winding process, described later, and for welding to the frame resin material at the periphery of the reinforcement cord 226. Therefore the covering resin material 290 is preferably a similar type of material to the frame resin material forming the tire case 217 and particularly preferably the same material. However, a different type of material may be employed as long as welding can be achieved. In the following description reference to a covering resin material without an appended reference numeral indicates material in a solid state, and reference to the covering resin material 290 appended with the reference numeral is used to indicate material in a molten or softened state.

A cord feeder device 256 for feeding the reinforcement cord 226 to form the reinforcement layer 228 is movably mounted to the guide rails 254.

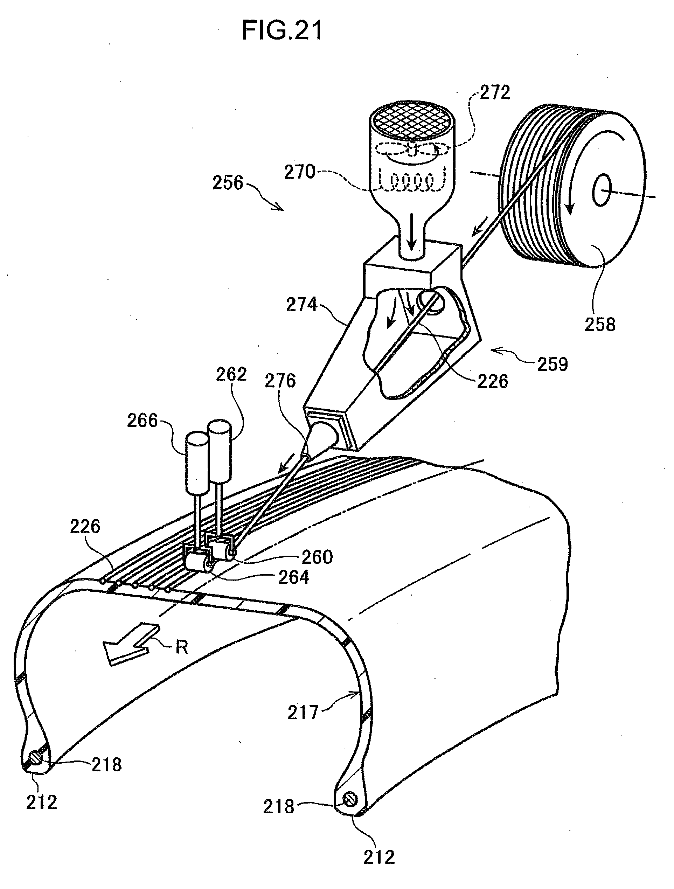

As shown in Fig. 21, the cord feeder device 256 is equipped with: a reel 258 wound with the reinforcement cord 226; a cord heating device 259 disposed at the cord conveying direction downstream side of the reel 258; a press roller 260 disposed further to the downstream side in the reinforcement cord 226 conveying direction; a first cylinder device 262 for moving the press roller 260 in the direction so as to make contact with or move away from the outer peripheral face of the crown section 216 of the tire case 217; a cooling roller 264 disposed at the reinforcement cord 226 conveying direction downstream side of the press roller 260; and a second cylinder device 266 for moving the metal fabricated cooling roller 264 in the direction so as to make contact with or move away from the outer peripheral face of the crown section 216. The surfaces of the press roller 260 and the cooling roller 264 are coated with a fluoro resin (Teflon (registered trademark) in the present exemplary embodiment) to suppress molten or softened thermoplastic material from adhering. The press roller 260 and the cooling roller 264 are configured to rotate following the tire case 217. In the present exemplary embodiment the cord supply device 256 is configured with two rollers, the press roller 260 and the cooling roller 264, however the present invention is not limited to such a configuration and configuration may be made with only one thereof (namely with a single roller).

The cord heating device 259 is equipped with a heater 270 and a fan 272 for generating hot air and a heating box 274 with an internal space supplied with the hot air, with the reinforcement cord 226 passing through the internal space of the heating box 274, and a discharge outlet 276 provided at the leading end of the heating box 274 from which the heated reinforcement cord 226 is discharged.
The cord supply device 256 is capable of movement along the axial direction of the tire case 217.

Explanation follows regarding a manufacturing method of the tire 210 of the present exemplary embodiment.

### Tire Case Building Process

(1) As shown in Fig. 18, first the two case section bodies 217A are disposed at the outer peripheral side of the tire support section 240 in its compressed diameter state, aligned facing each other and abutting, and with a cylindrical shaped tire inner face support ring 243 formed from thin sheet metal (for example from sheet steel of 0.5mm thickness) disposed at inside portions of the two case section bodies 217A (in order to show inside portions one of the case section bodies 217A is shown in a removed state in Fig. 18).

The external diameter of the tire inner face support ring 243 is set at substantially the same dimension as the inner diameter of the outer peripheral portion of the case section bodies 217A, such that the outer peripheral face of the tire inner face support ring 243 is in close contact with the inner peripheral face of the outer peripheral sections of the case section bodies 217A. Accordingly, projections and indentations at the joint portion (the welding thermoplastic material 253), caused by (and in a reciprocal profile to) indentations and projections occurring at the outer periphery of the tire support section 240 due to gaps arising between tire support plates 242, can be suppressed from occurring. Indentations and projections can also be suppressed from arising due to gaps between the tire support plates 242 in laying-up materials (the tire case 217, the tread 230, and other tire building materials (such as, for example, a belt reinforcement layer)). Namely, indentations and projections can be suppressed from arising in the laying-up materials at locations corresponding to gaps between the tire support plates 242 due to forces acting (such as tension and pressing forces) when laying up the laying-up materials. The tire inner face support ring 243 is easily insertable inside the case section bodies 217A by bending deformation due to being formed from thin sheet metal.

Then, as shown in Fig. 19B, the tire support section 240 is expanded in diameter such that the tire inner face support ring 243 is held by the plural tire support plates 242 from the inside.

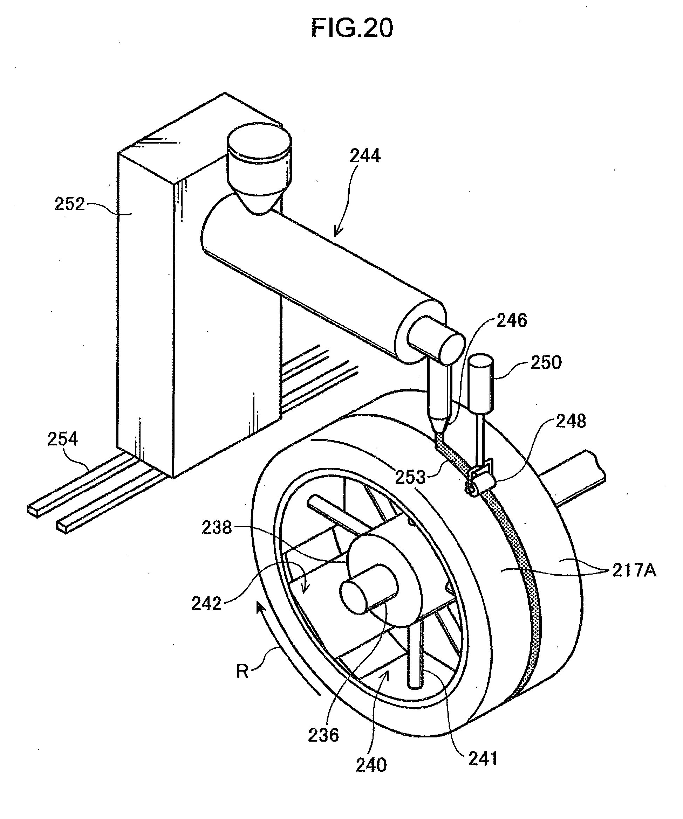

(2) Next the extruder 244 is moved such that the nozzle 246 is disposed above the abutting portions of the case section bodies 217A, as shown in Fig. 20. Then, while rotating the tire support section 240 in the direction of arrow R, the melted welding thermoplastic material 253 is extruded out from the nozzle 246 towards the joining location, applying the melted welding thermoplastic material 253 along the joining location. The applied welding thermoplastic material 253 is then flattened uniformly by the flatting roller 248 disposed at the downstream side, welding together the outer peripheral faces of the two case section bodies 217A. The welding thermoplastic material 253 hardens on cooling naturally, such that the one case section body 217A and the other case section body 217A are welded by the welding thermoplastic material 253, integrating these members together and forming the tire case 217.

### Cord Winding Process

(3) Then, as shown in Fig. 21, the extruder 244 is retracted and the cord feeder device 256 is disposed in the vicinity of the tire support section 240. The temperature of the heater 270 is then raised, and heated air at the periphery of the heater 270 is fed into the heating box 274 by moving air generated by rotating the fan 272.

The reinforcement cord 226 wound out from the reel 258 that was set in the above process is then fed into and heated in the heating box 274 whose internal space is heated by the hot air (for example, the temperature of the reinforcement cord 226 is heated to about 100 to 200 °C).

The heated reinforcement cord 226 passes through the discharge outlet 276 and is wound in a spiral shape at a constant tension on the outer peripheral face of the crown section 216 of the tire case 217 that is being rotated in the arrow R direction. When the heated reinforcement cord 226 makes contact with the outer peripheral face of the crown section 216, the frame resin material at the contact portion is melted or softened, and at least a portion of the heated reinforcement cord 226 is embedded in (enters) the crown section 216. A no-gap state is achieved at this stage between the frame resin material and the reinforcement cord 226, namely a close contact state, due to the heated reinforcement cord 226 being embedded in the molten or softened frame resin material.
Air is accordingly suppressed from being incorporated in the portions where the reinforcement cord 226 is embedded. Melting or softening of the frame resin material at the portions that contact the reinforcement cord 226 is promoted by heating the reinforcement cord 226 to a temperature higher than the melting point of the frame resin material of the tire case 217. The reinforcement cord 226 is thus more easily embedded in the outer peripheral face of the crown section 216, and air can be efficiently suppressed from being incorporated.

The tension applied to the reinforcement cord 226 is also regulated by applying braking to the reel 258 that is rotating following the rotation of the tire case 217. The reinforcement cord 226 can be suppressed from snaking and the amount by which the reinforcement cord 226 is embedded can also be adjusted by winding the reinforcement cord 226 while applying a constant tension in this manner. In the present exemplary embodiment tension is regulated by applying braking to the reel 258, however configuration may be made such that the tension is regulated by, for example, providing a tension regulation roller on the conveying path of the reinforcement cord 226.

Immediately after at least a portion of the heated reinforcement cord 226 has been embedded in the crown section 216, the reinforcement cord 226 is then embedded further by pressing with the press roller 260. The periphery of the embedded portion is flattened at this stage by the press roller 260 and any air that was incorporated during embedding the reinforcement cord 226 is also squeezed out.

Then the portions of the frame resin material that have been melted or softened by the heated reinforcement cord 226 are forcibly cooled by the cooling roller 264 provided on the downstream side of the press roller 260 pressing against the outer peripheral face of the crown section 216. The reinforcement cord 226 can accordingly be placed with good precision, due to cooling the frame resin material at the portions where the reinforcement cord 226 has been embedded before the reinforcement cord 226 moves, and deformation of the frame resin material at the portions where the reinforcement cord 226 has been embedded can be suppressed.

The embedding amount of the reinforcement cord 226 can be regulated by adjusting such factors as the temperature to which the reinforcement cord 226 is heated, the tension caused to act on the reinforcement cord 226, and the pressing force of the press roller 260. In the present exemplary embodiment the reinforcement cord 226 is embedded in the crown section 216 to about half its diameter.

The reinforcement layer 228 is formed at the outer peripheral side of the crown section 216 by winding the heated reinforcement cord 226 in a spiral shape while embedding the reinforcement cord 226 in the crown section 216 in this manner.

### Cord Covering Process

(4) Then, as shown in Fig. 22, the cord supply device 256 is retracted, and the extruder 244 is again disposed in the vicinity of the tire support section 240. The nozzle 246 of the extruder 244 is swapped over at this point to the nozzle 288, and the material for extruding from the nozzle 288 is swapped over to the covering resin material for forming the covering layer 229.

The nozzle 288 is then disposed above a width direction edge portion of a covering region W2 of wider width than a winding region W1 on the crown section 216 where the reinforcement cord 226 is wound (the reinforcement layer 228 placement region). In the present exemplary embodiment the width direction edge portions of the covering region W2 are set so as to be 2 to 10mm further to the width direction outside than the width direction edge portions of the winding region W1.

Molten or softened covering resin material 290 is then extruded from the nozzle 288 towards the covering region W2 on the crown section 216 while rotating the tire support section 240 in the arrow R direction, and the covering resin material 290 is applied along the circumferential direction. The reinforcement cord 226 is thereby progressively covered by the molten or softened covering resin material 290. Due to the molten or softened covering resin material 290 spreading out to a certain extent over the surface of the crown section 216 at this stage the surface approaches a flatter profile (smaller top to bottom height differences of undulations) than the surface of the crown section 216 that was caused to undulate by the reinforcement cord 226.

The covering amount of the molten or softened covering resin material 290 when covering the reinforcement cord 226 that has been embedded in the crown section 216 is adjusted such that the surface (entire surface) of the covering resin material 290 extends further to the radial direction outside than the tire case 217 radial direction outside edge portions of the reinforcement cord 226. The surface of the covering resin material 290 thereby adopts an even flatter profile by such adjustment.

The applied covering resin material 290 is then pressed out evenly by the flatting roller 248 disposed at the downstream side, and the covering resin material 290 is welded to the crown section 216. The covering resin material 290 is thereby suppressed from rising up away from the crown section 216. Also air can also be sufficiently suppressed from being incorporated at the periphery of the reinforcement cord 226 by any air between the crown section 216 or the reinforcement cord 226 and the covering resin material 290 being pressed out during pressing with the flatting roller 248. As a result, the portion of the reinforcement cord 226 embedded in the crown section 216 is in close contact with the frame resin material, and the remaining portion of the reinforcement cord 226 exposed from the crown section 216 is in close contact with the covering resin material 290. The covering layer 229 covering the reinforcement layer 228 is accordingly formed when the covering resin material 290 has solidified through natural cooling. The reinforcement cord 226 is accordingly covered by the frame resin material at the embedded portion in the crown section 216 and by the covering resin material of the covering layer 229, such that movement of the reinforcement cord 226 is suppressed.

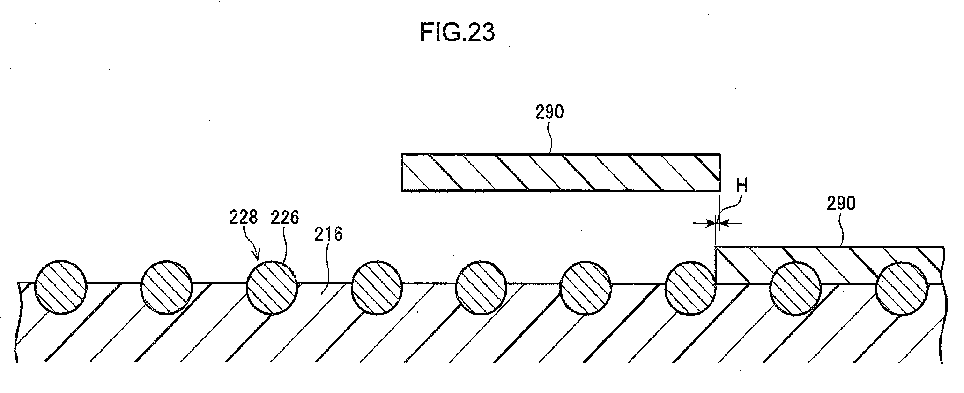

As shown in Fig. 23, an overlap may be configured between width direction edge portions when the molten or softened covering resin material 290 is being applied to the covering region W2 of the crown section 216. This overlap amount H is preferably 0.5mm to 5mm, and expenditure on the covering resin material 290 can be suppressed by making the overlap amount as small as possible.

The extruder 244 that was employed for the tire case building process is employed in the present process, however the present invention is not limited thereto, and an extruder dedicated to the present process may be fabricated and employed. However, compared to fabricating a new extruder a cost saving can be achieved by employing the extruder 244 that was employed for the tire case building process and swapping over some of the components.

### Surface Treatment Process

(5) The extruder 244 is then retracted, and a buffering device, not shown in the drawings, is disposed in the vicinity of the tire support section 240. Then, while rotating the tire support section 240 in the arrow R direction, the tread joining surface (including the outer peripheral face of the covering layer 229) of the tire case 217 formed with the covering layer 229 for joining to the tread 230 (described in detail later) is machined to adjust the external profile so as to achieve uniformity along the circumferential direction and the width direction, while also performing surface treatment to form fine indentations and projections (including grooves) in the surface. The fine indentations and projections here are provided to give an anchor effect when the tread 230 is joined to the tread joining surface with a bonding agent in the subsequent process. Namely, while in the present exemplary embodiment there are the fine indentations and projections formed on the tread joining surface there is no limitation thereto. The tread joining surface may be formed in any manner that enables an anchor effect to be exhibited.

When no covering layer 229 is provided there is a problem that surface treatment of the tread joining surface cannot be performed due to the reinforcement cord 226 being exposed from the crown section 216. There is an improvement in this respect due to the reinforcement layer 228 configured by the reinforcement cord 226 being covered by the covering layer 229. Furthermore, the covering layer 229 is formed with the covering amount of the covering resin material 290 adjusted such that the surface (entire surface) of the covering resin material 290 is further to the radial direction outside than the tire case 217 radial direction outside end portions of the reinforcement cord 226. Namely, since a thickness is secured between the covering layer 229 and the reinforcement cord 226, the reinforcement cord 226 is not liable to be machined away during surface treatment.

The reinforcement layer 228 is also covered over a wide region (the covering region W2 is made wider than the winding region W1) by the covering layer 229, and so the reinforcement cord 226 (the reinforcement cord at the width direction outermost side) is not machined away when machining the surface of the covering layer 229, facilitating surface treatment. There is also no concern of causing defects in the reinforcement cord 226.

(6) The pre-vulcanized strip shaped tread 230 is then wound once around the outer peripheral face of the tire case 217, and the tread 230 is bonded to the tread joining surface of the tire case 217 using a bonding agent, for example. Since the inner peripheral face of the tread 230 also has a flat profile similar to the outer peripheral face of the covering layer 229, gaps are not liable to be formed between the tread joining surface including the outer peripheral face of the covering layer 229 and the inner peripheral face of the tread 230, and air incorporation is thereby suppressed. Due to the fine indentations and projections being formed on the tread joining surface in the surface treatment process, the bonding agent enters into the fine indentations and projections and an anchor effect is exhibited, thereby raising the joint strength between the tread 230 and the tire case 217 formed with the covering layer 229.

Similar bonding agents can be employed to those of the first exemplary embodiment. The tread 30 can, for example, employ a pre-cured tread such as used in a conventional recycled tire. The present process is similar to the process of bonding a pre-cured tread to the outer peripheral face of a tire base in recycled tire manufacturing.

(7) Bonding, such as with an bonding agent, the seal layer 224 formed from pre-vulcanized rubber to the bead sections 212 of the tire case 217 thus completes the tire 210.

(8) Finally the diameter of the tire support section 240 is shrunk, the completed tire 210 is removed from the tire support section 240 and the tire inner face support ring 243 is removed from inside the tire by bending deformation.

### Operation

In the tire 210 of the present exemplary embodiment the reinforcement layer 228 is formed by embedding and winding the reinforcement cord 226 on the crown section 216 of the tire case 217 formed from the resin material (frame resin material), raising characteristics such as the resistance to punctures, cut resistance and the circumferential direction rigidity of the tire 210. By raising the circumferential direction rigidity of the tire 210 creep of the tire case 217 formed from the resin material (frame resin material) is prevented.

As shown in Fig. 2, the portion of the reinforcement cord 226 embedded in the crown section 216 is in close contact with the frame resin material, and the portion of the reinforcement cord 226 exposed from the crown section 216 is in close contact with the covering resin material of the covering layer 229. Air is accordingly suppressed from being incorporated at the periphery of the reinforcement cord 226. Movement of the reinforcement cord 226 due to force input during running is thereby suppressed and durability is improved.

Furthermore, as shown in Fig. 17, due to the reinforcement cord 226 for forming the reinforcement layer 228 having a portion embedded in the crown section 216, the surface of the crown section 216 is caused to undulate. If the tread 230 were to be placed on the surface of the crown section 216 that is now in an undulating state then gaps would be liable to form between the crown section 216 and the tread 230.
However, in the tire 210 of the present exemplary embodiment the reinforcement layer 228 is covered by the covering layer 229, and the outer peripheral face of the covering layer 229 has a flat profile. The inner peripheral face of the tread 230 also is profiled so as to follow the outer peripheral face of the covering layer 229. Accordingly, gaps are not liable to form between the tread 230 and the covering layer 229 and air can be suppressed from being incorporated between the covering layer 229 and the tread 230. Joining surface area (joint strength) can thereby be secured between the tread 230 and the covering layer 229, and delamination between the covering layer 229 and the tread 230 can be suppressed from occurring due to input, for example, of force during running, raising the durability of the tire 210.

In the tire 210, the reinforcement layer 228 is formed on the crown section 216 of the tire case 217, and the reinforcement layer 228 is covered by the covering layer 229 so as to suppress air from being incorporated at the periphery of the reinforcement cord 226. There is therefore a reduction in weight and no increased physical displacement width of the member in the thickness direction (tire radial direction) compared to configurations in which a reinforcement cord 226 is embedded in and covered by for example a cushion rubber provided to the crown section. The modulus of elasticity of the covering resin material (in its solid state) for forming the covering layer 229 is also higher than that of a cushion rubber so sufficient lateral force can be exhibited during running, giving excellent running performance.

When the frame resin material and the cord resin material are similar types of material, since the covering layer 229 is formed covering the reinforcement layer 228, good intermixing occurs between the frame resin material at the joining portion (the covered portion) and the covering resin material 290, thereby raising the joint strength between the crown section 216 and the covering layer 229.

The resistance to abrasion of the tire 210 is raised by the tread 230 that makes contact with the road surface being formed from a rubber material with superior abrasion resistance properties to those of the frame resin material.
Furthermore, due to the ring shaped bead cores 218 formed from a metal material being embedded in the bead sections 212, the tire case 217, namely the tire 210, is retained on the rim 220 with a similar robustness to that of a conventional rubber pneumatic tire.

The seal layer 224 formed from a rubber material with superior sealing properties to those of the frame resin material is also provided to the portions of the bead sections 212 that make contact with the rim 220, and so the sealing ability between the tire 210 and the rim 220 is raised. Air is accordingly further suppressed from leaking out from inside the tire than in cases in which sealing is between the rim 220 and the frame resin material. Rim fit-ability is also raised by providing the seal layer 224.

According to the structure of the tire 210 of the present exemplary embodiment, the tire case 217 formed from the frame resin material provides rigidity without using carcass plies widely employed in conventional rubber tires, and so a reduction in weight can be achieved compared with conventional rubber tires provided with carcass plies. With the structure of the tire 210 of the present exemplary embodiment the number of manufacturing processes during tire manufacture can also be reduced due to not using carcass plies like those of conventional rubber tires.

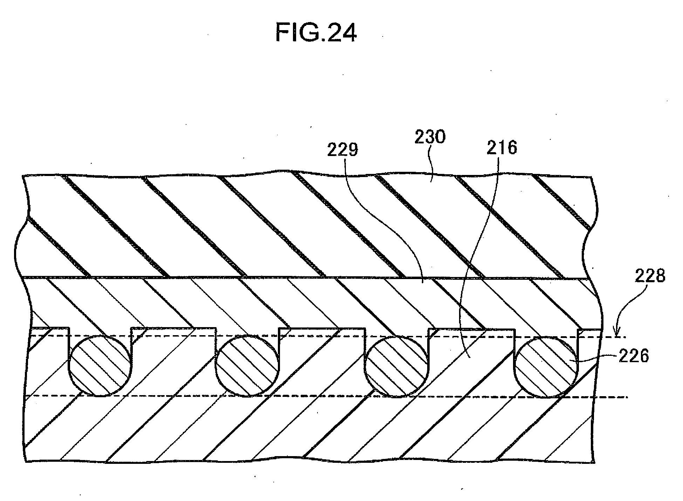

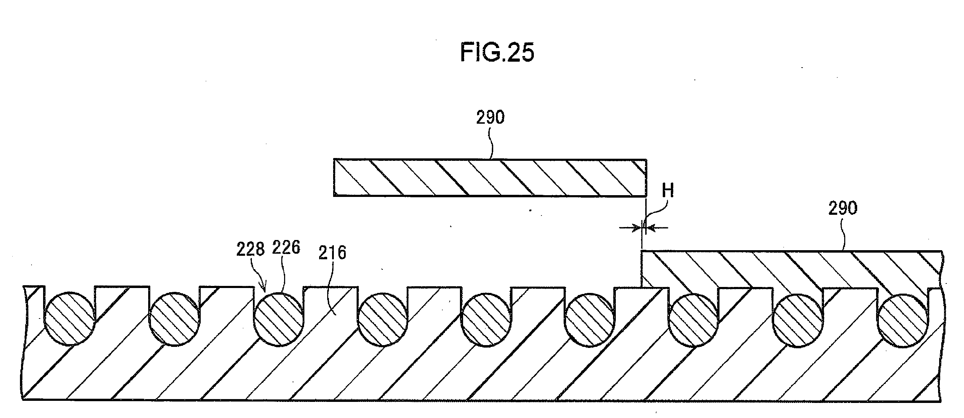

The second exemplary embodiment, as shown in Fig. 17, is configured such that a portion of the reinforcement cord 226 is embedded in the crown section 216. Fig. 24 shows the case (not according to the invention) where the whole of the reinforcement cord 226 is embedded in (enters) the crown section 216. In such cases the reinforcement cord 226 is completely embedded in the crown section 216 during the cord winding process, and then the reinforcement cord 226 is covered by the molten or softened covering resin material 290 in the cord covering process, as shown in Fig. 25. Adopting such an approach means that molten or softened covering resin material 290 enters into the embedding path traced when the reinforcement cord 226 is embedded, and makes close contact with the portion of the reinforcement cord 226 exposed from the crown section 216 (the upper portion in the figure). Air is accordingly suppressed from being incorporated at the periphery of the reinforcement cord 226. The covering resin material 290 also spreads out over the surface of the crown section 216 and a flat surface profile is achieved.

The second exemplary embodiment is configured such that the molten or softened covering resin material 290 is applied across the covering region W2 of the crown section 216 into which the reinforcement cord 226 has been embedded, however the present invention is not limited thereto. Configuration may be made such that the covering resin material 290 is placed when the portion to be covered by the covering resin material 290 (the frame resin material at the periphery of the reinforcement cord 226) has been pre-heated and is in a molten or softened state. The covering resin material 290 and the frame resin material forming the crown section 216 accordingly intermix with each other and weld together, raising the joint strength (weld strength) arising after cooling and solidification between the covering layer 229 and the crown section 216. Delamination accordingly is not liable to occur between the covering layer 229 and the crown section 216. For heating the portion to be covered by the covering resin material 290 heating may be performed by various methods such as, for example, by directly blowing hot air thereon, by radiation heating, by heating by directly pressing with a hot roller, or by heating through irradiation with infrared radiation.

The second exemplary embodiment is configured such that the covering resin material 290 of rectangular cross-sectional profile extruded from the nozzle 246 of the extruder 244 is wound along the circumferential direction in a spiral shape on the covering region W2 of the crown section 216, however the present invention is not limited thereto. A nozzle may be employed with an outlet to extrude the covering resin material 290 of a width similar to the overall width of the covering region W2 such that the covering region W2 is covered by the covering resin material 290 in a single pass. Such a wide mouthed nozzle may also be employed in the extruder 244 of the first exemplary embodiment.

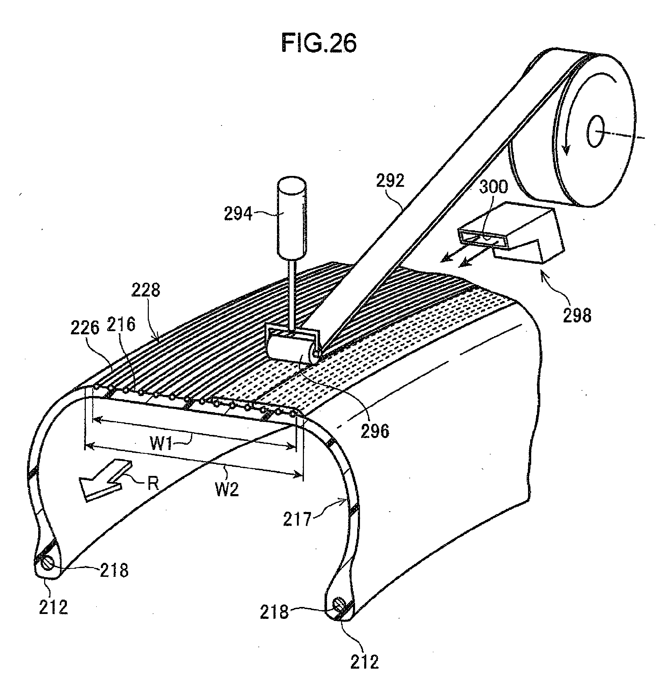

The second exemplary embodiment is also configured such that the molten or softened covering resin material 290 is extruded from the extruder 244 to cover the covering region W2, however the present invention is not limited thereto. Configuration may be made such that, as shown in Fig. 26, a welding sheet 292 formed from a material of similar type to the covering resin material 290 is placed on the covering region W2 while being heated (heated such as by hot air, radiation heat, infrared radiation, or heated roller), and then pressed out with a flattening roller 296 lowered with a cylinder device 294 so as to be flattened out. Preferably the face of the welding sheet 292 that is to be bonded to the crown section 216 is heated and rendered into a molten or softened state in cases in which the welding sheet 292 is employed. The welding sheet 292 may also be placed while the portion of the crown section 216 where the welding sheet 292 is to be disposed is being heated and rendered molten or softened. Configuration may also be made such that the welding sheet 292 is heated and rendered molten or softened, and the welding sheet 292 is placed while the portion of the crown section 216 where the welding sheet 292 is to be disposed is also being heated and rendered molten or softened. When such an approach is adopted there is intermixing of the molten or softened welding sheet 292 and the frame resin material configuring the crown section 216, and the joint strength (weld strength) after cooling and solidification between the covering layer 229 formed by the welding sheet 292 and the crown section 216 is raised. In Fig. 26 the blowing outlet 300 of the hot air generator 298 is directed towards the bonding face of the welding sheet 292, and the welding sheet 292 is placed on the covering region W2 of the crown section 216 while the bonding face of the welding sheet 292 is being melted or softened by the generated hot air.

In the cord winding process of the second exemplary embodiment the reinforcement cord 226 is heated, and the reinforcement cord 226 is embedded in the crown section 216 while the contact portion of the crown section 216 is being melted or softened by the heated reinforcement cord 226, however the present invention is not limited thereto. Configuration may be made such that the reinforcement cord 226 is not heated, the portion of the crown section 216 where the reinforcement cord 226 is to be embedded is heated, and the reinforcement cord 226 is embedded when the frame resin material of the heated portion has achieved a molten or softened state.
Configuration may also be made such that the portion of the crown section 216 where the reinforcement cord 226 is to be embedded is heated, and the heated reinforcement cord 226 is embedded when the frame resin material of the heated portion has achieved a molten or softened state. Air can be more efficiently suppressed from being incorporated at the periphery of the reinforcement cord 226 when both the portion of the crown section 216 where the reinforcement cord 226 is to be embedded and the reinforcement cord 226 are heated than in cases in which only one of the components is heated.
Various methods may be employed for heating the portion of the crown section 216 where the reinforcement cord 226 is to be embedded, such as heating by application of hot air, heating with radiation heat, heating with infrared radiation, or heating by pressing a heated roller thereon.

The second exemplary embodiment is configured such that after the molten or softened covering resin material 290 has been applied to the winding region W1 of the crown section 216 the covering resin material 290 is then left to cool naturally. However the present invention is not limited thereto and configuration may be made in which the covering resin material 290 is force cooled. Examples of force cooling methods include blowing with cold air, and directly cooling the molten or softened covering resin material 290 using a water-cooled cooling roller. The flatting roller 248 described above may also be employed as a cooling roller.

The second exemplary embodiment is configured such that after forming the reinforcement layer 228 by winding the reinforcement cord 226 on the crown section 216 while embedding the reinforcement cord 226, the molten or softened covering resin material 290 is then employed to cover the reinforcement cord 226, however the present invention is not limited thereto. Configuration may be made such that the reinforcement cord 226 is covered by the molten or softened covering resin material 290 while the reinforcement cord 226 is being embedded in the crown section 216.

The second exemplary embodiment is configured such that the crown section 216 is made molten or softened and the reinforcement cord 226 embedded, however the present invention is not limited thereto. Configuration may be made in which the crown section 216 is pre-formed with a spiral groove, and the reinforcement cord 226 is then embedded in the groove. Such a configuration enables the reinforcement cord 226 to be placed with high precision without snaking when winding the reinforcement cord 226 on the crown section 216.
Configuration may also be made with a thermoset material (for example a thermoset resin) employed as the frame resin material of the tire case 217. When a thermoset material is employed as the frame resin material, a method may be employed, as described above, in which a spiral groove is pre-formed in the crown section 216 (using molding with a mold or a cutting process) and the reinforcement cord 226 fitted into the groove and covered with the molten or softened covering resin material 290. A method may also be employed in which the crown section 216 and the reinforcement cord 226 are joined by a bonding agent by fitting the reinforcement cord 226 that has been coated with the bonding agent into the groove. A thermoset material may also be employed as the covering resin material of the covering layer 229. When a thermoset material is employed as the covering resin material a method may be adopted in which a bonding agent is pre-coated onto the crown section 216 and the reinforcement cord 226 and then covered over with the molten or softened covering resin material 290.

In the second exemplary embodiment configuration is made such that the tire case 217 is configured from the case section bodies 217A, however the present invention is not limited thereto and the tire case 217 may be integrally formed by using a mold, for example.

The tire 210 of the second exemplary embodiment is mounted at the bead sections 212 to the rim 220 such that an air chamber is formed between the tire 210 and the rim 220, in what is referred to as a tubeless tire, however the present invention is not limited thereto. As shown in Fig. 27, the tire 210 may also have a complete tube profile. Note that rim assembly for the complete tube profile tire illustrated in Fig. 27 is similar to that of the tubeless tire illustrated in Fig. 16.

In the second exemplary embodiment configuration is made in which the reinforcement cord 226 is spirally wound on the outer peripheral face of the crown section 216, however the present invention is not limited thereto. Configuration may be made with reinforcement cords 226 wound such that they are not continuous across the width direction.

Furthermore, in the second exemplary embodiment configuration is be made in which the tread 230 is provided on the outer peripheral face of the covering layer 229, however the present invention is not limited thereto. Configuration may be made in which a different tire structuring member is provided on the outer peripheral face of the covering layer 229. For example the outer peripheral face of the covering layer 229 may be melted or softened, and then a different reinforcement cord embedded in the outer peripheral face of the covering layer 229, then covered with molten or softened covering resin material 290 such that layers of tire structuring member are stacked on the crown section 216.

The manufacturing sequence for the tire 210 is also not limited to the example of the second exemplary embodiment and may be changed as appropriate.

In the present exemplary embodiment the relationship between the winding region W1 and the covering region W2 (the width direction edge portions of the covering region W2 being 2 to 10mm to the width direction outside of the width direction edge portions of the winding region W1) may be applied as appropriate to the first exemplary embodiment. The overlap amount H during application of the covering resin material 290 to the crown section 216 in the present exemplary embodiment (overlapping width direction edge portions with each other by 0.5mm to 5mm) may also be applied as appropriate to the first exemplary embodiment.

### Third Exemplary Embodiment

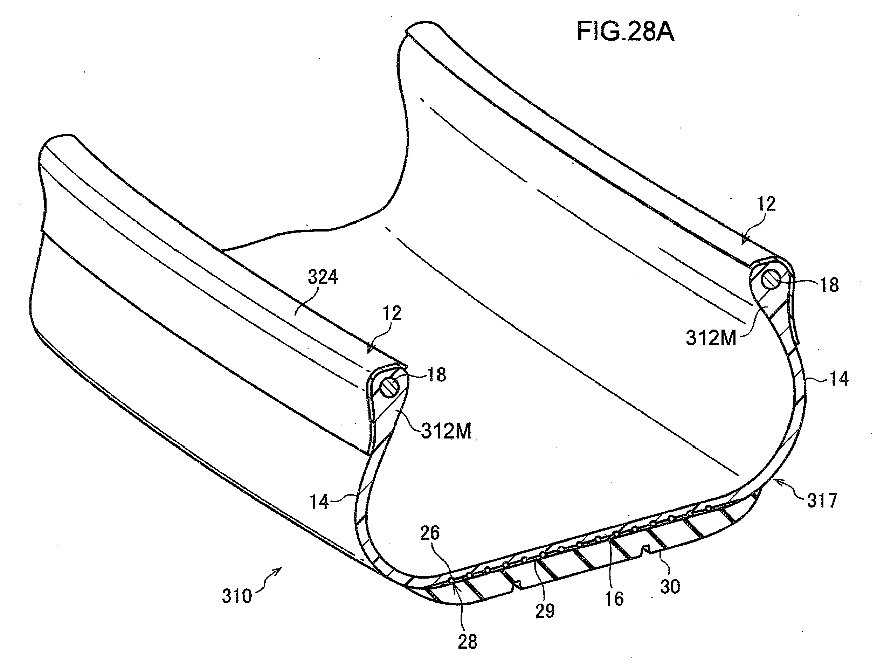

Explanation follows regarding of a tire and tire manufacturing method of a third exemplary embodiment of the present invention, with reference to the drawings. As shown in Fig. 28A, a tire 310 of the present exemplary embodiment has a similar construction to that of the tire 10 of the first exemplary embodiment, however a resin chafer 324 is employed in place of the seal layer 24 employed in the tire 10. Other portions of the configuration are similar to those of the first exemplary embodiment and so the same reference numerals are appended and further explanation thereof is omitted.

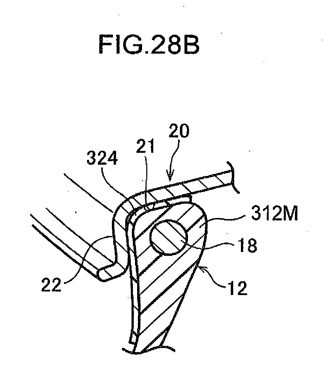

The tire 310 is equipped with a ring shaped tire case 317 (serving as an example of a tire frame member) formed from a frame resin material and configured by: a pair of bead sections 12 (see Fig. 28B) that make contact with a bead seat 21 and a rim flange 22 of a rim 20; side sections 14 that extend from the bead sections 12 towards the tire radial direction outside; and a crown section 16 (outer peripheral section) that connects together the tire radial direction outside edge of one of the side sections 14 and the tire radial direction outside edge of the other of the side sections 14. The tire 310 is also provided with a reinforcement layer 28, a covering layer 29 and a tread 30 on the radial direction outside of the crown section 16.

The tire case 317 is formed from circular ring shaped case section bodies 317A (frame structuring members) each formed in the same shape such as by molding in a mold with a bead section configuring portion 312M for covering the bead core 18 of one of the bead sections 12, one of the side sections 14 and a half-width crown section 16 integrated together. The case section bodies 317A are aligned to face each other and are joined together along the tire center CL. The tire case 317 is not limited to being formed by joining together two members, and may be formed by joining together three or more members, or may be formed as a single body including the pair of bead sections 12, the pair of the side sections 14 and the crown section 16.

As shown in Fig. 28A, the resin chafer 324 is formed on a side surface of the bead sections 12 so as to make contact with the rim flange 22. The resin chafer 324 is formed by injection molding a chafer resin material.

The case section bodies 317A are formed from a resin material (frame resin material). A similar resin material to that employed in the first exemplary embodiment can be employed as the resin material in the present exemplary embodiment. The case section bodies 317A can be formed, for example, by vacuum molding, pressure molding, or injection molding, melt-casting. Manufacturing processes can accordingly be greatly simplified in comparison to molding (vulcanization) in rubber, and the time for molding can also be shortened.
In the present exemplary embodiment the case section bodies 317A are formed with left-right symmetry, namely one of the case section bodies 317A is the same shape as the other of the case section bodies 317A. This has the advantage of allowing the case section bodies 317A to be formed with a single type of mold.

In the present exemplary embodiment the contact portion of the bead sections 12 to the rim 20, at least the portion that makes contact with the rim flange 22 of the rim 20, is formed with the circular ring shaped resin chafer 324 formed from a material having superior sealing ability (gas sealing performance) to the frame resin material forming the tire case 317. The modulus of elasticity of the resin chafer 324 is preferably the modulus of elasticity of the tire case 317 or lower, and more preferably 70% of the modulus of elasticity of the tire case 317 or lower. The modulus of elasticity of the resin chafer 324 is particularly preferably 50% of the modulus of elasticity of the tire case 317 or lower. When a resin with excellent abrasion resistance is employed as the chafer resin material for the resin chafer 324 the modulus of elasticity of the resin chafer 324 is even more preferably 25% of the modulus of elasticity of the tire case 317 or lower.
The tire case 317 and the resin chafer 324 can be formed by various resin materials with excellent rigidity and sealing performance.

The resin chafer 324 may extend to the portion that contacts the bead seat section 21, and may also extend to the tire inside (tire inside face).

In the present exemplary embodiment, as an example, a thermoplastic material (such as for example a thermoplastic resin or a thermoplastic elastomer) is selected from resin materials as the frame resin material for forming the tire case 317. A thermoplastic material (such as for example a thermoplastic resin or a thermoplastic elastomer) is also, as an example, selected from resin materials as the chafer resin material for forming the resin chafer 324.

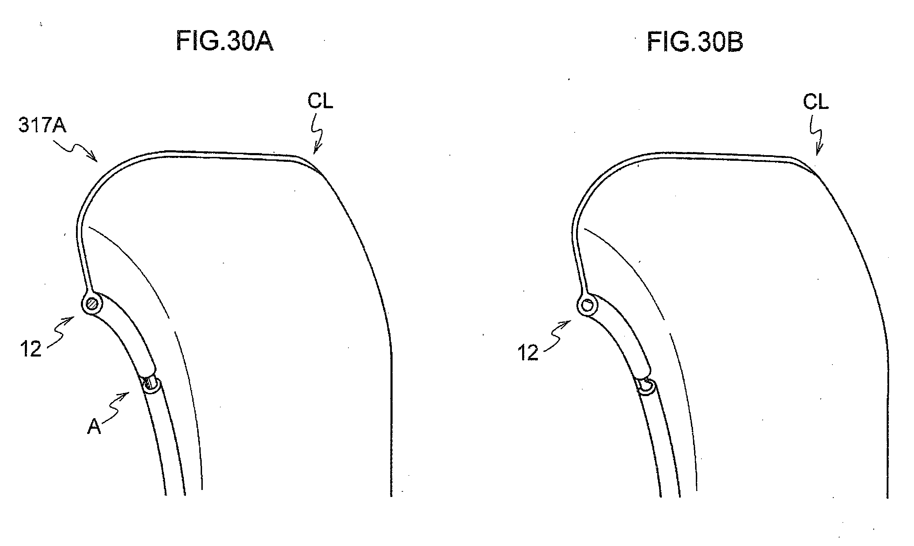

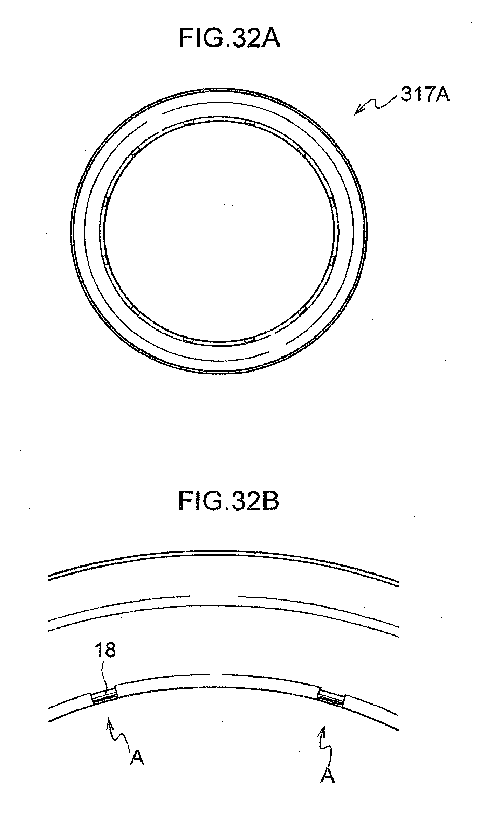

Explanation follows regarding a manufacturing method of the tire 310 of the present exemplary embodiment. In the following explanation the case section bodies 317A are formed by injection molding (see Figs. 30 to Fig. 32), the resin chafers 324 are further produced by injection molding the chafer resin material onto the case section bodies 317A, and then the two case section bodies 317A are aligned facing each other and joined at the tire center.

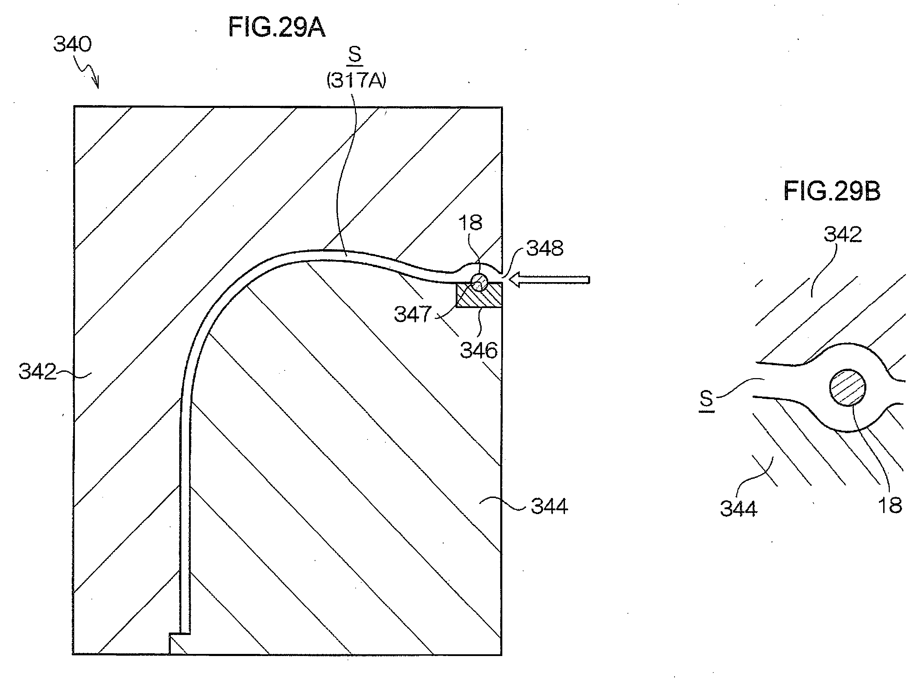

In the present exemplary embodiment a mold 340 is employed, as shown in Fig. 29A and Fig. 29B. The mold 340 includes an outer mold 342 for molding the tire outside face and an inner mold 344 for molding the tire inside face, such that the case section bodies 317A can be formed from the bead sections 12 (see Fig. 30A and Fig. 30B) to the tire center CL (see

Fig. 30A and Fig. 30B). Bead core fixing jigs 346 are employed in the inner mold 344 and the jigs 346 are provided placed in advance in set positions. A tire case shaped cavity S (space) is formed between the outer mold 342 and the inner mold 344.

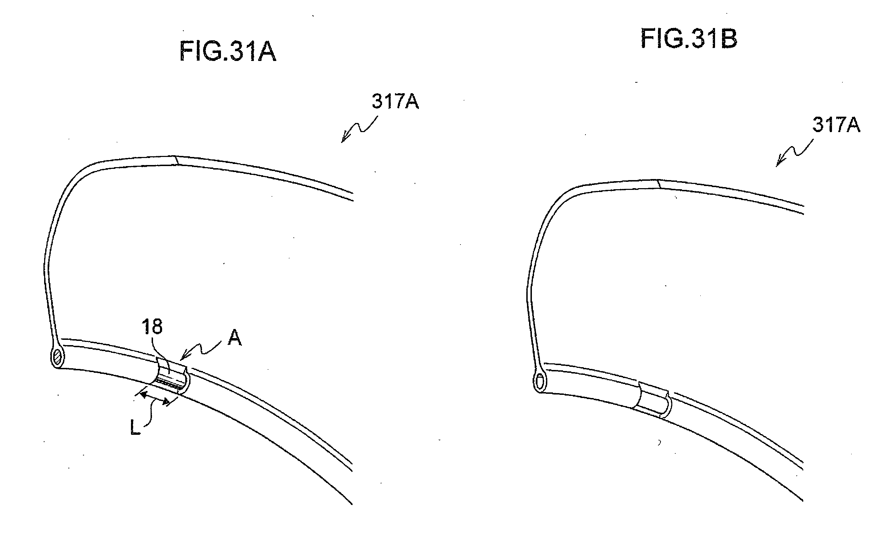

As shown in Fig. 31A and Fig. 31B, the contact length L of the jigs 346 to the bead core 18 along the tire circumferential direction, namely the length L along the tire circumferential direction of regions A at the tire inside of the case section bodies 317A where the resin material (frame resin material) is not present, is preferably 20mm or less. There is thus no concern of rupture nucleation occurring.

When the contact length L of the jigs 346 to the bead core 18 along the tire circumferential direction is 15mm or less then stress is not liable to be concentrated in the case section bodies 317A. Such an effect is more readily achieved when the length L is 5mm or less. The contact length L is preferably 1mm or longer from the perspective of the strength of the jigs 346.

In the present exemplary embodiment, each of the jigs 346 are formed from a magnetic member. There are 12 individual jigs 346 disposed at even intervals along the bead core housing location.
A recess portion 347 (see Fig. 29A) is formed in each of the jigs 346 to as to correspond to the dimensions of the bead core 18. A portion of the bead core 18 enters into the recess portion 347 when the bead core 18 is disposed in the mold 340, such that the bead core 18 is in a supported state from the tire inside. As a result the bead core 18 is in a state in which movement towards the tire inside direction is restricted, and movement in the up-down direction (the tire radial direction) is also restricted.

As shown in Fig. 29A, a gate (resin pouring path) 348 of the mold 340 is formed such that frame resin material in a molten state passes through the gate 348 at the tire outside of the bead core 18 with the bead core 18 in an inserted state in the recess portions 347. The gate 348 is a disk gate with a ring shaped opening, and the cavity S is formed as a hollow circular disk shape in communication with the ring shaped gate 348. The gate 348 may be configured as a pin gate, however a disk gate is preferable from the perspective of formability.

In the present exemplary embodiment, first the mold 340 is opened, the tire inside portion of the bead core 18 is inserted into the recess portion 347 of each of the jigs 346, and the mold 340 closed up. The bead core 18 is formed from a body with magnetic properties so as to enable magnetic attachment. Melted frame resin material is then poured into the mold 340 from the gate 348, and the case section body 317A is formed by injection molding.

During pouring the frame resin material is poured from the gate 348 through between the bead core 18 and the outer mold 342 at the positions where the jigs 346 are provided, and so the bead core 18 is pressed from the tire outside towards the tire inside. The moving force bearing on the bead core 18 can accordingly be sufficiently supported by the jigs 346. It is thus possible to pour the melted frame resin material with the jigs 346, for preventing displacement of the bead core 18, in a state in which there is no contact of the jigs 346 to the bead core 18 from the tire outside.

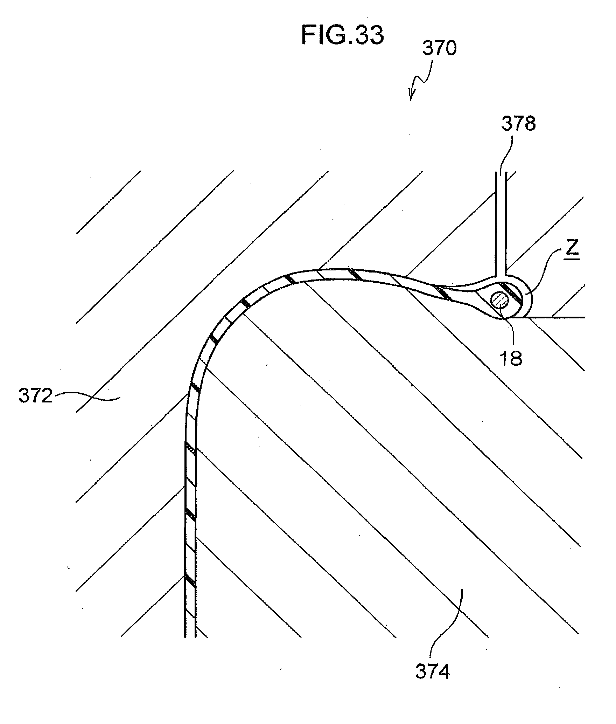

The case section body 317A manufactured with the bead core 18 held in this manner is then removed from the mold 340, and as shown in Fig. 33, the case section body 317A is housed in a mold 370 for injection molding (insert molding) and the mold 370 closed up. The mold 370 is configured by an outer mold 372 and an inner mold 374, and a gate 378 is formed in the outer mold 372 for pouring the chafer resin material. When the case section body 317A is housed inside the mold 370 and the mold 370 has been closed a structure results in which there is a space Z for forming the resin chafer 324 of a set shape formed inside a cavity that is in communication with the gate 378. Gas escape holes (not shown in the drawings) are also formed in the mold 370 for expelling air from inside the cavity when the chafer resin material is poured into the cavity.

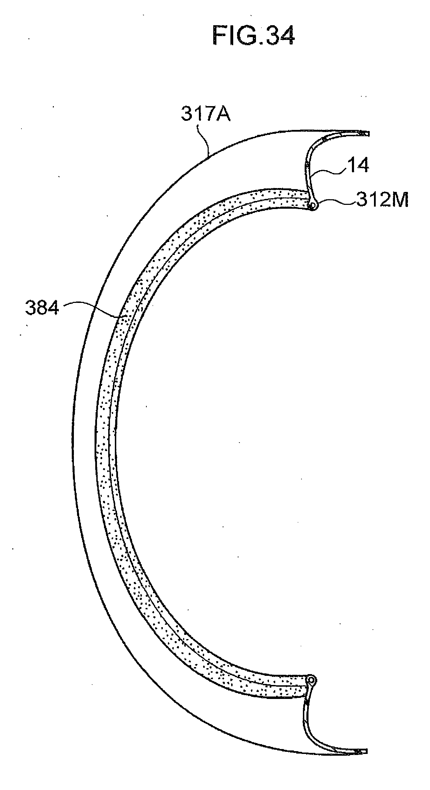

In the present exemplary embodiment the case section body 317A is housed in the injection molding mold 370, the mold 370 closed, and then the chafer resin material poured from the gate 378 and vulcanize molding performed. The resin chafer 324 is accordingly formed to the case section body 317A, as shown in Fig. 34.

The method for joining together the case section bodies 17A of the first exemplary embodiment is then employed to join together the case section bodies 317A, forming the tire case 317.
Note that the case section bodies 317A may be joined together first and then the resin chafer 324 formed.

Then the reinforcement layer 28, the covering layer 29 and the tread 30 are formed on the tire case 317 by similar methods to those of the first exemplary embodiment. This completes manufacture of the tire 310 (see Fig. 28A).

As explained above, in the present exemplary embodiment the resin chafer 324 is formed by injection molding resin material (frame resin material) onto the bead section configuring portion 312M of the tire case 317. The resin chafer 324 accordingly makes rim contact when the tire is assembled to the rim, and air is not liable to escape from between the bead sections 12 and the rim 20 even when air is filled in the tire 310. There is accordingly high internal pressure retaining ability even though the tire case 317 is formed from a resin material (frame resin material).

The side sections 14 and the tread section (the crown section 16) are also formed to the tire case 317 and the two case section bodies 317A are joined together along the tire center CL using a welding thermoplastic material (not shown in the drawings). Tire strength is accordingly efficiently raised.
The resin chafer 324 also extends to the tire inside (tire inside face) of the bead sections 12. There is accordingly less concern of the edge of the resin chafer 324 peeling away during rim assembly than for cases in which the resin chafer 324 is only provided to the tire outside of the bead sections 12.

When the case section bodies 317A are manufactured melted frame resin material is poured into the cavity with the bead core 18 in a contact state with the jigs 346 from the direction that will be at the tire inside. Namely, it is thus possible to pour the melted frame resin material with the jigs 346 for preventing displacement of the bead core 18 in a state in which the jigs 346 do not contact the bead core 18 from the tire outside. According the regions A, where the jigs 346 were in contact with the bead core 18 such that there is no frame resin material present and the bead core 18 is exposed, are not formed at all on the tire outside of the case section bodies 317A. There is accordingly frame resin material present spanning across every location that will make contact with the rim 20, facilitating securing sufficient air retention ability when assembled to a rim.

There are regions A formed at the tire inside of the case section bodies 317A where the jigs 346 were in contact with the bead core 18 such that there is no solidified frame resin material present and the bead core 18 is exposed. However, air retention ability can be maintained when assembled to a rim even with a relatively large dimension for the regions A. Jig dimensions and shape are accordingly achieved capable of securing sufficient ability to prevent rupturing of the frame resin material at the periphery of the bead core during knocking out, and also capable of sufficiently suppressing displacement of the bead core 18 during tire molding. Not only is displacement of the bead core 18 suppressed but deformation of the bead core 18 due to pressure applied thereto during molding can also be prevented.
Such an advantageous effect is obtained even when high pressure pouring is employed for injection molding when pouring the melted frame resin material.

The bead core 18 is readily retained by the jigs 346 since the jigs 346 are formed from magnets in the present exemplary embodiment. Configuration may be made employing a jig that is covered with a shielding member to stop magnetic force being dissipated in directions other than the direction of the bead core 18.

The jigs 346 are disposed at plural locations along the bead core housing location. The positioning precision of the bead core 18 can accordingly be further raised.

When pouring the frame resin material the frame resin material is poured between the bead core 18 and the outer mold 342 for molding the tire outside. The bead core 18 is accordingly pressed from the tire outside towards the tire inside during pouring. The movement force bearing on the bead core 18 can accordingly be sufficiently supported with the jigs 346.

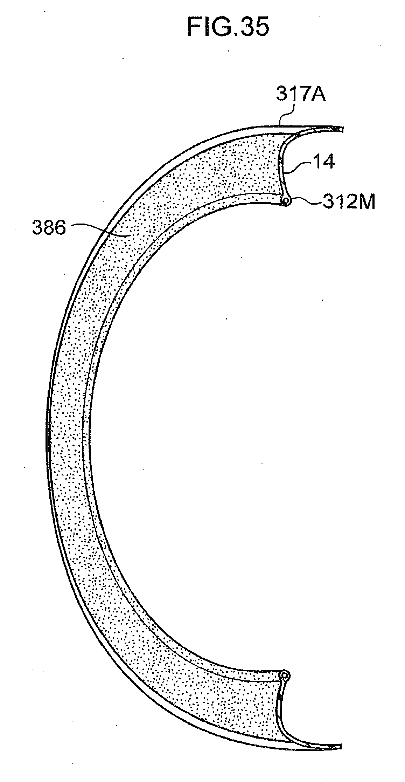

Configuration may be made such that by changing the shape of the molding face of the outer mold 372 the shape of the space Z (see Fig. 33) formed inside the cavity housing the case section body 317A is changed, resulting in a resin chafer 386 being formed to extend along the side sections 14, as shown in Fig. 35. A pneumatic tire is accordingly easily achieved capable of preventing damage to the side sections 14, such as from curbs.

The joining faces of the bead section configuring portion 312M and the resin chafer 324 may be profiled with recesses and projections to obtain an anchor effect (strong meshing effect, like that of dropping an anchor) in order to raise the joint strength between the bead section configuring portions 312M of the case section bodies 317A and the resin chafers 324.

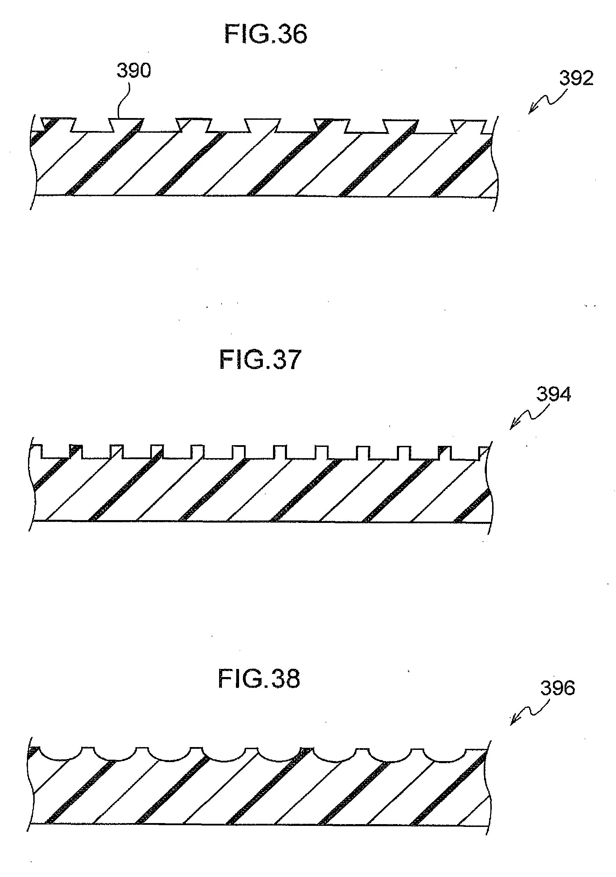

For example, as shown in Fig. 36, a bead section configuring portion 392 may be employed that is arrayed with inverted truncated circular conical shaped projections 390 whose diameter is larger on the resin chafer side than on the base side. An anchor effect is obtained by a bead section configuring portion 394 with simple recesses and projections on the resin chafer side, as shown in Fig. 37, and also by a bead section configuring portion 396 with recesses of curved cross-sectional profile on the resin chafer side, as shown in Fig. 38.

The depth of the recesses and projections for obtaining such an anchor effect is preferably 2mm or less, and more preferably 1mm or less. A dropping off in the strength of the molded item might conceivably occur with a depth of greater than 2mm. However, it is difficult to obtain sufficient anchor effect when the depth of recesses and projections is less than 0.05mm.
The molding face of a mold may be pre-formed with a corresponding recessed and projected profile in order to form such a recessed and projected profile.

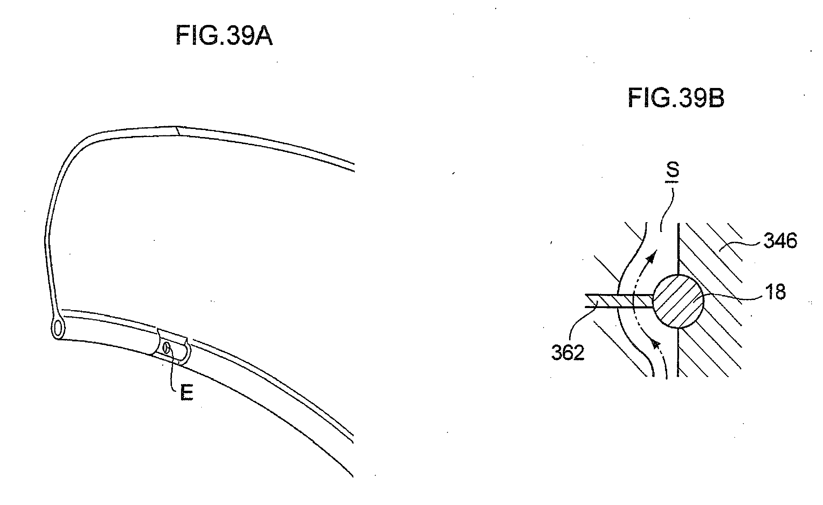

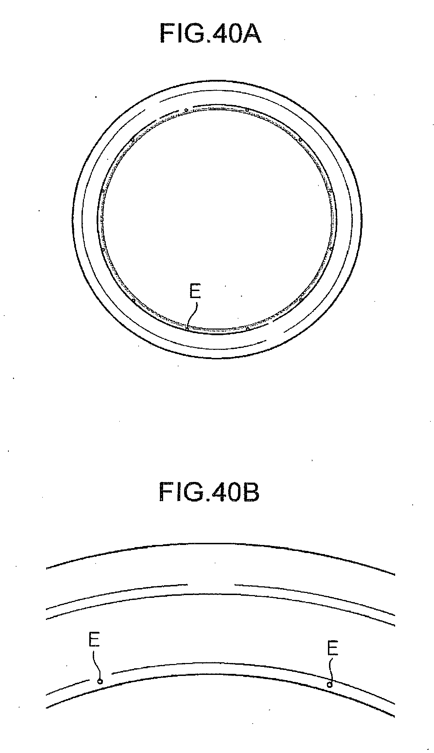

In order to further prevent displacement of the bead core 18 configuration may be made with an auxiliary jig 362 provided that has a variable setting position in the direction of intruding-retracting in the cavity S, as shown in Fig. 39B, and the frame resin material poured in a state in which the auxiliary jig 3 62 is in contact with the bead core 18 from the tire outside over a very small region. In such cases, as shown in Fig. 39A, Fig. 40A and Fig. 40B, very small regions E occur at the tire outside where there is no frame resin material present. However, since such regions E are very small air retention ability is secured when assembled to a rim, suppressing such problems as deterioration of the case section body 317A and damage nucleation in the case section body 317A.
After the case section body 317A has been molded it is also possible to not use the inner mold 374, but instead to leave the case section body 317A disposed in the inner mold 344 and only remove the outer mold 342. The outer mold 372 is then disposed thereon and the resin chafer 324 formed by injection molding with the chafer resin material.
Explanation has been given in the present exemplary embodiment of a case in which the resin chafer 324 is formed by injection molding, however a two color molding machine may be employed, and the resin chafer 324 molded in the same mold after a portion of the case section body 317A has been molded.

Configuration may be made in which a single or double layered bonding agent layer is coated on the surface of the case section bodies 317A at positions for forming the resin chafer 324. The bonding force is raised in such cases by buffing abrasion such as with sandpaper to the surface at the locations to be coated with the bonding agent. Preferably a certain amount of drying is performed after coating the bonding agent in order to raise the bonding force. Accordingly coating the bonding agent is preferably performed in an atmosphere with a relative humidity of 70% or less. The bonding agent here may, for example, be a triazine thiol bonding agent, however a chlorinated rubber bonding agent, a phenol resin bonding agent, an isocyanate bonding agent, or a halogenated rubber bonding agent may also be employed without particular limitation.

A thermoset material (for example a thermoset resin) may be employed as the chafer resin material. When the chafer resin material is a thermoset resin material the resin chafer is also formed by injection molding a chafer resin material onto the case section bodies 317A in a similar manner to in the third exemplary embodiment.

### Fourth Exemplary Embodiment

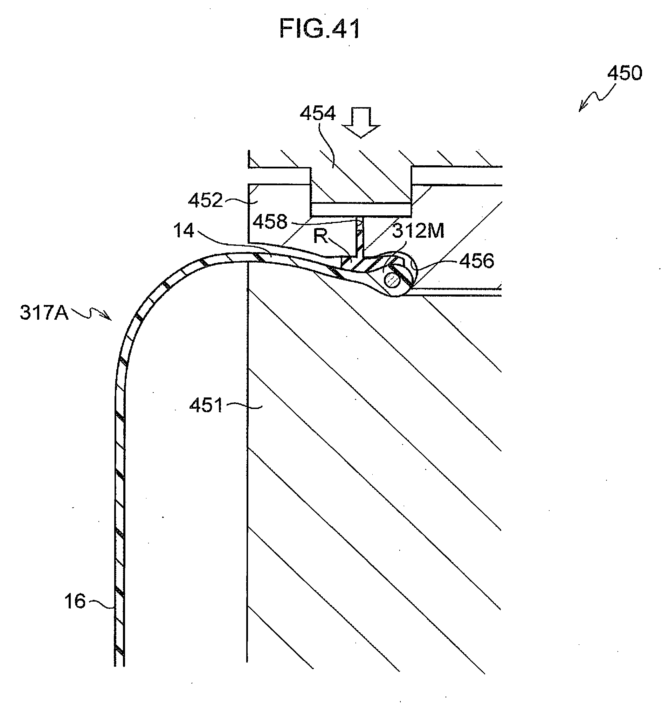

Explanation follows regarding a tire manufacturing method of a fourth exemplary embodiment. In the present exemplary embodiment, as shown in Fig. 31A and Fig. 31B, a case section body 317A is produced by a similar method to that of the third exemplary embodiment, and the case section body 317A is set in a press 450 capable of vulcanization molding. The press 450 (see Fig. 41) is equipped with a lower mold (base) 451 that makes contact with and supports the case section body 317A from the tire inside, an upper mold 452 positioned above the lower mold 451, capable of moving to-and-fro in the up-down direction and with a molding face formed on the bottom face, and an upper mold press section 454 for pressing the upper mold 452 from above.

A resin chafer molding face 456 is formed on the upper mold 452, the case section body 317A is set in the lower mold 451, and a specific dimension of chafer resin material R (preferably a thermoplastic elastomer in the present exemplary embodiment) for forming a resin chafer 464 is placed in a bead section configuring portion 312M of the case section body 317A. When the upper mold 452 is lowered and the molding face (bottom face) of the upper mold 452 is pressed against the side section 14 of the case section body 317A a space is formed between the upper mold 452 and the bead section configuring portion 312M enabling a resin chafer of a set shape to be vulcanize molded. A spew molding through hole 458 is also formed in the upper mold 452.

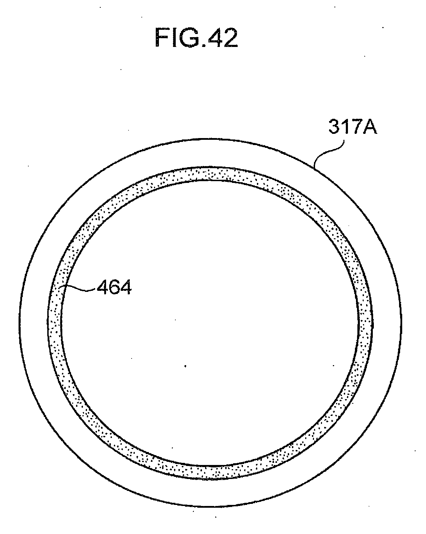

In the present exemplary embodiment, the case section body 317A and the chafer resin material R are set in the lower mold 451. The upper mold 452 is lowered to a set position and the chafer resin material R compression molded, and the chafer resin material R heat welded by subjecting the chafer resin material R to a specific temperature for a specific duration. As a result the resin chafer 464 formed from a thermoplastic material is formed (see Fig. 42). The specific temperature is preferably lower than the melting point of the frame resin material forming the case section body 317A from the perspective of preventing deformation of the case section body 317A.

When disposing the chafer resin material R in the present exemplary embodiment, the chafer resin material R is placed at locations to cover the regions A referred to above when the chafer resin material R is pressed by the press 450. Configuration may be made in which a single or double layered bonding agent layer is coated on the surface of the case section body 317A at the positions where the chafer resin material R is to be set. The bonding force is raised in such cases by buffing abrasion such as with sandpaper to the surface at the locations to be coated with the bonding agent. Preferably a certain amount of drying is performed after coating the bonding agent in order to raise the bonding force. Accordingly coating of the bonding agent is preferably performed in an atmosphere with a relative humidity of 70% or less. The bonding agent here may, for example, be a triazine thiol bonding agent, however a chlorinated rubber bonding agent, a phenol resin bonding agent, an isocyanate bonding agent, or a halogenated rubber bonding agent may also be employed without particular limitation.

Then, similarly to in the fourth exemplary embodiment, the two case section bodies 317A are joined together to produce the tire case 317, and the tire case 317 is formed with the reinforcement layer 28, the covering layer 29 and the tread 30. This completes production of the tire 310.

In the present exemplary embodiment the resin chafer 464 is formed by compression molding the chafer resin material R onto the bead section configuring portion 312M of the case section body 317A formed from the frame resin material, and by joining such as by heat welding. The resin chafer 464 accordingly makes contact with a rim when the tire is assembled to a rim, and so air is not liable to come out from between the bead section and the rim even when air is filled in the tire 310. High internal pressure retaining ability is accordingly achieved even though the tire case 317 is formed from a resin material (the frame resin material).

A reduction in the manufacturing time is achieved by disposing the chafer resin material R on the bead section configuring portion 312M of the tire case 317 and forming the resin chafer 464 by pressing with the press 450 and vulcanize molding.
When disposing the chafer resin material R a bonding agent is coated on the surface of the case section body 317A at the locations where the chafer resin material R is to be disposed. Displacement can accordingly be prevented of the position of the chafer resin material R when pressed with the press 450.

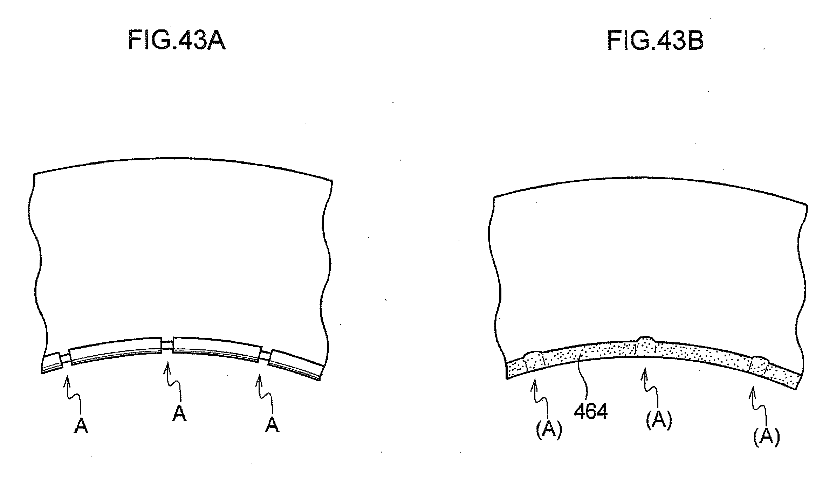

In the present exemplary embodiment chafer thermoplastic material is introduced to the regions A of the case section body 317A where the bead core 18 is exposed, in a similar manner to in the third exemplary embodiment. Accordingly, as shown in Fig. 43A and Fig. 43B, the regions A where the bead core 18 was exposed (see Fig. 43A) are covered by the resin chafer 464, as shown in Fig. 43B, prior to injecting the frame resin material. By adopting such an approach not only can rusting of the metal bead core 18 be prevented but also deterioration of the case section body 317A and damage nucleation in the case section body 317A are prevented from occurring.

The tire 310 of the third exemplary embodiment and the fourth exemplary embodiment are tires of similar structure to the tire 10 of the first exemplary embodiment, however configuration may be made with a tire of similar structure to that of the tire 210 of the second exemplary embodiment. In such cases a resin chafer 324 of the third exemplary embodiment or a resin chafer 464 of the fourth exemplary embodiment is employed in place of the seal layer 224 of the second exemplary embodiment.

### Test Examples

In order to confirm the advantageous effects of the present invention the present inventor prepares an example of the tire 310 of the third exemplary embodiment (referred to below as the Example Tire) provided with a tire case 317 formed from an olefin thermoplastic elastomer (TPO) and a resin chafer 324, and an example of a tire not provided with a resin chafer (referred to below as a Conventional Example Tire). The present inventor then assembles these tires to rims, tests the internal pressure retaining ability and evaluates their performance. The Conventional Example Tire is a tire that differs from the Example Tire in that the resin chafer 324 is not formed.

In the test the internal pressure is measured 48 hours after the internal pressure has been inflated to 0.39MPa (4kg/ cm²). An evaluation index is computed for relative evaluation of the Example Tire with respect to an evaluation index of 100 for the internal pressure retaining ability of the Conventional Example Tire. The larger the evaluation index the higher the performance, namely indicating superior internal pressure retaining ability. The evaluation index of the Example Tire is 105, a result indicating that the internal pressure retaining ability is better than that of the Conventional Example Tire.

### Fifth Exemplary Embodiment

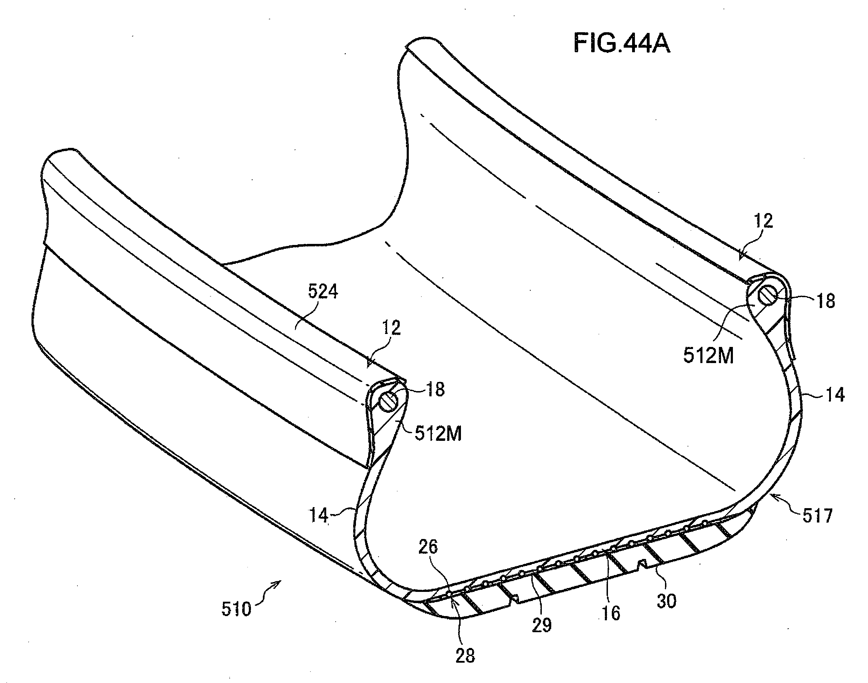

Explanation follows regarding a tire and tire manufacturing method of a fifth exemplary embodiment, with reference to the drawings. As shown in Fig. 44A, a tire 510 of the present exemplary embodiment is a tire of similar structure to that of the tire 10 of the first exemplary embodiment, employing a rubber chafer 524 in place of the seal layer 24 employed in the tire 10. The same reference numerals are appended to similar parts of the configuration to those of the first exemplary embodiment, and further explanation thereof is omitted.

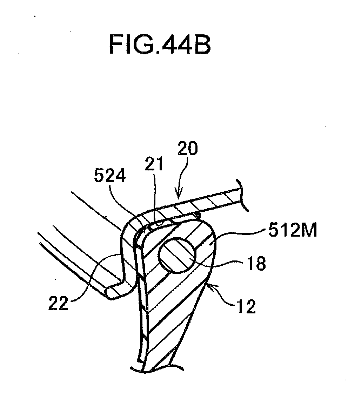

The tire 510 is equipped with a ring shaped tire case 517 (serving as an example of a tire frame member) formed from a frame resin material and configured by: a pair of bead sections 12 (see Fig. 44B) that make contact with a bead seat 21 and a rim flange 22 of a rim 20; side sections 14 that extend from the bead sections 12 towards the tire radial direction outside; and a crown section 16 (outer peripheral section) that connects together the tire radial direction outside edge of one of the side sections 14 and the tire radial direction outside edge of the other of the side sections 14. The tire 510 is also provided with a reinforcement layer 28, a covering layer 29 and a tread 30 on the radial direction outside of the crown section 16.

The tire case 517 is formed from circular ring shaped case section bodies 517A (frame structuring members) each formed in the same shape such as by molding in a mold with a bead section configuring portion 512M for covering the bead core 18 of one of the bead sections 12, one of the side sections 14 and a half-width crown section 16 integrated together. The case section bodies 517A are aligned to face each other and are joined together along the tire center CL. The tire case 517 is not limited to being formed by joining together two members, and may be formed by joining together three or more members, or may be formed as a single body including the pair of bead sections 12, the pair of the side sections 14 and the crown section 16.

As shown in Fig. 44A, the rubber chafer 524 is formed on a side surface of the bead sections 12 so as to make contact with the rim flange 22. The rubber chafer 524 is formed by pressing green rubber with a press and vulcanize molding.

The case section bodies 517A are formed from a resin material (frame resin material). A similar resin material to that employed in the first exemplary embodiment can be employed as the resin material in the present exemplary embodiment. The case section bodies 517A can be formed, for example, by vacuum molding, pressure molding, injection molding, or melt-casting. Manufacturing processes can accordingly be greatly simplified in comparison to molding (vulcanization) in rubber, and the time for molding can also be shortened.
In the present exemplary embodiment the case section bodies 517A are formed with left-right symmetry, namely one of the case section bodies 517A is the same shape as the other of the case section bodies 517A. This has the advantage of allowing the case section bodies 517A to be formed with a single type of mold.

In the present exemplary embodiment the contact portion of the bead sections 12 to the rim 20, at least the portion that makes contact with the rim flange 22 of the rim 20, is formed with the circular ring shaped rubber chafer 524 formed from a rubber (vulcanized rubber) having superior sealing ability (gas sealing performance) to the frame resin material forming the tire case 517. The rubber chafer 524 may extend to the portion that contacts the bead seat section 21, and may also extend to the tire inside. A similar type of rubber to that employed on the bead section outside face of an ordinary rubber pneumatic tire is preferably employed as the rubber for forming the rubber chafer 524.

In the present exemplary embodiment, as an example, a thermoplastic material (such as for example a thermoplastic resin or a thermoplastic elastomer) is selected from resin materials as the frame resin material for forming the tire case 517.

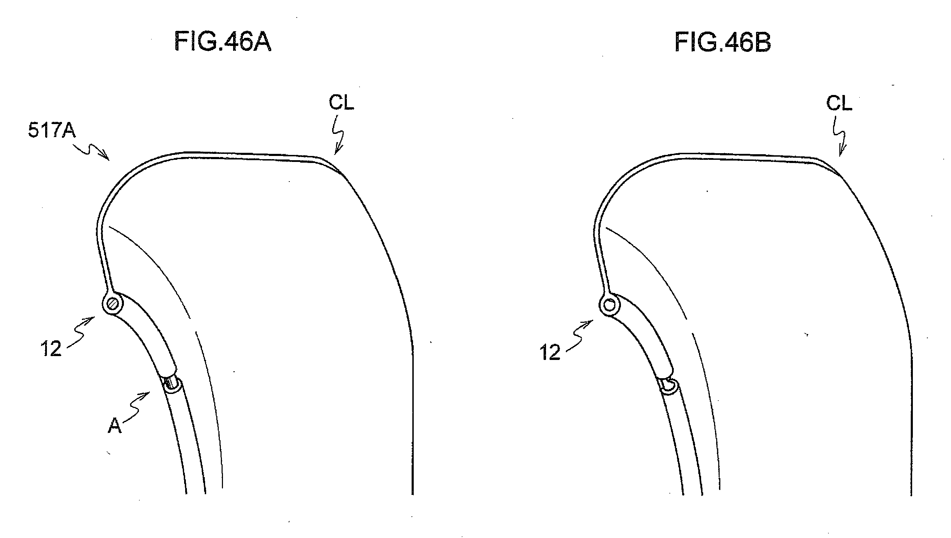

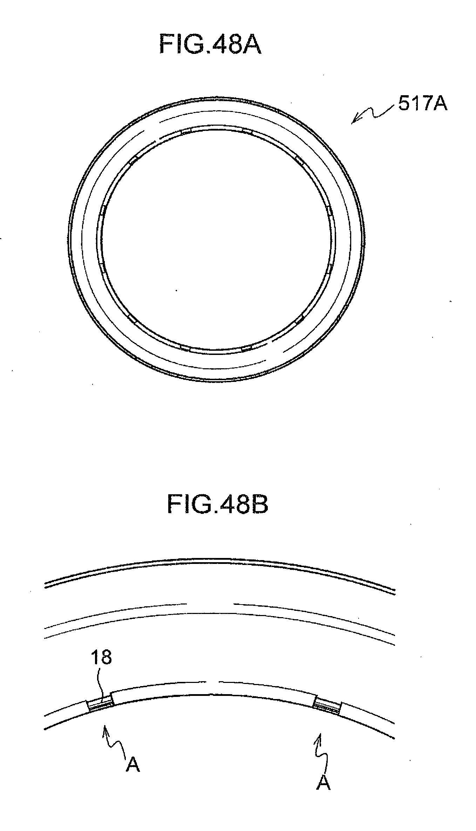

Explanation follows regarding a manufacturing method of the tire 510 of the present exemplary embodiment. In the following explanation the case section bodies 517A are formed by injection molding (see Figs. 46 to Fig. 48), the rubber chafers 524 are further produced by pressing green rubber (pre-vulcanized rubber) with a press onto the case section bodies 517A and performing vulcanize molding. The two case section bodies 517A are then aligned facing each other and joined at the tire center.

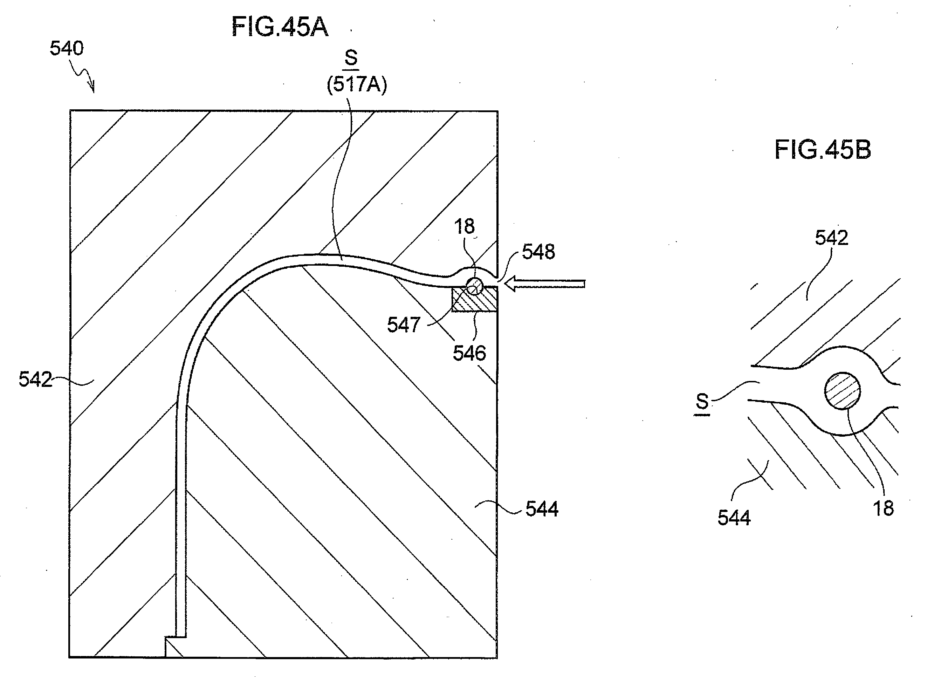

In the present exemplary embodiment a mold 540 is employed, as shown in Fig. 45A and Fig. 45B. The mold 540 includes an outer mold 542 for molding the tire outside face and an inner mold 544 for molding the tire inside face, such that the case section bodies 517A can be formed from the bead sections 12 (see Fig. 46A and Fig. 46B) to the tire center CL (see Fig. 46A and Fig. 46B). Bead core fixing jigs 546 are employed in the inner mold 544 and the jigs 546 are provided placed in advance in set positions. A tire frame member shaped cavity S (space) is formed between the outer mold 542 and the inner mold 544.

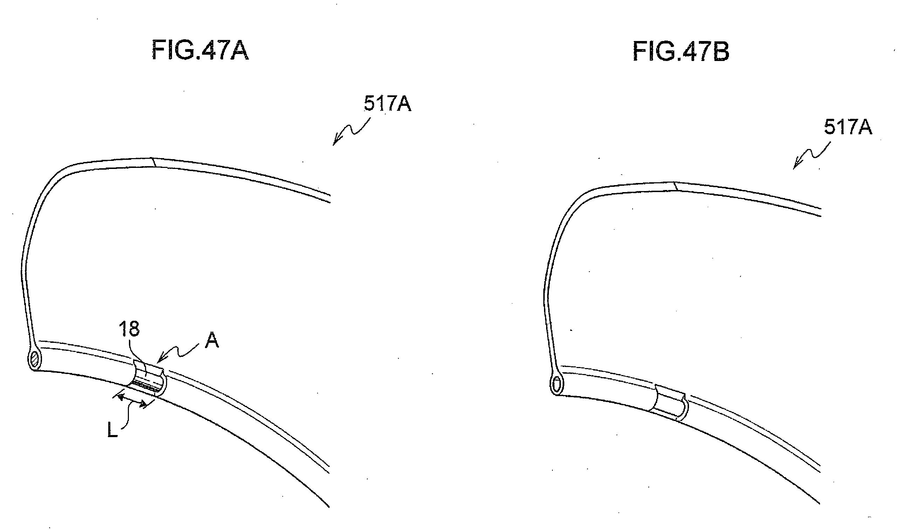

As shown in Fig. 47A (and Fig. 47B), the contact length L of the jigs 546 to the bead core 18 along the tire circumferential direction, namely and the length L along the tire circumferential direction of regions A at the tire inside of the case section bodies 517A where the resin material (frame resin material) is not present, is preferably 20mm or less. There is thus no concern of rupture nucleation occurring.

When the contact length L of the jigs 546 to the bead core 18 along the tire circumferential direction is 15mm or less then stress is not liable to be concentrated in the case section bodies 517A. Such an effect is more readily achieved when the length L is 5mm or less. The contact length L is preferably 1mm or longer from the perspective of the strength of the jigs 546.

In the present exemplary embodiment, each of the jigs 546 is formed from a magnetic member. There are 12 individual jigs 546 disposed at even intervals along the bead core housing location.

A recess portion 547 (see Fig. 45A) is formed in each of the jigs 546 to as to correspond to the dimensions of the bead core 18. A portion of the bead core 18 enters into the recess portion 547 when the bead core 18 is disposed in the mold 540, such that the bead core 18 is in a supported state from the tire inside. As a result the bead core 18 is in a state in which movement towards the tire inside direction is restricted, and movement in the up-down direction (the tire radial direction) is also restricted.

As shown in Fig. 45A, a gate (resin pouring path) 548 of the mold 540 is formed such that resin material (frame resin material) in a molten state passes through the gate 548 at the tire outside of the bead core 18 with the bead core 18 in an inserted state in the recess portions 547.
The gate 548 is a disk gate with a ring shaped opening, and the cavity S is formed as a hollow circular disk shape in communication with the ring shaped gate 548. The gate 548 may be configured as a pin gate, however a disk gate is preferable from the perspective of formability.

In the present exemplary embodiment, first the mold 540 is opened, the tire inside portion of the bead core 18 is inserted into the recess portion 547 of each of the jigs 546, and the mold 540 closed up. The bead core 18 is formed from a body with magnetic properties so as to enable magnetic attachment.
Melted frame resin material is then poured into the mold 540 from the gate 548, and the case section body 517A is formed by injection molding.

During pouring the frame resin material is poured from the gate 548 through between the bead core 18 and the outer mold 542 at the positions where the jigs 546 are provided, and so the bead core 18 is pressed from the tire outside towards the tire inside. The moving force bearing on the bead core 18 can accordingly be sufficiently supported by the jigs 546. It is thus possible to pour the melted frame resin material with the jigs 546, for preventing displacement of the bead core 18, in a state in which there is no contact of the jigs 546 to the bead core 18 from the tire outside.

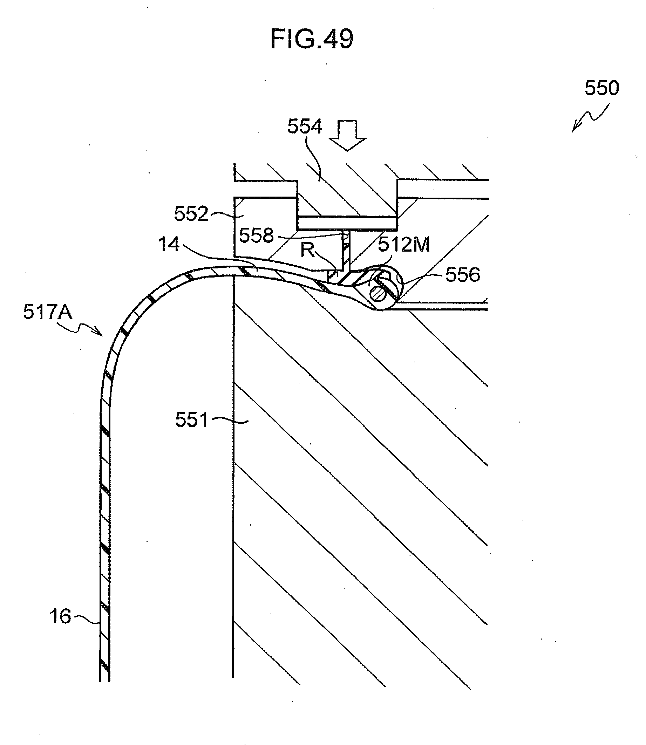

The case section body 517A manufactured with the bead core 18 held in this manner is then removed from the mold 540, and as shown in Fig. 49, the case section body 517A is set in a press 550 capable of vulcanize molding. The press 550 is equipped with a lower mold (base) 551 that makes contact with and supports the case section body 517A from the tire inside, an upper mold 552 positioned above the lower mold 551, capable of moving to-and-fro in the up-down direction and with a molding face formed on the bottom face, and an upper mold press section 554 for pressing the upper mold 552 from above.

A rubber chafer molding face 556 is formed on the upper mold 552, the case section body 517A is set in the lower mold 551, and a specific dimension of green rubber R for forming a rubber chafer 524 is placed in a bead section configuring portion 512M of the case section body 517A. When the upper mold 552 is lowered and the molding face (bottom face) of the upper mold 552 is pressed against the side section 14 of the case section body 517A a space is formed between the upper mold 552 and the bead section configuring portion 512M enabling a rubber chafer of a set shape to be vulcanize molded. A spew molding through hole 558 is also formed in the upper mold 552.

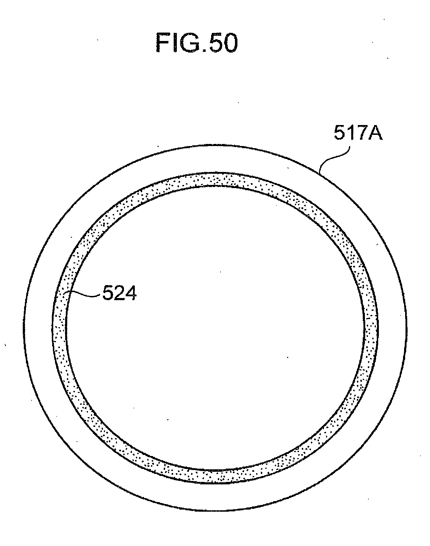

In the present exemplary embodiment, the case section body 517A and the green rubber R are set in the lower mold 551. The upper mold 552 is lowered to a set position and the green rubber R pressed, and the green rubber R vulcanize molded by subjecting the green rubber R to a specific temperature for a specific duration. As a result the rubber chafer 524 formed from a vulcanized rubber is formed (see Fig. 44A, Fig. 44B and Fig. 50). The specific temperature is preferably lower than the melting point of the frame resin material forming the case section body 517A from the perspective of preventing deformation of the case section body 517A.
Preferably sulfur or peroxide is employed as a vulcanization promoting agent for the green rubber R. Preferably carbon black or particularly preferably silica is employed as a reinforcing agent contained in the green rubber R. An amino silane or a polysulfide may also be employed as a coupling agent for the green rubber R.

When disposing the green rubber R in the present exemplary embodiment, the green rubber R is placed at locations to cover the regions A referred to above when the green rubber R is pressed by the press 550. Configuration may be made in which a single or double layered bonding agent layer is coated on the surface of the case section body 517A at the positions where the green rubber R is to be set. The bonding force is raised in such cases by buffing abrasion such as with sandpaper to the surface at the locations to be coated with the bonding agent. Preferably a certain amount of drying is performed after coating the bonding agent in order to raise the bonding force. Accordingly coating the bonding agent is preferably performed in an atmosphere with a relative humidity of 70% or less. The bonding agent here may, for example, be a triazine thiol bonding agent, a chlorinated rubber bonding agent, a phenol resin bonding agent, an isocyanate bonding agent, or a halogenated rubber bonding agent without particular limitation.

Then the two case section bodies 517A are joined together using a method for joining the case section bodies 17A of the first exemplary embodiment so as to produce the tire case 517.
Forming the rubber chafer 524 may be performed after joining together the case section bodies 517A, and it is possible to change the sequence of processes as appropriate.

The tire case 517 is then formed with the reinforcement layer 28, the covering layer 29 and the tread 30 by methods similar to those of the first exemplary embodiment, This completes production of the tire 510 (see Fig. 44A).

In the present exemplary embodiment, as explained above, the rubber chafer 524 is formed by vulcanize molding onto the bead section configuring portion 512M of the case section body 517A formed from the frame resin material. The rubber chafer 524 accordingly makes contact with a rim when the tire is assembled to a rim, and so air is not liable to come out from between the bead section and the rim even when air is filled in the tire 510. High internal pressure retaining ability is accordingly achieved even though the tire case 517 is formed from a resin material (the frame resin material).

The side sections 14 and the tread section (the crown section 16) are also formed to the tire case 517 and the two case section bodies 517A are joined together along the tire center CL using a welding thermoplastic material (not shown in the drawings). Tire strength is accordingly efficiently raised.
The rubber chafer 524 also extends to the tire inside (tire inside face) of the bead sections 12. There is accordingly less concern of the edge of the rubber chafer 524 peeling away during rim assembly than for cases in which the rubber chafer 524 is only provided to the tire outside of the bead sections 12.
A reduction in the manufacturing time is achieved by disposing the green rubber R on the bead section configuring portion 512M of the tire case 517 and forming the rubber chafer 524 by pressing with the press 550 and vulcanize molding.

When the case section bodies 517A are manufactured melted frame resin material is poured into the cavity with the bead core 18 in a contact state with the jigs 546 from the direction that will be at the tire inside. Namely, it is thus possible to pour the melted frame resin material with the jigs 546, for preventing displacement of the bead core 18, in a state in which the jigs 546 do not contact the bead core 18 from the tire outside. Accordingly the regions A, where the jigs 546 were in contact with the bead core 18 such that there is no frame resin material present and the bead core 18 is exposed, are not formed at all on the tire outside of the case section bodies 517A. There is accordingly frame resin material present spanning across every location that will make contact with the rim 20, facilitating securing sufficient air retention ability when assembled to a rim.

The locations where the green rubber R is disposed are locations where the green rubber R will cover the regions A referred to above when the green rubber R is pressed by the press 550. Accordingly, the regions A are covered by the rubber chafer 524, and so rusting of the metal bead core 18 can be prevented and also deterioration of the case section body 517A and damage nucleation in the case section body 517A are prevented from occurring. When disposing the green rubber R a bonding agent is coated on the surface of the case section body 517A at the locations where the green rubber R is to be disposed.
Displacement of the position of the green rubber R can accordingly be prevented when pressed with the press 550, and the bonding force is raised between the rubber chafer 524 and the case section body 517A.

There are regions A formed at the tire inside of the case section bodies 517A where the jigs 546 were in contact with the bead core 18 such that there is no solidified frame resin material present and the bead core 18 is exposed. However, air retention ability can be maintained when assembled to a rim even with a relatively large dimension for the regions A. Jig dimensions and shape are accordingly achieved capable of securing sufficient ability to prevent rupturing of the frame resin material at the periphery of the bead core during knocking out, and also capable of sufficiently suppressing displacement of the bead core 18 during tire molding. Not only is displacement of the bead core 18 suppressed but deformation of the bead core 18 due to pressure applied thereto during molding can also be prevented.
Such an advantageous effect is obtained even when high pressure pouring is employed for injection molding when pouring the melted frame resin material.

The bead core 18 is readily retained by the jigs 546 since the jigs 546 are formed from magnets in the present exemplary embodiment. Configuration may be made employing a jig that is covered with a shielding member to stop magnetic force being dissipated in directions other than the direction of the bead core 18.
The jigs 546 are disposed at plural locations along the bead core housing location. The positioning precision of the bead core 18 can accordingly be further raised.

When pouring the frame resin material the frame resin material is poured between the bead core 18 and the outer mold 542 for molding the tire outside. The bead core 18 is accordingly pressed from the tire outside towards the tire inside during pouring. The movement force bearing on the bead core 18 can accordingly be sufficiently supported with the jigs 546.

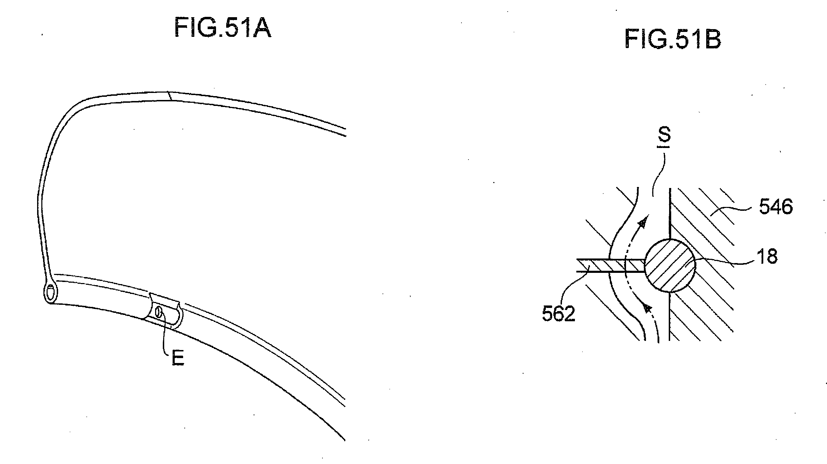

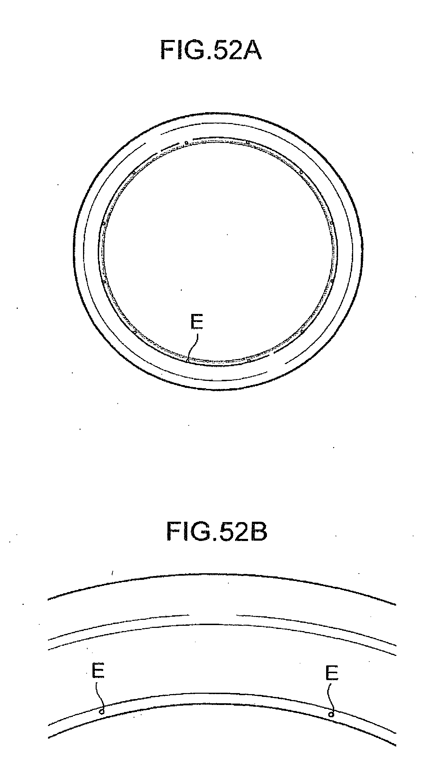

Configuration may be made to change the profile of the molding face of the upper mold 552 such that the rubber chafer 524 is formed to extend along the side sections 14. A pneumatic tire is accordingly easily achieved capable of preventing damage to the side sections 14, such as from curbs.
In order to further prevent displacement of the bead core 18 configuration may be made with an auxiliary jig 562 provided that has a variable setting position in the direction of intruding-retracting in the cavity S, as shown in Fig. 51B, and the frame resin material poured in a state in which the auxiliary jig 562 is in contact with the bead core 18 from the tire outside over a very small region. In such cases, as shown in Fig. 51A, Fig. 52A and Fig. 52B, very small regions E occur at the tire outside where there is no frame resin material present. However, since such regions E are very small air retention ability is secured when assembled to a rim, and no problems such as deterioration of the case section body 517A and damage nucleation in the case section body 517A arise.
Reinforcement materials (such as fibers, cords, non-woven fabric or woven fabric made of a high polymer material or a metal) may be embedded in locations of the tire case 517 other than in the crown section (such as in the side sections 14).
After the case section body 517A has been molded it is also possible to leave the case section body 517A disposed in the inner mold 544 and only remove the outer mold 542. The rubber chafer 524 is then formed by placing the green rubber R, and vulcanize molding by pressing the green rubber R with an outer mold with a similar profile on the green rubber pressing face to that of the upper mold 552.

The joining faces of the bead section configuring portion 512M and the rubber chafer 524 may be profiled with recesses and projections to obtain an anchor effect (strong meshing effect, like that of dropping an anchor) in order to raise the joint strength between the bead section configuring portions 512M of the case section bodies 517A and the rubber chafers 524.
For example, a bead section configuring portion may be employed that is arrayed with inverted truncated circular conical shaped projections whose diameter is larger on the rubber chafer side than on the base side. An anchor effect is obtained by a bead section configuring portion with simple recesses and projections on the rubber chafer 524 side, and also by a bead section configuring portion with recesses of curved cross-sectional profile on the rubber chafer 524 side.
The depth of the recesses and projections for obtaining such an anchor effect is preferably 2mm or less, and more preferably 1 mm or less. A dropping off in the strength of the molded item might conceivably occur with a depth of greater than 2mm. However, it is difficult to obtain sufficient anchor effect when the depth of recesses and projections is less than 0.05mm. The molding face of a mold may be pre-formed with a corresponding recessed and projected profile in order to form such a recessed and projected profile.

### Sixth Exemplary Embodiment

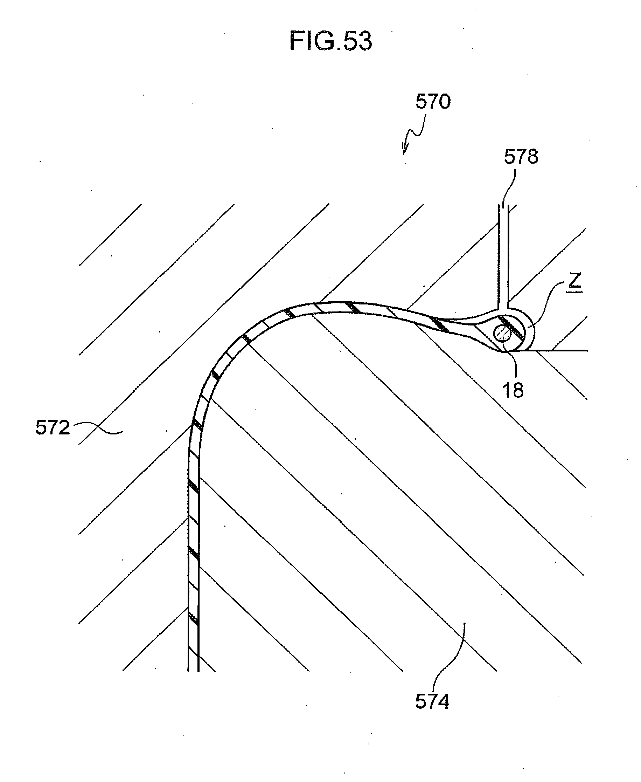

Explanation follows regarding a tire manufacturing method of a sixth exemplary embodiment. In the present exemplary embodiment, as shown in Fig. 46A and Fig. Fig. 46B, a case section body 517A is manufactured with a method similar to that of the fifth exemplary embodiment. The case section body 517A is then housed in a mold 570 (see Fig. 53) for injection molding (insert molding) and the mold 570 closed up. The mold 570 is configured by an outer mold 572 and an inner mold 574, and a gate 578 is formed in the outer mold 572 for pouring chafer rubber material. When the case section body 517A is housed inside the mold 570 and the mold 570 has been closed a structure results in which there is a space Z for forming the rubber chafer 584 of a set shape formed inside a cavity that is in communication with the gate 578. Gas escape holes (not shown in the drawings) are also formed in the mold 570 for expelling air from inside the cavity when the chafer rubber material is poured into the cavity.

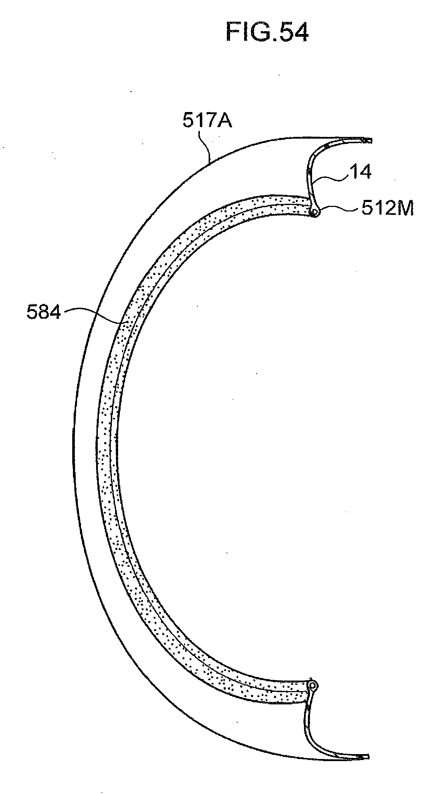

In the present exemplary embodiment the case section body 517A is housed in the injection molding mold 570, the mold 570 closed, and then the chafer green rubber injected from the gate 578 and vulcanize molding performed. The rubber chafer 584 is accordingly formed to the case section body 517A, as shown in Fig. 54.

A similar method to that of the fifth exemplary embodiment is then employed to join together the two case section bodies 517A, forming the tire case 517. Then the reinforcement layer 28, the covering layer 29 and the tread 30 are formed on the tire case 517, thus completing manufacture of the tire 510.

Thus in the present exemplary embodiment the rubber chafer 584 is formed by injecting green rubber onto the bead section configuring portion 512M of the case section body 517A formed from frame resin material, and performing vulcanize molding. The rubber chafer 584 accordingly makes rim contact when the tire is assembled to the rim, and air is not liable to escape from between the bead sections and the rim even when air is filled in the tire 510. There is accordingly high internal pressure retaining ability even though the tire case 517 is formed from a resin material.

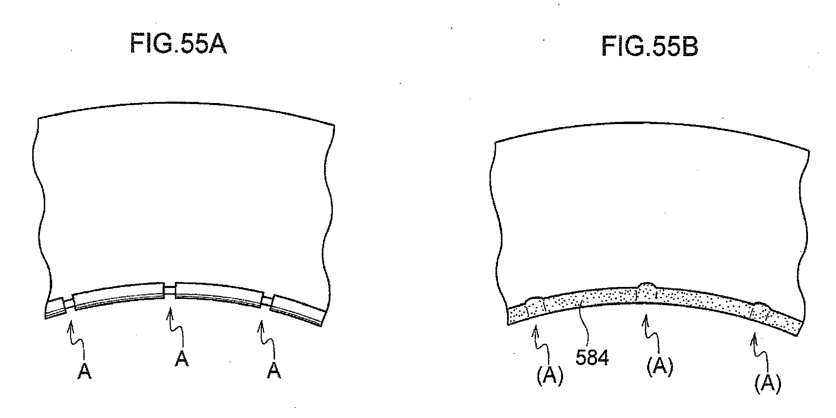

Similarly to in the fifth exemplary embodiment, green rubber is inserted in the present exemplary embodiment at the regions A where the bead core 18 of the case section bodies 517A is exposed. Accordingly, as shown in Fig. 55A and Fig. 55B, the regions A where the bead core 18 was exposed (see Fig. 55A) prior to injecting the green rubber are covered by the rubber chafer 584, as shown in Fig. 55B. By adopting such an approach rusting of the metal bead core 18 can be prevented, and also deterioration of the case section body 517A and damage nucleation in the case section body 517A are prevented from occurring.

Configuration may be made in which a single or double layered bonding agent layer is coated on the surface of the case section bodies 517A at positions where the rubber chafer 584 is to be disposed. In such cases, similarly to in the fifth exemplary embodiment, the bonding force is raised in such cases by buffing abrasion such as with sandpaper to the surface at the locations to be coated with the bonding agent. The bonding agent may be a triazine thiol bonding agent, a chlorinated rubber bonding agent, a phenol resin bonding agent, an isocyanate bonding agent, or a halogenated rubber bonding agent, without particular limitation.
In the present exemplary embodiment explanation has been given of a case in which green rubber is poured into the injection molding mold 570, however a rubber chafer 524 may be formed by employing the press 550 explained in the fifth exemplary embodiment, and injecting and vulcanize molding by pouring green rubber in through a through hole 558 instead of placing green rubber R. In such cases the regions A referred to above are also covered by the green rubber R, and as a result it is possible to achieve a structure in which the rubber chafer 524 covers the regions A. By adopting such an approach rusting of the metal bead core 18 can be prevented and also deterioration of the case section body 517A and damage nucleation in the case section body 517A can be prevented from occurring.

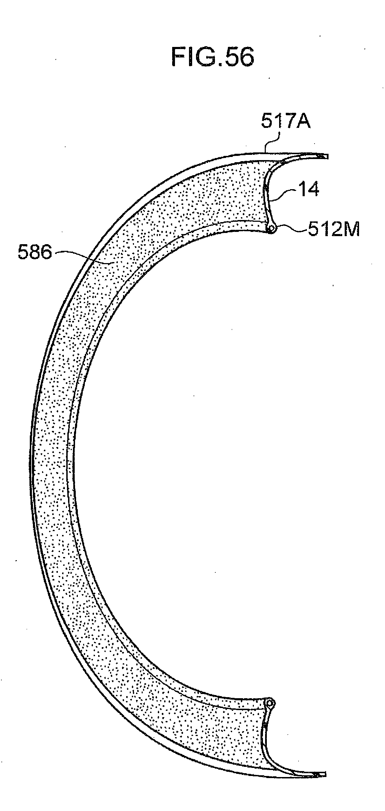

Configuration may also be made, as shown in Fig. 56, to change the profile of the space Z (see Fig. 53) formed inside the cavity in which the case section body 517A is housed, such that a rubber chafer 586 is formed to extend along the side sections 14. A pneumatic tire is accordingly easily achieved capable of preventing damage to the side sections 14, such as from curbs.

The tires 510 of the fifth exemplary embodiment and the sixth exemplary embodiment are tires of similar structure to the tire 10 of the first exemplary embodiment, however configuration may be made with a tire of similar structure to that of the tire 210 of the second exemplary embodiment. In such cases a rubber chafer 524 of the fifth exemplary embodiment or a rubber chafer 584 of the sixth exemplary embodiment is employed in place of the seal layer 224 of the second exemplary embodiment.

### Test Examples

In order to confirm the advantageous effects of the present invention the present inventor prepares an example of the tire 510 of the fifth exemplary embodiment (referred to below as the Example Tire) provided with a tire case 517 formed from an olefin thermoplastic elastomer (TPO) and a rubber chafer 524, and an example of a tire not provided with a rubber chafer (referred to below as a Conventional Example Tire). The present inventor then assembles these tires to rims, tests the internal pressure retaining ability and evaluates their performance. The Conventional Example Tire is a tire that differs from the Example Tire in that the rubber chafer 524 is not formed.

In the test the internal pressure is measured 48 hours after the internal pressure has been inflated to 0.39MPa (4kg/ cm²). An evaluation index is computed for relative evaluation of the Example Tire with respect to an evaluation index of 100 for the internal pressure retaining ability of the Conventional Example Tire. The larger the evaluation index the higher the performance, namely indicating superior internal pressure retaining ability. The evaluation index of the Example Tire is 110, a result indicating that the internal pressure retaining ability is better than that of the Conventional Example Tire.

Note that while embodiments of the present invention have been explained by way of exemplary embodiments, these are merely examples and various modifications may be implemented within a scope not departing from the spirit of the present invention. Obviously the scope of rights of the present invention are not limited by the exemplary embodiments.

### Explanation of the Reference Numerals

- 10: TIRE
- 12: BEAD SECTION
- 16: CROWN SECTION (OUTER PERIPHERAL SECTION)
- 17: TIRE CASE (TIRE FRAME MEMBER)
- 26: COVERED CORD MEMBER
- 26A: REINFORCEMENT CORD
- 27: CORD RESIN MATERIAL
- 28: REINFORCEMENT LAYER
- 29: COVERING LAYER
- 30: TREAD
- 90: COVERING RESIN MATERIAL
- 210: TIRE
- 212: BEAD SECTION
- 216: CROWN SECTION (OUTER PERIPHERAL SECTION)
- 217: TIRE CASE (TIRE FRAME MEMBER)
- 226: REINFORCEMENT CORD
- 228: REINFORCEMENT LAYER
- 229: COVERING LAYER
- 230: TREAD
- 290: COVERING RESIN MATERIAL
- 310: TIRE
- 317: TIRE CASE (TIRE FRAME MEMBER)
- 317A: CASE SECTION BODY (FRAME STRUCTURING MEMBER)
- 324: RESIN CHAFER
- 340: MOLD
- 346: JIG
- 450: PRESS
- 464: RESIN CHAFER
- S: CAVITY
- R: CHAFER RESIN MATERIAL
- 510: TIRE
- 517: TIRE CASE (TIRE FRAME MEMBER)
- 517A: CASE SECTION BODY (FRAME STRUCTURING MEMBER)
- 524: RUBBER CHAFER
- 540: MOLD
- 546: JIG
- 550: PRESS
- 584: RUBBER CHAFER
- 586: RUBBER CHAFER
- S: CAVITY
- R: GREEN RUBBER

## Claims

1. A tire (10) comprising:
a ring shaped tire frame member (17) formed from a frame resin material; and
a reinforcement layer (28) formed by winding and joining a covered cord member (26) formed by covering a reinforcement cord (26A) with a cord resin material (27) onto an outer peripheral section (16) of the tire frame member (17), the covered cord member (26) being wound on an outer peripheral face of the tire frame member (17), and a tread (30) being disposed on an outer peripheral surface of the reinforcement layer (28) formed by the covered cord member (26).

2. The tire (10) of claim 1 wherein a bonding agent is employed to join the reinforcement cord (26A) to the cord resin material (27).

3. The tire (10) of claim 1 or claim 2 wherein:
the frame resin material and the cord resin material (27) both have thermoplastic properties; and
joining is performed by welding together the outer peripheral section (16) and the covered cord member (26).

4. The tire (10) of claim 3 wherein the frame resin material and the cord resin material (27) are of similar types of material to each other.

5. The tire (10) of claim 1 or claim 2 wherein the outer peripheral section (16) and the covered cord member (26) are joined together with a bonding agent.

6. The tire (10) of any one of claim 1 to claim 5 wherein the covered cord member (26) is formed with a wider width on the side joined to the outer peripheral section (16) than on the opposite side.

7. The tire (10) of any one of claim 1 to claim 6 wherein the covered cord member (26) has a flat face (26D) on the side joined to the outer peripheral section (16).

8. The tire (10) of any one of claim 1 to claim 7 wherein the covered cord member (26) has a flat face (26U) on the opposite side to the side joined to the outer peripheral section (16).

9. The tire (10) of any one of claim 1 to claim 8 further comprising a covering layer (29) that is formed with a covering resin material (90), that is joined to the outer peripheral section (16) so as to cover the reinforcement layer (28), and that has an outer peripheral face of flattened profile.

10. The tire (10) of claim 9 wherein:
the covering resin material (90) has thermoplastic properties; and
the cord resin material (27) and the covering resin material (90) are similar types of material to each other.

11. The tire (10) of claim 9 or claim 10 wherein both end portions of the covering layer (29) in the width direction are positioned further to the outside in the width direction than both width direction end portions of the reinforcement layer (28) as viewed in a cross-section taken along the tire frame member width direction.

12. The tire (10) of any one of claim 1 to claim 11 further comprising a bead section (12) formed to the tire frame member (17), wherein a resin chafer (324) for making rim contact is formed to the bead section.

13. The tire (10) of claim 12 wherein the resin chafer (324) extends as far as a side section (14).

14. The tire (10) of claim 12 or claim 13 wherein the resin chafer (324) extends as far as the tire inside of the bead section (12).

15. The tire (10) of any one of claim 12 to claim 14 wherein the resin chafer (324) is formed from a chafer resin material having thermoplastic properties.

16. The tire (10) of any one of claim 1 to claim 11 further comprising a bead section (12) formed to the tire frame member (17), wherein a rubber chafer (524) for making rim contact is formed to the bead section (12).

17. The tire (10) of claim 16 wherein the rubber chafer (524) extends as far as a side section (14).

18. The tire of claim 16 or claim 17 wherein the rubber chafer (524) extends as far as the tire inside of the bead section (12).

19. A tire manufacturing method comprising:
a covered cord member forming process of forming a covered cord member (26) by covering a reinforcement cord (26A) with a cord resin material (27); and
a covered cord member winding process of winding the covered cord member (26) on an outer peripheral section (16) of a ring shaped tire frame member (17) formed from a frame resin material and joining the covered cord member (26) to the outer peripheral section (16), the covered cord member (26) being wound on the outer peripheral face of the tire frame member (17), and a tread (30) being disposed on the outer peripheral surface of the reinforcement layer (28) formed by the covered cord member (26).

20. The tire manufacturing method of claim 19 wherein in the covered cord member forming process a bonding layer is formed on the outer peripheral face of the reinforcement cord (26A) and the cord resin material (27) that has been melted or softened is covered onto and joined to the reinforcement cord (26A) through the bonding layer.

21. The tire manufacturing method of claim 20 wherein in the covered cord member forming process the reinforcement cord (26A) is cleaned prior to forming the bonding layer.

22. The tire manufacturing method of any one of claim 19 to claim 21 wherein:
the frame resin material and the cord resin material (27) both have thermoplastic properties; and
in the covered cord member winding process at least one of the cord resin material (27) of the covered cord member (26) and/or the frame resin material of the outer peripheral section (16) at the portion where the covered cord member (26) is to be joined is/are rendered into a molten or softened state, and then the outer peripheral section (16) and the covered cord member (26) are joined together by welding.

23. The tire manufacturing method of any one of claims 19 to 21 wherein in the covered cord member winding process the outer peripheral section (16) and the covered cord member (26) are joined together with a bonding agent.

24. The tire manufacturing method of any one of claims 19 to 23 wherein in the covered cord member forming process the covered cord member (26) is formed with a wider width on the side to be joined to the outer peripheral section (16) than on the opposite side.

25. The tire manufacturing method of any one of claims 19 to 24 wherein in the covered cord member forming process the covered cord member (26) is formed with a flat face on the side to be joined to the outer peripheral section (16).

26. The tire manufacturing method of any one of claims 19 to 25 wherein in the covered cord member forming process the covered cord member (26) is formed with a flat face on the opposite side to the side to be joined to the outer peripheral section (16).

27. The tire manufacturing method of any one of claims 19 to 26 wherein:
the frame resin material and the cord resin material (27) both have thermoplastic properties; and
the tire manufacturing method further comprises a covered cord member covering process in which the covered cord member (26) embedded in the outer peripheral section (16) is covered by a covering resin material having thermoplastic properties that has been melted or softened.

28. The tire manufacturing method of claim 27 wherein in the covered cord member covering process the covered cord member (26) is covered by the covering resin material that has been melted or softened such that the surface of the covering resin material is further to the radial direction outside than the end portion at the tire frame member radial direction outside of the covered cord member (26) joined to the outer peripheral section (16).

29. The tire manufacturing method of claim 27 or claim 28 wherein in the covered cord member covering process the surface of the covering resin material in a molten or softened state is flattened while pressing towards the covered cord member (26) side.

30. The tire manufacturing method of any one of claim 27 to claim 29 wherein in the covered cord member covering process the covering resin material that has been melted or softened is covered over a region wider on both tire frame member width direction sides than the winding region of the covered cord member (26).

31. The tire manufacturing method of any one of claim 27 to claim 30 wherein in the covered cord member covering process the covered cord member (26) is covered by the covering resin material that has been melted or softened while the cord resin material (27) of the covered cord member (26) joined to the outer peripheral section (16) and the frame resin material at the periphery of the covered cord member (26) are being melted or softened.

32. The tire manufacturing method of any one of claim 27 to claim 31 further comprising a surface treatment process in which the surface of the covering resin material that has cooled and solidified is machined.

33. The tire manufacturing method of any one of claim 19 to claim 32 wherein:
the tire frame member (17) is configured from the frame resin material as a frame structuring member (317A) at least configuring a bead section (12); and
a resin chafer (324) is formed by injection molding a chafer resin material having thermoplastic properties on the side of the bead section (12) of the frame structuring member (317A) to make rim contact.

34. The tire manufacturing method of claim 33 wherein when injecting the chafer resin material a bonding agent is coated on the bead section (12) then the chafer resin material is applied.

35. The tire manufacturing method of any one of claim 19 to claim 32 wherein:
the tire frame member (17) is configured from the frame resin material as a frame structuring member (317A) at least configuring a bead section (12); and
a resin chafer (324) is formed by disposing a chafer resin material having thermoplastic properties on the side of the bead section (12) of the frame structuring member (317A) to make rim contact and pressing with a press.

36. The tire manufacturing method of claim 35 wherein when disposing the chafer resin material a bonding agent is coated on the bead section (12) then the chafer resin material is applied.

37. The tire manufacturing method of any one of claim 33 to claim 36 wherein:
a jig (546) is provided inside a cavity of a mold (540) for molding the frame structuring member (317A);
a bead core (18) is fixed in contact with the jig (546) from the tire inside direction; and
the frame structuring member (317A) is formed by pouring the frame resin material that has been melted into the cavity.

38. The tire manufacturing method of claim 37 wherein when the chafer resin material is injected, or when the chafer resin material is pressed with a press (450), the chafer resin material infills a cast portion formed in the frame structuring member (317A) by removing the jig(546).

39. The tire manufacturing method of any one of claim 19 to claim 32 wherein:
the tire frame member (17) is configured from the frame resin material as a frame structuring member (317A) at least configuring a bead section (12); and
a rubber chafer (524) is formed by disposing green rubber on the side of the bead section (12) of the frame structuring member (317A) to make rim contact and vulcanize molding the green rubber while pressing with a press (450).

40. The tire manufacturing method of claim 39 wherein when disposing the green rubber the bead section (12) is coated with a bonding agent and then the green rubber is applied.

41. The tire manufacturing method of any one of claim 19 to claim 32 wherein:
the tire frame member (17) is configured from the frame resin material as a frame structuring member (317A) at least configuring a bead section (12); and
a rubber chafer is formed by injecting green rubber on the side of the bead section (12) of the frame structuring member (317A) to make rim contact and vulcanize molding.

42. The tire manufacturing method of claim 41 wherein when injecting the green rubber the bead section (12) is coated with a bonding agent and then the green rubber is applied.

43. The tire manufacturing method of any one of claim 39 to claim 42 wherein:
a jig (546) is provided inside a cavity of a mold (340) for molding the frame structuring member (317A);
a bead core is fixed in contact with the jig (546) from the tire inside direction; and
the frame structuring member (317A) is formed by pouring the frame resin material that has been melted into the cavity.

44. The tire manufacturing method of claim 43 wherein when the green rubber is pressed by the press (450) or when the green rubber is injected onto the side of the bead section (12) that makes rim contact, the green rubber infills a cast portion formed in the frame structuring member (317A) by removing the jig (546).

## Patentansprüche

1. Reifen (10), der aufweist:
ein ringförmiges Reifenunterkonstruktionselement (17), das aus einem Harzmaterial für die Unterkonstruktion gebildet wird; und
eine Verstärkungslage (28), die durch Wickeln und Verbinden eines überzogenen Kordelementes (26), das durch Überziehen eines Verstärkungskordes (26A) mit einem Kordharzmaterial (27) hergestellt wird, auf einen äußeren Umfangsabschnitt (16) des Reifenunterkonstruktionselementes (17) gebildet wird, wobei das überzogene Kordelement (26) auf eine äußere Umfangsfläche des Reifenunterkonstruktionselementes (17) gewickelt wird, und wobei eine Lauffläche (30) auf einer äußeren Umfangsfläche der Verstärkungslage (28) angeordnet wird, die durch das überzogene Kordelement (26) gebildet wird.

2. Reifen (10) nach Anspruch 1, bei dem ein Bindemittel verwendet wird, um den Verstärkungskord (26A) mit dem Kordharzmaterial (27) zu verbinden.

3. Reifen (10) nach Anspruch 1 oder Anspruch 2, bei dem:
das Harzmaterial für die Unterkonstruktion und das Kordharzmaterial (27) beide thermoplastische Eigenschaften aufweisen; und
das Verbinden durch Zusammenschweißen des äußeren Umfangsabschnittes (16) und des überzogenen Kordelementes (26) durchgeführt wird.

4. Reifen (10) nach Anspruch 3, bei dem das Harzmaterial für die Unterkonstruktion und das Kordharzmaterial (27) gleiche Materialarten sind.

5. Reifen (10) nach Anspruch 1 oder Anspruch 2, bei dem der äußere Umfangsabschnitt (16) und das überzogene Kordelement (26) miteinander mit einem Bindemittel verbunden werden.

6. Reifen (10) nach einem der Ansprüche 1 bis 5, bei dem das überzogene Kordelement (26) mit einer größeren Breite auf der Seite, die mit dem äußeren Umfangsabschnitt (16) verbunden wird, ausgebildet ist als auf der entgegengesetzten Seite.

7. Reifen (10) nach einem der Ansprüche 1 bis 6, bei dem das überzogene Kordelement (26) eine flache Fläche (26D) auf der Seite aufweist, die mit dem äußeren Umfangsabschnitt (16) verbunden ist.

8. Reifen (10) nach einem der Ansprüche 1 bis 7, bei dem das überzogene Kordelement (26) eine flache Fläche (26U) auf der entgegengesetzten Seite zu der Seite aufweist, die mit dem äußeren Umfangsabschnitt (16) verbunden ist.

9. Reifen (10) nach einem der Ansprüche 1 bis 8, der außerdem eine Decklage (29) aufweist, die mit einem Deckharzmaterial (90) gebildet wird, die mit dem äußeren Umfangsabschnitt (16) verbunden wird, um so die Verstärkungslage (28) abzudecken, und die eine äußere Umfangsfläche mit abgeflachtem Profil aufweist.

10. Reifen (10) nach Anspruch 9, bei dem:
das Deckharzmaterial (90) thermoplastische Eigenschaften aufweist; und
das Kordharzmaterial (27) und das Deckharzmaterial (90) gleiche Materialarten sind.

11. Reifen (10) nach Anspruch 9 oder Anspruch 10, bei dem beide Endabschnitte der Decklage (29) in der Breitenrichtung weiter zur Außenseite in der Breitenrichtung positioniert sind als beide Endabschnitte der Verstärkungslage (28) in der Breitenrichtung, wenn im Querschnitt betrachtet wird, der längs der Breitenrichtung des Reifenunterkonstruktionselementes aufgenommen wurde.

12. Reifen (10) nach einem der Ansprüche 1 bis 11, der außerdem einen Wulstabschnitt (12) aufweist, der am Reifenunterkonstruktionselement (17) ausgebildet ist, wobei ein Harzwulstband (324) für das Bewirken eines Kontaktes mit der Felge am Wulstabschnitt ausgebildet ist.

13. Reifen (10) nach Anspruch 12, bei dem sich das Harzwulstband (324) bis zu einem Seitenabschnitt (14) erstreckt.

14. Reifen (10) nach Anspruch 12 oder Anspruch 13, bei dem sich das Harzwulstband (324) bis zur Reifeninnenseite des Wulstabschnittes (12) erstreckt.

15. Reifen (10) nach einem der Ansprüche 12 bis 14, bei dem das Harzwulstband (324) aus einem Wulstbandharzmaterial mit thermoplastischen Eigenschaften gebildet wird.

16. Reifen (10) nach einem der Ansprüche 1 bis 11, der außerdem einen Wulstabschnitt (12) aufweist, der am Reifenunterkonstruktionselement (17) ausgebildet ist, wobei ein Gummiwulstband (524) für das Bewirken eines Kontaktes mit der Felge am Wulstabschnitt (12) ausgebildet ist.

17. Reifen (10) nach Anspruch 16, bei dem sich das Gummiwulstband (524) bis zu einem Seitenabschnitt (14) erstreckt.

18. Reifen (10) nach Anspruch 16 oder Anspruch 17, bei dem sich das Gummiwulstband (524) bis zur Reifeninnenseite des Wulstabschnittes (12) erstreckt.

19. Verfahren zur Herstellung eines Reifens, das die folgenden Schritte aufweist:
Herstellen eines überzogenen Kordelementes, um ein überzogenes Kordelement (26) durch Überziehen eines Verstärkungskordes (26A) mit einem Kordharzmaterial (27) herzustellen; und
Wickeln eines überzogenen Kordelementes, um das überzogene Kordelement (26) auf einen äußeren Umfangsabschnitt (16) eines ringförmigen Reifenunterkonstruktionselementes (17) zu wickeln, das aus einem Harzmaterial für die Unterkonstruktion hergestellt wird, und Verbinden des überzogenen Kordelementes (26) mit dem äußeren Umfangsabschnitt (16), wobei das überzogene Kordelement (26) auf die äußere Umfangsfläche des Reifenunterkonstruktionselementes (17) gewickelt wird, und wobei eine Lauffläche (30) auf der äußeren Umfangsfläche der Verstärkungslage (28) angeordnet wird, die durch das überzogene Kordelement (26) gebildet wird.

20. Verfahren zur Herstellung eines Reifens nach Anspruch 19, bei dem beim Herstellungsvorgang für das überzogene Kordelement eine Bindungslage auf der äußeren Umfangsfläche des Verstärkungskordes (26A) gebildet wird, und das Kordharzmaterial (27), das geschmolzen oder erweicht wurde, auf den Verstärkungskord (26A) mittels der Bindungslage aufgebracht und damit verbunden wurde.

21. Verfahren zur Herstellung eines Reifens nach Anspruch 20, bei dem beim Herstellungsvorgang für das überzogene Kordelement der Verstärkungskord (26A) vor dem Ausbilden der Bindungslage gereinigt wird.

22. Verfahren zur Herstellung eines Reifens nach einem der Ansprüche 19 bis 21, bei dem:
das Harzmaterial für die Unterkonstruktion und das Kordharzmaterial (27) beide thermoplastische Eigenschaften aufweisen; und
beim Wickelvorgang für das überzogene Kordelement mindestens eines von Kordharzmaterial (27) des überzogenen Kordelementes (26) und/oder Harzmaterial für die Unterkonstruktion des äußeren Umfangsabschnittes (16) in dem Abschnitt, wo das überzogene Kordelement (26) verbunden werden soll, in einem geschmolzenen oder erweichtem Zustand ist/gebracht wird, und danach der äußere Umfangsabschnitt (16) und das überzogene Kordelement (26) miteinander durch Schweißen verbunden werden.

23. Verfahren zur Herstellung eines Reifens nach einem der Ansprüche 19 bis 21, bei dem beim Wickelvorgang für das überzogene Kordelement der äußere Umfangsabschnitt (16) und das überzogene Kordelement (26) miteinander mit einem Bindemittel verbunden werden.

24. Verfahren zur Herstellung eines Reifens nach einem der Ansprüche 19 bis 23, bei dem beim Herstellungsvorgang für das überzogene Kordelement das überzogene Kordelement (26) mit einer größeren Breite auf der Seite, die mit dem äußeren Umfangsabschnitt (16) verbunden werden soll, als auf der entgegengesetzten Seite ausgebildet wird.

25. Verfahren zur Herstellung eines Reifens nach einem der Ansprüche 19 bis 24, bei dem beim Herstellungsvorgang für das überzogene Kordelement das überzogene Kordelement (26) mit einer flachen Fläche auf der Seite ausgebildet wird, die mit dem äußeren Umfangsabschnitt (16) verbunden wird.

26. Verfahren zur Herstellung eines Reifens nach einem der Ansprüche 19 bis 25, bei dem beim Herstellungsvorgang für das überzogene Kordelement das überzogene Kordelement (26) mit einer flachen Fläche auf der entgegengesetzten Seite zu der Seite ausgebildet wird, die mit dem äußeren Umfangsabschnitt (16) verbunden wird.

27. Verfahren zur Herstellung eines Reifens nach einem der Ansprüche 19 bis 26, bei dem:
das Harzmaterial für die Unterkonstruktion und das Kordharzmaterial (27) beide thermoplastische Eigenschaften aufweisen; und
das Verfahren zur Herstellung eines Reifens außerdem einen Überziehvorgang für das überzogene Kordelement aufweist, bei dem das überzogene Kordelement (26), das im äußeren Umfangsabschnitt (16) eingebettet ist, durch ein Deckharzmaterial mit thermoplastischen Eigenschaften überzogen wird, das geschmolzen oder erweicht wurde.

28. Verfahren zur Herstellung eines Reifens nach Anspruch 27, bei dem beim Überziehvorgang für das überzogene Kordelement das überzogene Kordelement (26) mittels des Deckharzmaterials, das geschmolzen oder erweicht wurde, überzogen wird, so dass die Oberfläche des Deckharzmaterials weiter zur radialen Richtung nach außen liegt als der Endabschnitt in der radialen Richtung des Reifenunterkonstruktionselementes nach außen vom überzogenen Kordelement (26), das mit dem äußeren Umfangsabschnitt (16) verbunden wird.

29. Verfahren zur Herstellung eines Reifens nach Anspruch 27 oder Anspruch 28, bei dem beim Überziehvorgang für das überzogene Kordelement die Oberfläche des Deckharzmaterials in einem geschmolzenen oder erweichten Zustand abgeflacht ist, während in Richtung der Seite des überzogenen Kordelementes (26) gepresst wird.

30. Verfahren zur Herstellung eines Reifens nach einem der Ansprüche 27 bis 29, bei dem beim Überziehvorgang für das überzogene Kordelement das Deckharzmaterial, das geschmolzen oder erweicht wurde, über einen Bereich aufgebracht wird, der auf beiden Seiten in der Breitenrichtung des Reifenunterkonstruktionselementes breiter ist als der Wickelbereich des überzogenen Kordelementes (26).

31. Verfahren zur Herstellung eines Reifens nach einem der Ansprüche 27 bis 30, bei dem beim Überziehvorgang für das überzogene Kordelement das überzogene Kordelement (26) durch das Deckharzmaterial, das geschmolzen oder erweicht wurde, überzogen wird, während das Kordharzmaterial (27) des überzogenen Kordelementes (26), das mit dem äußeren Umfangsabschnitt (16) verbunden wird, und das Harzmaterial für die Unterkonstruktion am Umfang des überzogenen Kordelementes (26) geschmolzen oder erweicht werden.

32. Verfahren zur Herstellung eines Reifens nach einem der Ansprüche 27 bis 31, das außerdem einen Oberflächenbehandlungsvorgang aufweist, bei dem die Oberfläche des Deckharzmaterials, das abgekühlt und verfestigt wurde, maschinell bearbeitet wird.

33. Verfahren zur Herstellung eines Reifens nach einem der Ansprüche 19 bis 32, bei dem:
das Reifenunterkonstruktionselement (17) aus dem Harzmaterial für die Unterkonstruktion als ein Unterkonstruktionsstrukturelement (317A) konfiguriert wird, das mindestens einen Wulstabschnitt (12) konfiguriert; und
ein Harzwulstband (324) durch Spritzgießen eines Wulstbandharzmaterials mit thermoplastischen Eigenschaften auf der Seite des Wulstabschnittes (12) des Unterkonstruktionsstrukturelementes (317A) gebildet wird, um einen Kontakt mit der Felge zu bewirken.

34. Verfahren zur Herstellung eines Reifens nach Anspruch 33, bei dem, wenn das Wulstbandharzmaterial gespritzt wird, ein Bindemittel auf den Wulstabschnitt (12) aufgebracht wird, und danach das Wulstbandharzmaterial aufgebracht wird.

35. Verfahren zur Herstellung eines Reifens nach einem der Ansprüche 19 bis 32, bei dem:
das Reifenunterkonstruktionselement (17) aus dem Harzmaterial für die Unterkonstruktion als ein Unterkonstruktionsstrukturelement (317A) konfiguriert wird, das mindestens einen Wulstabschnitt (12) konfiguriert; und
ein Harzwulstband (324) durch Anordnen eines Wulstbandharzmaterials mit thermoplastischen Eigenschaften auf der Seite des Wulstabschnittes (12) des Unterkonstruktionsstrukturelementes (317A), um einen Kontakt mit der Felge zu bewirken, und durch Pressen mit einer Presse gebildet wird.

36. Verfahren zur Herstellung eines Reifens nach Anspruch 35, bei dem, wenn das Wulstbandharzmaterial angeordnet wird, ein Bindemittel auf den Wulstabschnitt (12) aufgebracht wird, und danach das Wulstbandharzmaterial aufgebracht wird.

37. Verfahren zur Herstellung eines Reifens nach einem der Ansprüche 33 bis 36, bei dem:
eine Spannvorrichtung (546) innerhalb eines Hohlraumes einer Form (540) für das Formen des Unterkonstruktionsstrukturelementes (317A) vorhanden ist;
ein Wulstkern (18) in Kontakt mit der Spannvorrichtung (546) von der Reifeninnenseitenrichtung befestigt ist; und
das Unterkonstruktionsstrukturelement (317A) durch Gießen des Harzmaterials für die Unterkonstruktion gebildet wird, das in den Hohlraum geschmolzen wurde.

38. Verfahren zur Herstellung eines Reifens nach Anspruch 37, bei dem, wenn das Wulstbandharzmaterial eingespritzt wird, oder wenn das Wulstbandharzmaterial mit einer Presse (450) gepresst wird, das Wulstbandharzmaterial einen Gussabschnitt hinterfüllt, der im Unterkonstruktionsstrukturelement (317A) durch Entfernen der Spannvorrichtung (546) gebildet wird.

39. Verfahren zur Herstellung eines Reifens nach einem der Ansprüche 19 bis 32, bei dem:
das Reifenunterkonstruktionselement (17) aus dem Harzmaterial für die Unterkonstruktion als ein Unterkonstruktionsstrukturelement (317A) konfiguriert wird, das mindestens einen Wulstabschnitt (12) konfiguriert; und
ein Gummiwulstband (524) durch Anordnen von unvulkanisiertem Gummi auf der Seite des Wulstabschnittes (12) des Unterkonstruktionsstrukturelementes (317A), um einen Kontakt mit der Felge zu bewirken, und durch Vulkanisierformen des unvulkanisierten Gummis gebildet wird, während mit einer Presse (450) gepresst wird.

40. Verfahren zur Herstellung eines Reifens nach Anspruch 39, bei dem, wenn der unvulkanisierte Gummi angeordnet wird, der Wulstabschnitt (12) mit einem Bindemittel beschichtet wird, und danach der unvulkanisierte Gummi aufgebracht wird.

41. Verfahren zur Herstellung eines Reifens nach einem der Ansprüche 19 bis 32, bei dem:
das Reifenunterkonstruktionselement (17) aus dem Harzmaterial für die Unterkonstruktion als ein Unterkonstruktionsstrukturelement (317A) konfiguriert wird, das mindestens einen Wulstabschnitt (12) konfiguriert; und
ein Gummiwulstband durch Spritzen von unvulkanisiertem Gummi auf der Seite des Wulstabschnittes (12) des Unterkonstruktionsstrukturelementes (317A), um einen Kontakt mit der Felge zu bewirken, und durch Vulkanisierformen gebildet wird.

42. Verfahren zur Herstellung eines Reifens nach Anspruch 41, bei dem, wenn der unvulkanisierte Gummi gespritzt wird, der Wulstabschnitt (12) mit einem Bindemittel beschichtet wird, und danach der unvulkanisierte Gummi aufgebracht wird.

43. Verfahren zur Herstellung eines Reifens nach einem der Ansprüche 39 bis 42, bei dem:
eine Spannvorrichtung (546) innerhalb eines Hohlraumes einer Form (340) für das Formen des Unterkonstruktionsstrukturelementes (317A) vorhanden ist;
ein Wulstkern in Kontakt mit der Spannvorrichtung (546) von der Reifeninnenseitenrichtung befestigt ist; und
das Unterkonstruktionsstrukturelement (317A) durch Gießen des Harzmaterials für die Unterkonstruktion gebildet wird, das in den Hohlraum geschmolzen wurde.

44. Verfahren zur Herstellung eines Reifens nach Anspruch 43, bei dem, wenn der unvulkanisierte Gummi mittels der Presse (450) gepresst wird, oder wenn der unvulkanisierte Gummi auf der Seite des Wulstabschnittes (12) eingespritzt wird, der einen Kontakt mit der Felge bewirkt, der unvulkanisierte Gummi einen Gussabschnitt hinterfüllt, der im Unterkonstruktionsstrukturelement (317A) durch Entfernen der Spannvorrichtung (546) gebildet wird.

## Revendications

1. Bandage pneumatique (10), comprenant :
un élément de carcasse de forme annulaire du bandage pneumatique (17) formé à partir d'un matériau de résine pour carcasse ; et
une couche de renforcement (28), formée par enroulement et liaison d'un élément de câblé couvert (26), formé en recouvrant un câblé de renforcement (26A) d'un matériau de résine pour câblé (27), sur une section périphérique externe (16) de l'élément de carcasse du bandage pneumatique (17), l'élément de câblé couvert (26) étant enroulé sur une face périphérique externe de l'élément de carcasse du bandage pneumatique (17), et une bande de roulement (30) étant agencée sur une surface périphérique externe de la couche de renforcement (28), formée par l'élément de câblé couvert (26).

2. Bandage pneumatique (10) selon la revendication 1, dans lequel un agent de liaison est utilisé pour relier le câblé de renforcement (26A) au matériau de résine du câblé (27).

3. Bandage pneumatique (10) selon les revendications 1 ou 2, dans lequel :
le matériau de résine de la carcasse et le matériau de résine du câblé (27) présentent tous les deux des propriétés thermoplastiques ; et
la liaison est effectuée par liaison par soudage de la section périphérique externe (16) et de l'élément de câblé couvert (26).

4. Bandage pneumatique (10) selon la revendication 3, dans lequel le matériau de résine de la carcasse et le matériau de résine du câblé (27) sont constitués par des types de matériau similaires.

5. Bandage pneumatique (10) selon les revendications 1 ou 2, dans lequel la section périphérique externe (16) et l'élément de câblé couvert (26) sont reliés par un agent de liaison.

6. Bandage pneumatique (10) selon l'une quelconque des revendications 1 à 5, dans lequel l'élément de câblé couvert (26) est formé avec une largeur sur le côté relié à la section périphérique externe (16) supérieure à celle existant sur le côté opposé.

7. Bandage pneumatique (10) selon l'une quelconque des revendications 1 à 6, dans lequel l'élément de câblé couvert (26) comporte une face plate (26D) sur le côté relié à la section périphérique externe (16).

8. Bandage pneumatique (10) selon l'une quelconque des revendications 1 à 7, dans lequel l'élément de câblé couvert (26) comporte une face plate (26U) sur le côté opposé au côté relié à la section périphérique externe (16).

9. Bandage pneumatique (10) selon l'une quelconque des revendications 1 à 8, comprenant en outre une couche de couverture (29), formée avec un matériau de résine de couverture (90), reliée à la section périphérique externe (16) de sorte à recouvrir la couche de renforcement (28), et comportant une face périphérique externe à profil aplati.

10. Bandage pneumatique (10) selon la revendication 9, dans lequel :
le matériau de résine de couverture (90) présente des propriétés thermoplastiques ; et
le matériau de résine du câblé (27) et le matériau de résine de couverture (90) sont constitués par des types de matériau similaires.

11. Bandage pneumatique (10) selon les revendications 9 ou 10, dans lequel les deux parties d'extrémité de la couche de couverture (29) dans la direction de la largeur sont positionnées davantage vers l'extérieur dans la direction de la largeur que les deux parties d'extrémité de la couche de renforcement (28) dans la direction de la largeur, vues en section transversale prise le long de la direction de la largeur de l'élément de carcasse du bandage pneumatique.

12. Bandage pneumatique (10) selon l'une quelconque des revendications 1 à 11, comprenant en outre une section de talon (12) formée sur l'élément de carcasse du bandage pneumatique (17), dans lequel une bandelette talon en résine (324), destinée à établir un contact avec la jante, est formée sur la section de talon.

13. Bandage pneumatique (10) selon la revendication 12, dans lequel la bandelette talon en résine (324) s'étend jusqu'à une section latérale (14).

14. Bandage pneumatique (10) selon les revendications 12 ou 13, dans lequel la bandelette talon en résine (324) s'étend jusqu'à l'intérieur de la section de talon (12).

15. Bandage pneumatique (10) selon l'une quelconque des revendications 12 à 14, dans lequel la bandelette talon en résine (324) est formée à partir d'un matériau de résine pour bandelette talon, présentant des propriétés thermoplastiques.

16. Bandage pneumatique (10) selon l'une quelconque des revendications 1 à 11, comprenant en outre une section de talon (12) formée sur l'élément de carcasse du bandage pneumatique (17), dans lequel une bandelette talon en caoutchouc (524), destinée à établir un contact avec la jante, est formée sur la section de talon (12).

17. Bandage pneumatique (10) selon la revendication 16, dans lequel la bandelette talon en caoutchouc (524) s'étend jusqu'à une section latérale (14).

18. Bandage pneumatique (10) selon les revendications 16 ou 17, dans lequel la bandelette talon en caoutchouc (524) s'étend jusqu'à l'intérieur du bandage pneumatique de la section de talon (12).

19. Procédé de fabrication d'un bandage pneumatique, comprenant :
un processus de formation d'un élément de câblé couvert, consistant à former un élément de câblé couvert (26) en recouvrant un câblé de renforcement (26A) d'un matériau de résine pour câblé (27) ; et
un processus d'enroulement de l'élément de câblé couvert, consistant à enrouler l'élément de câblé couvert (26) sur une section périphérique externe (16) d'un élément de carcasse de forme annulaire du bandage pneumatique (17), formé à partir d'un matériau de résine pour carcasse, et à relier l'élément de câblé couvert (26) à la section périphérique externe (16), l'élément de câblé couvert (26) étant enroulé sur la face périphérique externe de l'élément de carcasse du bandage pneumatique (17), et une bande de roulement (30) étant agencée sur la surface périphérique externe de la couche de renforcement (28), formée par l'élément de câblé couvert (26).

20. Procédé de fabrication d'un bandage pneumatique selon la revendication 19, dans lequel, dans le cadre du processus de formation de l'élément de câblé couvert, une couche de liaison est formée sur la face périphérique externe du câblé de renforcement (26A), le matériau de résine pour câblé (27) ayant été fondu ou ramolli recouvrant le câblé de renforcement (26A), et étant reliée à celui-ci par la couche de liaison.

21. Procédé de fabrication d'un bandage pneumatique selon la revendication 20, dans lequel, dans le cadre du processus de formation de l'élément de câblé couvert, le câblé de renforcement (26A) est nettoyé avant la formation de la couche de liaison.

22. Procédé de fabrication d'un bandage pneumatique selon l'une quelconque des revendications 19 à 21, dans lequel :
le matériau de résine de la carcasse et le matériau de résine du câblé (27) présentent tous les deux des propriétés thermoplastiques ; et
dans le cadre du processus d'enroulement de l'élément de câblé couvert, au moins un matériau, le matériau de résine du câblé (27) de l'élément de câble couvert (26) et/ou le matériau de résine de la carcasse de la section périphérique externe (16), au niveau de la partie où l'élément de câblé couvert (26) doit être relié, est/sont mis dans un état fondu ou ramolli, la section périphérique externe (16) et l'élément de câblé couvert (26) étant ensuite reliés par soudage.

23. Procédé de fabrication d'un bandage pneumatique selon l'une quelconque des revendications 19 à 21, dans lequel, dans le cadre du processus d'enroulement de l'élément de câblé couvert, la section périphérique externe (16) et l'élément de câblé couvert (26) sont reliés par un agent de liaison.

24. Procédé de fabrication d'un bandage pneumatique selon l'une quelconque des revendications 19 à 23, dans lequel, dans le cadre du processus de formation de l'élément de câblé couvert, l'élément de câblé couvert (26) est formé avec une largeur sur le côté devant être relié à la section périphérique externe (16) supérieure à celle existant sur le côté opposé.

25. Procédé de fabrication d'un bandage pneumatique selon l'une quelconque des revendications 19 à 24, dans lequel, dans le cadre du processus de formation de l'élément de câblé couvert, l'élément de câblé couvert (26) est formé avec une face plate sur le côté devant être relié à la section périphérique externe (16).

26. Procédé de fabrication d'un bandage pneumatique selon l'une quelconque des revendications 19 à 25, dans lequel, dans le cadre du processus de formation de l'élément de câblé couvert, l'élément de câblé couvert (26) est formé avec une face plate sur le côté opposé au côté devant être relié à la section périphérique externe (16).

27. Procédé de fabrication d'un bandage pneumatique selon l'une quelconque des revendications 19 à 26, dans lequel :
le matériau de résine de la carcasse et le matériau de résine du câblé (27) présentent tous les deux des propriétés thermoplastiques ; et
le procédé de fabrication du bandage pneumatique comprend en outre un processus de couverture de l'élément de câblé couvert, dans lequel l'élément de câblé couvert (26) noyé dans la section périphérique externe (16) est recouvert par un matériau de résine de couverture, présentant des propriétés thermoplastiques, ayant été fondu ou ramolli.

28. Procédé de fabrication d'un bandage pneumatique selon la revendication 27, dans lequel, dans le cadre du processus de couverture de l'élément de câblé couvert, l'élément de câblé couvert (26) est recouvert d'un matériau de résine de couverture ayant été fondu ou ramolli, de sorte que la surface du matériau de résine de couverture se situe davantage vers l'extérieur dans la direction radiale que la partie d'extrémité au niveau de la direction radiale de l'élément de carcasse du bandage pneumatique ne se situe vers l'extérieur de l'élément de câblé couvert (26) relié à la section périphérique externe (16).

29. Procédé de fabrication d'un bandage pneumatique selon les revendications 27 ou 28, dans lequel, dans le cadre du processus de couverture de l'élément de câble couvert, la surface du matériau de résine de couverture est aplatie dans un état fondu ou ramolli tout en la pressant vers le côté de l'élément de câblé couvert (26).

30. Procédé de fabrication d'un bandage pneumatique selon l'une quelconque des revendications 27 à 29, dans lequel, dans le cadre du processus de couverture de l'élément de câblé couvert, le matériau de résine de couverture ayant été fondu ou ramolli est revêtu au-dessus d'une région ayant, sur les deux côtés dans la direction de la largeur de l'élément de carcasse du bandage pneumatique, une largeur supérieure à celle de la région d'enroulement de l'élément de câblé couvert (26).

31. Procédé de fabrication d'un bandage pneumatique selon l'une quelconque des revendications 27 à 30, dans lequel, dans le cadre du processus de couverture de l'élément de câblé couvert, l'élément de câblé couvert (26) est recouvert par le matériau de résine de couverture ayant été fondu ou ramolli, pendant que le matériau de résine du câblé (27) de l'élément de câblé couvert (26), relié à la section périphérique externe, (16) et le matériau de résine de la carcasse au niveau de la périphérie de l'élément de câblé couvert (26) sont fondus ou ramollis.

32. Procédé de fabrication d'un bandage pneumatique selon l'une quelconque des revendications 27 à 31, comprenant en outre un processus de traitement de surface, dans lequel la surface du matériau de résine de couverture, ayant été refroidi et solidifié, est usinée.

33. Procédé de fabrication d'un bandage pneumatique selon l'une quelconque des revendications 19 à 32, dans lequel :
l'élément de carcasse du bandage pneumatique (17) est configuré à partir du matériau de résine de la carcasse sous forme d'un élément structural de carcasse (317A), configurant au moins une section de talon (12) ; et
une bandelette talon en résine (324) est formée par moulage par injection d'un matériau de résine de bandelette talon présentant des propriétés thermoplastiques sur le côté de la section de talon (12) de l'élément structural de la carcasse (317A) pour établir un contact avec la jante.

34. Procédé de fabrication d'un bandage pneumatique selon la revendication 33, dans lequel, lors de l'injection du matériau de résine de la bandelette talon, un agent de liaison est appliqué sur la section de talon (12), le matériau de résine de la bandelette talon étant ensuite appliqué.

35. Procédé de fabrication d'un bandage pneumatique selon l'une quelconque des revendications 19 à 32, dans lequel :
l'élément de carcasse du bandage pneumatique (17) est configuré à partir du matériau de résine de la carcasse sous forme d'un élément structural de la carcasse (317A), configurant au moins une section de talon (12) ; et
une bandelette talon en résine (324) est formée en disposant un matériau de résine de la bandelette talon présentant des propriétés thermoplastiques sur le côté de la section de talon (12) de l'élément structural de la carcasse (317A), pour établir un contact avec la jante, et en appliquant une pression par une presse.

36. Procédé de fabrication d'un bandage pneumatique selon la revendication 35, dans lequel lorsque le matériau de résine de la bandelette talon est disposé, un agent de liaison est revêtu sur la section de talon (12), le matériau de résine de la bandelette talon étant ensuite appliqué.

37. Procédé de fabrication d'un bandage pneumatique selon l'une quelconque des revendications 33 à 36, dans lequel :
un gabarit (546) est agencé à l'intérieur d'une cavité d'un moule (540) afin de mouler l'élément structural de la carcasse (317A) ;
une tringle (18) est fixée en contact avec le gabarit (546) à partir de la direction interne du bandage pneumatique ; et
l'élément structural de la carcasse (317A) est formé en versant le matériau de résine de la carcasse ayant été fondu dans la cavité.

38. Procédé de fabrication d'un bandage pneumatique selon la revendication 37, dans lequel, lors de l'injection du matériau de résine de la bandelette talon, ou lors de la pression du matériau de résine de la bandelette talon par une presse (450), le matériau de résine de la bandelette talon remplit une partie moulée formée dans l'élément structural de la carcasse (317A) par suite du retrait du gabarit (546).

39. Procédé de fabrication d'un bandage pneumatique selon l'une quelconque des revendications 19 à 32, dans lequel :
l'élément de carcasse du bandage pneumatique (17) est configuré à partir du matériau de résine de la carcasse sous forme d'un élément structural de la carcasse (317A), configurant au moins une section de talon (12) ; et
une bandelette talon en caoutchouc (524) est formée en disposant du caoutchouc vert sur le côté de la section de talon (12) de l'élément structural de la carcasse (317A), pour établir un contact avec la jante, et en effectuant un moulage à vulcanisation du caoutchouc vert tout en appliquant une pression par une presse (450).

40. Procédé de fabrication d'un bandage neumatique selon la revendication 39, dans lequel, lorsque le caoutchouc vert est disposé, la section de talon (12) est revêtue d'un agent de liaison, le caoutchouc vert étant ensuite appliqué.

41. Procédé de fabrication d'un bandage pneumatique selon l'une quelconque des revendications 19 à 32, dans lequel :
l'élément de carcasse du bandage pneumatique (17) est configuré à partir du matériau de résine de la carcasse sous forme d'un élément structural de la carcasse (317A), configurant au moins une section de talon (12) ; et
une bandelette talon en caoutchouc est formée en injectant du caoutchouc vert sur le côté de la section de talon (12) de l'élément structural de la carcasse (317A), pour établir un contact avec la jante, et par un moulage à vulcanisation.

42. Procédé de fabrication d'un bandage pneumatique selon la revendication 41, dans lequel, lors de l'injection du caoutchouc vert, la section de talon (12) est revêtue d'un agent de liaison avant l'application du caoutchouc vert.

43. Procédé de fabrication d'un bandage pneumatique selon l'une quelconque des revendications 39 à 42, dans lequel :
un gabarit (546) est agencé à l'intérieur d'une cavité d'un moule (340) pour mouler l'élément structural de la carcasse (317A) ;
une tringle est fixée en contact avec le gabarit (546) à partir d'une direction interne du bandage pneumatique, et
l'élément structural de la carcasse (317A) est formé en versant le matériau de résine de la carcasse ayant été fondu dans la cavité.

44. Procédé de fabrication d'un bandage pneumatique selon la revendication 43, dans lequel, lors de la pression du caoutchouc vert par la presse (450), ou lors de l'injection du caoutchouc vert sur le côté de la section de talon (12), établissant un contact avec la jante, le caoutchouc vert remplit une partie moulée formée dans l'élément structural de la carcasse (317A) par suite du retrait du gabarit (546).
